(19) Europäisches Patentamt / European Patent Office / Office européen des brevets

(11) **EP 1 953 580 B1**

(12) **FASCICULE DE BREVET EUROPEEN**

(45) Date de publication et mention
de la délivrance du brevet:
**17.09.2014 Bulletin 2014/38**

(51) Int Cl.:
***G02B 21/00*** *(2006.01)*

(21) Numéro de dépôt: **08008156.5**

(22) Date de dépôt: **18.09.2001**

(54) **Dispositif de balayage optique confocal**

Vorrichtung zur konfokalen optischen Abtastung

Confocal optical scanning device

(84) Etats contractants désignés:
**AT BE CH CY DE DK ES FI FR GB GR IE IT LI LU MC NL PT SE TR**

(30) Priorité: **18.09.2000 FR 0011879**
**23.01.2001 FR 0101138**
**13.02.2001 FR 0101906**
**20.02.2001 FR 0102254**
**22.03.2001 FR 0103860**
**10.04.2001 FR 0104841**
**28.06.2001 FR 0108516**

(43) Date de publication de la demande:
**06.08.2008 Bulletin 2008/32**

(62) Numéro(s) de document de la (des) demande(s)
initiale(s) en application de l'article 76 CBE:
**01969915.6 / 1 330 671**

(73) Titulaire: **Lauer, Vincent**
**44240 La Chapelle sur Erdre (FR)**

(72) Inventeur: **Lauer, Vincent**
**44240 La Chapelle sur Erdre (FR)**

(56) Documents cités:
**US-A- 6 028 306**

• BRAKENHOFF G J ET AL: "IMAGING MODES FOR BILATERAL CONFOCAL SCANNING MICROSCOPY" JOURNAL OF MICROSCOPY, WILEY-BLACKWELL PUBLISHING LTD, GB, vol. 171, no. PART 01, 1 juillet 1993 (1993-07-01), pages 17-26, XP008025228 ISSN: 0022-2720

## Description

L'invention concerne un dispositif de balayage optique confocal utilisé par exemple dans un microscope confocal rapide, et notamment dans un microscope confocal en fluorescence ou en lumière réfléchie, destiné à fonctionner en temps réel.

Le principe du microscope confocal à balayage est d'éclairer un objet à observer avec un faisceau d'éclairage focalisé sur un point de l'objet, et de ne détecter que la lumière provenant en retour de ce point éclairé de l'objet. Le microscope confocal comporte donc un faisceau d'éclairage éventuellement filtré par un trou microscopique, et le faisceau lumineux provenant de l'objet éclairé traverse lui-même un trou microscopique sélectionnant la lumière provenant du point éclairé. Le faisceau lumineux provenant de l'objet, et qui a été filtré spatialement par le trou microscopique, est ensuite détecté.

Pour générer une image de l'objet, il est nécessaire de déplacer le point éclairé de l'objet dans un plan. Ce balayage peut être réalisé de diverses manières :

i)- en déplaçant l'objet observé par rapport à l'objectif. C'est la méthode la plus simple mais elle est excessivement lente. Elle est décrite par exemple dans le brevet américain numéro 3,013,467.

ii)- en réalisant les trous microscopiques sur un disque traversé dans un sens par le faisceau d'éclairage et dans l'autre sens par le faisceau lumineux provenant de l'objet. Lorsque le disque est en rotation rapide dans le plan image, les trous microscopiques se déplacent et l'objet est scanné. C'est la technique du disque de Nipkow, décrite par exemple dans les brevets américains 3,517,980 et 4,927,254. Le disque étant percé de nombreux trous, cette technique de balayage est très rapide. La détection peut se faire directement sur une caméra, et il est également possible d'observer l'image directement à l'oeil nu. Par contre, 95% de la puissance lumineuse disponible est perdue, ce qui limite l'efficacité de cette technique lorsque les échantillons sont faiblement fluorescents.

iii)- en utilisant des miroirs galvanométriques pour défléchir le faisceau d'éclairage, suivant une technique décrite par exemple dans le brevet américain 3,518,014. L'objet est alors scanné point par point et un seul trou microscopique est utilisé. Un tube photomultiplicateur permet la détection des photons ayant traversé ce trou. Cette technique est la plus utilisée en microscopie confocale en fluorescence car il y a peu de perte d'énergie lumineuse. Par contre la vitesse d'imagerie est limitée par la saturation de la fluorescence et/ou la fréquence d'oscillation des miroirs galvanométrique. L'image ne peut pas être observée directement et doit nécessairement être reconstituée informatiquement à partir des données acquises par le tube photomultiplicateur. La reconstitution d'un plan horizontal ou plan observé de l'objet nécessite de connaître exactement la position des miroirs galvanométriques correspondant au signal échantillonné à chaque instant sur le photorécepteur. Le bon fonctionnement du système nécessite un contrôle très précis des miroirs galvanométriques et une synchronisation parfaite entre le mouvement des miroirs galvanométriques et l'échantillonnage du signal provenant du photorécepteur.

La technique du disque de Nikow est aujourd'hui la seule qui permette l'obtention directe, par des moyens optiques, d'une image confocale enregistrable sur une caméra. Elle pose un certain nombre de difficultés. Un point important est qu'il n'est pas possible d' échanger le disque de Nipkow sans refaire l'équilibrage du système rotatif, et en pratique les disques de Nipkow sont toujours fixes, ce qui empêche généralement d'optimiser les caractéristiques de filtrage spatial (la largeur des trous microscopiques ou leur densité) en fonction de la longueur d'onde utilisée et/ou de la vitesse recherchée. C'est pourquoi le brevet américain numéro 6,002,509 propose une solution pour modifier les caractéristiques de filtrage spatial en superposant sur le même disque plusieurs zones ayant des caractéristiques de filtrage spatial différente. Ce brevet utilise, pour filtrer spatialement le faisceau, un disque transparent portant un réseau de miroirs microscopiques, qui ont un rôle équivalent aux trous microscopiques d'un disque de Nipkow opaque. Une autre difficulté est liée au problème de la lumière réfléchie ("stray light") qui interfère avec la lumière utile, provenant de l'objet et filtrée par le disque. Le brevet américain 3,517,980 permet de résoudre ce problème au prix de difficultés d'alignement et d'exigences de stabilité du disque qui sont difficiles à satisfaire. Le brevet américain 4,927,254 ne résout que partiellement le problème mais évite toute difficulté d'alignement.

Pour améliorer la vitesse d'imagerie, il a été conçu un microscope à disque de Nipkow comprenant un disque collecteur constitué d'un réseau de microlentilles, et solidaire du disque portant les trous microscopiques. Chaque microlentille est placée en face d'un trou microscopique et focalise sur ce trou la lumière provenant du faisceau d'éclairage. Cette technique est décrite par exemple dans le brevet américain 5,162,941, ainsi que dans le brevet américain 5,579,157. Cette technique permet d'éviter la perte de puissance lumineuse résultant de l'utilisation d'un disque de Nipkow, tout en conservant la vitesse d'imagerie élevée inhérente aux systèmes à disque de Nipkow.

La technique décrite dans le brevet américain 5,579,157 pose de difficiles problèmes de réalisation mécanique et d'alignement et elle est coûteuse à mettre en oeuvre. Le disque portant les trous microscopiques et le disque collecteur doivent être alignés l'un par rapport à l'autre avec une grande précision. L'ensemble constitué par ces deux disques doit être en rotation rapide autour d'un axe qui doit être parfaitement fixe, parfaitement orthogonal au plan des disques, et parfaitement orthogonal à la direction de propagation de la lumière incidente. En pratique, il est extrêmement difficile de maintenir fixe la position de l'axe, et ceci se traduit par des défauts de l'image, typiquement des petites lignes claires ou foncées se superposant à l'image.

Dans les systèmes précités, une partie du faisceau d'éclairage se réfléchit sur la plaque portant les trous microscopiques et se dirige ensuite vers le capteur CCD. Cette partie du faisceau d'éclairage étant très intense par rapport au faisceau lumineux de retour correspondant à la fluorescence, elle est difficile à éliminer à l'aide de filtres dichroïques, ce qui entraîne une atténuation importante du faisceau.

De plus, les mêmes trous microscopiques sont traversés successivement par le faisceau d'éclairage dirigé vers l'objet, et par le faisceau lumineux provenant de l'objet. Si le diamètre de ces trous est réduit, la perte d'intensité du faisceau qui en résulte est très supérieure à celle qui résulte de la seule diminution du diamètre du trou microscopique dans un microscope confocal à balayage laser par miroirs galvanométriques. Pour que l'intensité reste raisonnablement élevée, les trous microscopiques doivent avoir un diamètre proche de largeur de la tache d'Airy. Ceci cause une forte diminution de la résolution par rapport au microscope confocal à balayage laser par miroirs galvanométriques, dans lequel la résolution peut être augmentée en diminuant le diamètre du trou microscopique.

Dans les systèmes précités, l'image d'un trou microscopique sur la caméra CCD, lorsque cette image s'est déplacée d'une longueur égale à la moitié de la largeur de la tache d'Airy, recouvre assez largement la même image avant déplacement. De ce fait la résolution est limitée uniquement par la longueur d'onde d'émission fluorescente, et la limite de résolution est supérieure à ce qu'elle est dans un microscope confocal à balayage par miroirs galvanométriques, dans lequel la faible longueur d'onde d'excitation est mise à profit.

Une autre solution pour améliorer la vitesse d'imagerie est décrite par le brevet américain 5,351,152. Le système décrit dans ce brevet comporte un réseau fixe de microlentilles qui sépare le faisceau laser en sous-faisceaux qui sont chacun filtré par un trou microscopique situé dans un plan image. L'objectif focalise dans l'objet les faisceaux issus de chacun de ces trous microscopiques. Le faisceau lumineux réémis par l'objet est ensuite redirigé vers un capteur CCD, chaque pixel du capteur CCD étant l'image d'un point de l'objet sur lequel est focalisé le faisceau issu d'un trou microscopique correspondant. Le balayage est effectué par la méthode (i) consistant à déplacer l'objet par rapport à l'objectif, bien que d'autres méthodes ne soient pas expressément exclues. Le point de l'objet qui est éclairé par un des sous-faisceaux et dont l'image est obtenue sur un point correspondant du capteur CCD balaye une zone réduite de l'objet. L'image de l'objet doit être reconstituée informatiquement à partir d'une série d'images obtenues successivement sur le capteur CCD pendant l'opération de balayage de l'objet. La vitesse de balayage de ce microscope est donc limitée par la vitesse de lecture du capteur CCD, qui doit être relu plusieurs fois pour l'obtention d'une seule image. Une variant de cette solution est décrite par le brevet américain 5,978,095. Voir aussi US 6028306.

D'une manière générale, la déconvolution 3D de l'image, qui peut sensiblement améliorer la résolution, est difficile à l'aide des microscopes confocaux existants. Dans les appareils à balayage par miroirs galvanométriques, elle est rendue difficile par les erreurs d'échantillonnage.

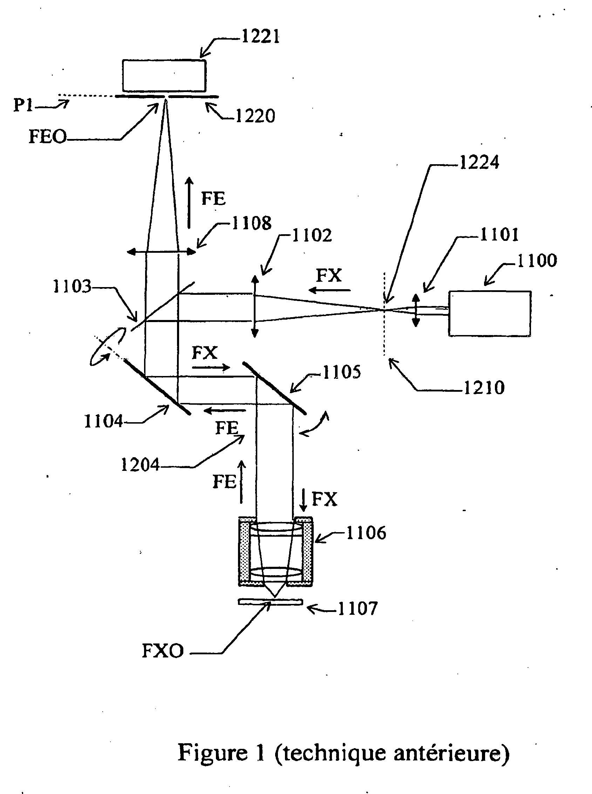

A titre d'exemple, on a représenté sur la figure 1 un microscope confocal, suivant la technique antérieure, utilisant des miroirs galvanométriques. Le faisceau d'éclairage FX issu d'un laser 1100 traverse un élargisseur de faisceau composé des lentilles 1101 et 1102, est réfléchi par une séparatrice 1103, par des miroirs mobiles en rotation 1104 et 1105, traverse un objectif de microscope 1106 et parvient, après focalisation, en un point d'éclairage FXO qui éclaire un point de l'objet à observer 1107, ce point d'éclairage FXO étant un point isolé et entouré par une zone non éclairée. Le faisceau lumineux FE, provenant du point éclairé de l'objet 1107, traverse l'objectif 1106, est réfléchi par les miroirs mobiles en rotation 1104 et 1105, traverse la séparatrice 1103 et la lentille 1108, et est focalisé en un point lumineux FEO sur un système de filtrage spatial 1220. Après passage du système de filtrage spatial, le faisceau lumineux FE1 devient un faisceau à détecter FD qui est détecté par un détecteur 1221. Le système de filtrage spatial est un trou microscopique, c'est-à-dire qu'il absorbe le faisceau lumineux partout sauf sur un trou de petites dimensions. Dans le cas d'un microscope à disque de Nipkow, le disque de Nipkow constitue un dispositif de filtrage spatial sélectionnant la lumière passant par un ensemble de trous microscopiques distincts. Dans le cas du microscope décrit dans la demande de brevet américain 5,239,178 la caméra joue à la fois le rôle du système de détection et d'un dispositif de filtrage spatial sélectionnant la lumière traversant un ensemble de trous microscopiques formant un réseau à maille carrée.

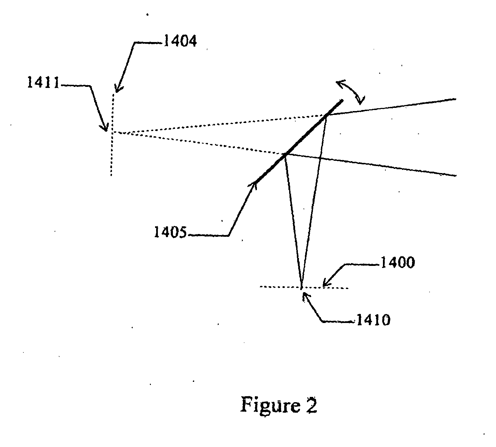

La figure 2 montre un exemple simple de tracé de rayons issus d'un point fixe 1410 d'un plan 1400, suivant le chemin d'un faisceau issu du plan 1400 et réfléchi par un miroir mobile 1405. Après réflexion par le miroir mobile 1405, le tracé de rayons définit un plan image virtuel 1404 conjugué du plan 1400. L'image géométrique d'un point 1410 du plan 1400 est un point 1411 du plan 1404. Du fait de la rotation du miroir mobile 1410, l'image géométrique 1411 d'un point fixe 1410 est mobile.

Dans le cas de la figure 1, un tracé de rayon provenant du point FXO de l'objet 1107 et suivant le chemin du faisceau à détecter définit un premier plan image réel P1, dans lequel est placé le système de filtrage spatial 1220, conjugué du plan observé de l'objet 1107.

La rotation du miroir mobile 1104 entraîne simultanément :

- un déplacement de l'image du plan 1210 dans le plan observé de l'objet 1107,
- un déplacement de l'image du plan observé de l'objet 1107, dans le premier plan image, où se trouve le système de filtrage spatial 1220.

L'image FEO dans le premier plan image P1, d'un point FXO rendu mobile par la rotation du miroir 1104, qui est lui-même l'image d'un point fixe 1224, est un point fixe. Ceci permet usuellement au microscope confocal de ne détecter que la lumière provenant du point éclairé FXO qui balaye l'objet.

Les caractéristiques du balayage de l'objet dépendent des miroirs mobiles utilisés. Par exemple, si le miroir 1104 est mobile en rotation autour d'un axe orthogonal au plan de la figure et le miroir 1105 est fixe, seule une ligne de l'objet observé peut être balayée. Si le miroir 1104 est mobile en rotation autour de deux axes orthogonaux entre eux, ou si les miroirs 1104 et 1105 sont chacun mobile autour d'un axe, il est possible de balayer un plan de l'objet observé.

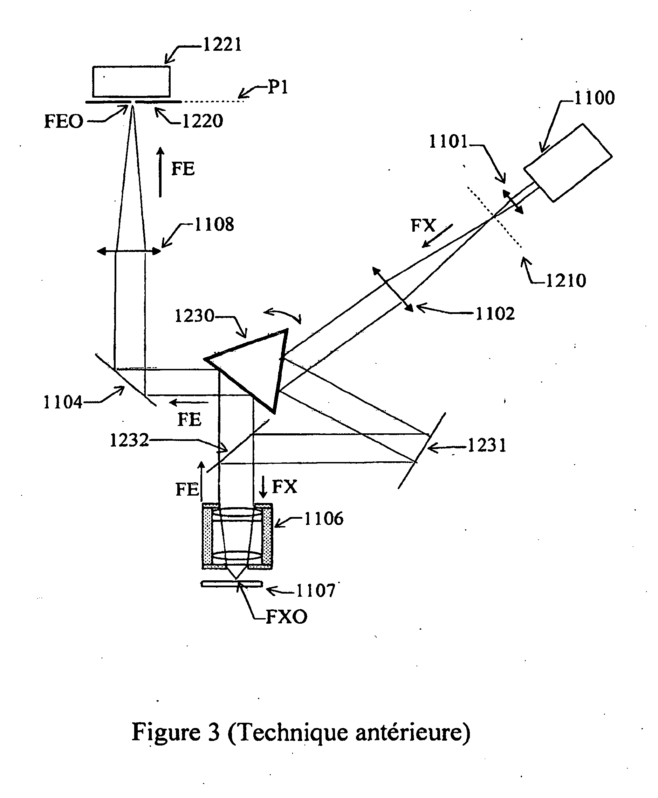

D'autres configurations équivalentes peuvent être utilisées bien que ne présentant pas d'intérêt particulier et étant donc inusitées. La figure 3 montre une telle configuration, dans laquelle le miroir mobile 1104 de la figure 1 a été remplacé par un miroir mobile 1230 à plusieurs facettes, dans laquelle une séparatrice 1232 est placée sur le trajet du faisceau lumineux FE provenant de l'objet avant réflexion par le miroir mobile, et dans laquelle un miroir 1231 est utilisé pour renvoyer le faisceau vers le miroir mobile. Le faisceau d'éclairage FX et le faisceau lumineux FE sont réfléchis par des facettes distinctes du miroir, mais le système optique est conçu de manière à ce que les propriétés essentielles du dispositif soient conservées. D'une manière générale, dans le présent brevet, le terme "miroir" désignera un miroir à une ou plusieurs facettes, les facettes étant solidaires entre elles mais pouvant être séparées par des zones non réfléchissantes, et le miroir pouvant avoir des formes très diverses.

Dans le dispositif de la figure 1, le signal parvenant au capteur 1203 est enregistré et une image du plan observé est reconstituée par un ordinateur. Pour reconstituer l'image, il est nécessaire d'avoir accès, pour chaque valeur échantillonnée du signal issu du capteur 1203, à la position correspondante des miroirs mobiles. Ce dispositif est donc extrêmement sensible à toute erreur de positionnement des miroirs galvanométriques. De plus il ne permet pas l'observation directe de l'image à l'aide d'un oculaire.

La présente invention a pour but de pallier les problèmes techniques mentionnés ci-dessus, en proposant un dispositif à balayage optique confocal permettant un enregistrement du signal sélectionné par le système de filtrage spatial, qui permette une reconstitution de l'objet observé qui ne soit pas excessivement sensible aux erreurs de positionnement des miroirs galvanométriques. En particulier, la présente invention a pour but de proposer un dispositif à balayage optique confocal ayant, comme les systèmes à disque de Nipkow, la capacité de générer une image enregistrable par exemple sur un capteur CCD matriciel, par une méthode purement optique, mais dans lequel, contrairement au disque de Nipkow, les caractéristiques de filtrage spatial peuvent être aisément modifiées afin de toujours conserver une qualité optimale des images.

A cet effet, l'invention a pour objet un dispositif à balayage optique confocal comprenant:

- un système optique adapté, d'une part, pour focaliser un faisceau d'éclairage provenant de la source lumineuse en au moins un point d'éclairage isolé et entouré par une zone non éclairée, ledit au moins un point d'éclairage étant destiné à éclairer un point de l'objet à observer, et d'autre part, pour focaliser un faisceau lumineux provenant du point éclairé de l'objet en un point lumineux dans un premier plan image,
- au moins un miroir monté mobile en rotation et sur lequel sont réfléchis, d'une part, le faisceau d'éclairage pour permettre audit au moins un point d'éclairage de balayer l'objet à observer suivant un plan observé, et d'autre part, le faisceau lumineux provenant du point éclairé de l'objet pour amener le point lumineux en un point fixe sur le premier plan image,
- un premier système de filtrage spatial disposé dans le premier plan image et adapté pour filtrer le point lumineux pour obtenir un faisceau à détecter issu du point lumineux filtré,

caractérisé en ce que le système optique et le système de filtrage spatial sont adaptés pour renvoyer le faisceau à détecter sur ledit miroir mobile en rotation, et en ce que le système optique est également adapté pour focaliser ledit faisceau à détecter, réfléchi sur le miroir mobile, en un point à détecter dans un second plan image pour obtenir, dans ledit second plan image, un déplacement dudit point à détecter proportionnel au déplacement du point éclairé dans le plan observé de l'objet.

Grâce à ces dispositions, la réflexion du faisceau à détecter par le miroir mobile permet à l'image du premier système de filtrage spatial de se déplacer dans le second plan image. Le miroir mobile sur lequel s'effectue la réflexion du faisceau à détecter étant le même que celui sur lequel s'effectue la réflexion du faisceau lumineux et la réflexion du faisceau d'éclairage, le déplacement du point à détecter dans le deuxième plan image est proportionnel au déplacement du point éclairé dans le plan observé. Par exemple, dans le cas où le système de filtrage spatial est un trou microscopique unique comme sur la figure 1, il est possible de placer un capteur CCD linéaire ou matriciel dans le deuxième plan image, qui doit alors être réel. A chaque position de l'image du trou microscopique sur le capteur correspond alors une position du point observé dans le plan observé. Sur l'image formée sur le capteur, chaque point correspond à un point parfaitement déterminé de l'objet observé, dont la position n'est pas affectée par les éventuelles erreurs de positionnement du miroir mobile. Les données enregistrées sur le capteur permettent donc de reconstituer fidèlement l'image d'une ligne balayée dans l'objet (si la rotation du miroir se fait autour d'un seul axe) ou d'un plan balayé dans l'objet (si la rotation du miroir mobile se fait par exemple autour de deux axes orthogonaux entre eux), même si le contrôle de position du miroir mobile est imparfait.

Le second plan image peut être réel ou virtuel. Toutefois, le but poursuivi est de focaliser le faisceau à détecter dans un plan image réel qui peut être compris dans le dispositif de balayage ou extérieur à ce dispositif. Ce plan image réel peut par exemple être sur la rétine de l'oeil d'un observateur ou sur le capteur d'une caméra.

Selon une autre caractéristique de l'invention, le système optique comprend des moyens pour diviser le faisceau d'éclairage en une pluralité de sous-faisceaux d'éclairage et le système optique est adapté, d'une part, pour focaliser la pluralité de sous-faisceaux d'éclairage en une pluralité de points d'éclairage correspondants sur le plan observé de l'objet, et d'autre part, pour focaliser la pluralité de sous-faisceaux lumineux provenant de la pluralité de points éclairés de l'objet en une pluralité de points lumineux sur le premier système de filtrage spatial, et le premier système de filtrage spatial est adapté pour filtrer individuellement chaque point lumineux issu de chaque point éclairé de l'objet afin d'obtenir une pluralité de sous-faisceaux à détecter correspondants.

Ainsi le dispositif selon l'invention permet de réaliser une imagerie confocale multipoints ayant tous les avantages, en terme de rapidité, des solutions connues comme le microscope à disque de Nipkow.

Toutefois, dans ce cas ou une technique multipoints est utilisée, les points images de chaque point éclairé du plan observé se déplacent simultanément dans le second plan image, et un point du second plan image peut être éclairé successivement par de la lumière provenant de deux points différents de l'objet observé et ayant traversé deux points distincts du premier système de filtrage spatial. L'intensité lumineuse enregistrée en un point du second plan image correspond alors à la superposition de signaux provenant de deux points distincts de l'objet, et ne permet donc pas une reconstitution optimale de l'objet observé.

Suivant une autre caractéristique de l'invention, ce problème est résolu en adaptant le système optique pour que l'image géométrique d'un point géométrique fixe de l'objet, dans le second plan image, soit indépendante de la position dudit au moins un miroir monté mobile autour de ses axes de rotation. En effet, dans ce cas, un point du second plan image n'est éclairé que par la lumière provenant de son image géométrique fixe dans l'objet, ce qui permet la formation d'une image de bonne qualité. De préférence, le système peut être adapté pour que cette image géométrique soit fixe pour des mouvements rotatifs arbitraires du miroir autour de trois axes non coplanaires, y compris si le miroir n'a qu'un axe de rotation. Ceci évite que les vibrations et instabilités du miroir se traduisent par des déplacements de l'image d'un point dans le plan éclairé de l'objet, et donc par des erreurs d'échantillonnage.

Selon une caractéristique de l'invention, le dispositif de balayage comporte des moyens pour modifier les caractéristiques de filtrage spatial du premier système de filtrage spatial. Ceci est facilité par le fait que le premier système de filtrage spatial est statique pendant l'acquisition d'images, contrairement à un disque de Nipkow. Par caractéristiques de filtrage spatial, on entend par exemple le diamètre de chaque trou microscopique ou de chaque miroir microscopique constituant le dispositif de filtrage spatial, ou la répartition de ces éléments sur le dispositif de filtrage spatial. Par exemple le premier système de filtrage spatial peut être réalisé à l'aide d'un modulateur spatial de lumière, consistant en un dispositif matriciel à base de cristaux liquides ferroélectriques. Dans ce cas, la connection électrique de ce dispositif est facilitée par le fait qu'il soit statique. Toutefois, il est généralement plus efficace d'utiliser des moyens mécaniques pour modifier les caractéristiques de filtrage spatial. Selon une caractéristique de l'invention, le premier système de filtrage spatial comporte au moins un élément mobile ou amovible, pour modifier les caractéristiques de filtrage spatial du premier système de filtrage spatial. Par exemple, le premier système de filtrage spatial (130;606) peut être monté de manière amovible, pour être remplacé, manuellement ou au moyen d'un système motorisé, par un autre premier système de filtrage spatial. Le premier système de filtrage spatial peut également comporter plusieurs zones distinctes dont les caractéristiques de filtrage diffèrent les unes des autres, et être monté mobile, pour pouvoir placer l'une ou l'autre de ces zones sur le chemin du faisceau lumineux. Il peut également être composé d'une première plaque absorbante et/ou réfléchissante, pourvue d'une pluralité de trous microscopiques, et d'une deuxième plaque comprenant des parties absorbantes et/ou réfléchissantes et des parties transparentes, ces deux plaques étant placées l'une contre l'autre, et mobiles l'une par rapport à l'autre, pour que les parties absorbantes et/ou réfléchissantes de la deuxième plaque obturent une partie des trous microscopiques de la première plaque, et pour que le déplacement relatif des deux plaques permette de modifier les trous microscopiques laissés libres. Quelle que soit la méthode utilisée, le dispositif selon l'invention permet de modifier les caractéristiques de filtrage spatial, ce qui permet d'optimiser ces caractéristiques en fonction de la longueur d'onde utilisée et/ou de la vitesse d'imagerie ou de la qualité d'imagerie souhaitée. Le déplacement de l'élément mobile ou amovible du système de filtrage spatial requiert dans le cas général une bonne précision mécanique et/ou une procédure d'alignement adéquate: si par exemple le premier système de filtrage spatial comporte des trous microscopiques d'environ 30 microns de large, il est souhaitable que la précision de positionnement soit inférieure à 5 microns. Par contre, le premier système de filtrage spatial étant statique pendant le fonctionnement du microscope, il ne se désaligne pas et ne pose pas de problèmes d'équilibrage, ce qui résout le problème posé par les systèmes à disque de Nipkow: dans le présent dispositif de balayage, il est possible de modifier les caractéristiques de filtrage spatial par un moyen mécanique simple. Dans le cas par exemple ou le dispositif de filtrage spatial est monté de manière amovible et est échangeable manuellement, il n'y a aucune limite au nombre de dispositifs différents qui peuvent être échangés, et il est donc possible d'optimiser de la meilleure manière les caractéristiques de filtrage. Dans le cas ou le dispositif de filtrage spatial comporte plusieurs zones et est mobile, le nombre de zones peut être très supérieur à celui qui est utilisable sur un disque de Nipkow du type décrit par le brevet américain 6,002,509: en effet, ce nombre de zone est proportionnel à la surface totale du dispositif, alors que sur un disque de Nipkow il est proportionnel au rayon du disque, c'est-à-dire à la racine carrée de la surface.

Selon une autre caractéristique de l'invention, les moyens pour diviser le faisceau d'éclairage en une pluralité de sous-faisceaux d'éclairage sont formés par le premier système de filtrage spatial. Cette disposition permet généralement de simplifier le système. En particulier, lorsque le premier système de filtrage spatial est échangeable, cette disposition permet de diminuer considérablement les contraintes d'alignement et de précision mécanique. En effet, dans ce cas, le premier système de filtrage spatial détermine à la fois la position des points éclairés dans l'échantillon ou l'objet et la position des points filtrés pour obtenir le faisceau à détecter. Lorsque le système de filtrage spatial est échangé, la position des points lumineux filtrés correspond automatiquement à la position des points éclairés, sans que des ajustements de haute précision soient nécessaires.

Dans le cas où le premier système de filtrage spatial constitue également les moyens de division du faisceau d'éclairage en une pluralité de sous-faisceaux d'éclairage, et où ce système de filtrage spatial est constitué par une plaque percée de trous microscopiques, le système optique nécessaire pour ramener vers le miroir mobile le faisceau à détecter est relativement complexe. Ce système optique peut être considérablement simplifié, selon une autre caractéristique avantageuse de l'invention, lorsque le dispositif de filtrage spatial est constitué par une plaque pourvue d'une pluralité de miroirs microscopiques, et permettant de renvoyer le faisceau à détecter dans une direction proche de la direction du faisceau incident. Cette solution a en outre pour avantage, si la plaque est transparente, de diminuer la quantité de lumière issue de la réflexion du faisceau d'éclairage sur le système de filtrage spatial et qui se superpose au faisceau à détecter. Dans ce cas, et selon une autre caractéristique de l'invention, le système optique est de préférence adapté pour qu'une seule face du miroir mobile en rotation réfléchisse la pluralité de sous-faisceaux d'éclairage issue du premier système de filtrage spatial vers l'objet à observer, la pluralité de sous-faisceaux lumineux vers le premier système de filtrage spatial et la pluralité de sous-faisceaux à détecter vers le second plan image. Cette adaptation peut être réalisée de manière particulièrement simple, selon une autre caractéristique de l'invention, au moyen d'une lentille unique traversée par la pluralité de sous-faisceaux d'éclairage dirigée du premier système de filtrage spatial vers le miroir monté mobile, par la pluralité de sous-faisceaux lumineux dirigée dudit miroir mobile vers le premier système de filtrage spatial, et par la pluralité de sous-faisceaux à détecter dirigée dudit premier système de filtrage spatial vers ledit miroir monté mobile. Par "lentille" on désigne içi indifféremment, comme dans l'ensemble du texte du brevet, une lentille simple ou une lentille composée, par exemple un achromat ou un ensemble de plusieurs achromats séparés par de l'air.

Un autre but de l'invention consiste à rendre possible la suppression de la lumière issue de la réflexion du faisceau d'éclairage sur le système de filtrage spatial et qui se superpose au faisceau à détecter, et ceci sans les difficultés liées à l'utilisation d'un disque de Nipkow. Par exemple, dans un microscope à disque de Nipkow, la suppression de la lumière issue de la réflexion du faisceau d'éclairage sur le système de filtrage spatial nécessite l'utilisation de deux parties distinctes du disque traversées respectivement par le faisceau d'éclairage et le faisceau lumineux réfléchi par l'échantillon, ce qui pose des problèmes considérables de réglage et de stabilité du disque de Nipkow.

Selon une caractéristique de l'invention permettant de résoudre le problème ci-dessus, tout en utilisant dans sa totalité l'ouverture de l'objectif, tant pour le faisceau d'éclairage que pour le faisceau lumineux revenant de l'objet, le système optique comprend également une séparatrice pour séparer la pluralité de sous-faisceaux d'éclairage dirigée vers l'objet à observer, du faisceau lumineux provenant de l'objet à observer vers le premier système de filtrage spatial, afin que le premier système de filtrage spatial ne soit pas atteint par le faisceau d'éclairage. Le premier système de filtrage spatial n'étant pas atteint par le faisceau d'éclairage, la « stray light » est supprimée. Mais, du fait que le premier système de filtrage spatial est fixe, ce résultat est obtenu sans les problèmes d'instabilité liés au disque de Nipkow. Afin d'éviter totalement les réflexions de lumière parasite sur le premier système de filtrage spatial, le premier système de filtrage spatial est constitué de préférence par une plaque absorbante et/ou réfléchissante portant des trous microscopiques traversés dans un seul sens par la lumière. Afin d'éviter totalement les réflexions de lumière parasite sur les moyens pour diviser le faisceau d'éclairage en sous-faisceaux, ces moyens diviseurs du faisceau d'éclairage peuvent de préférence être, dans le cas d'un éclairage en lumière non cohérente, une plaque pourvue d'une pluralité de trous microscopiques traversés dans un seul sens par le faisceau d'éclairage. Dans le cas d'un éclairage en lumière cohérente, et afin de ne pas diminuer l'intensité utile du faisceau, il est préférable d'utiliser un support comportant une pluralité de microlentilles. Dans les deux cas, le fonctionnement en transmission et l'utilisation d'une séparatrice permettent d'éviter les problèmes liés à la lumière parasite.

Selon une autre caractéristique de l'invention, les moyens pour diviser le faisceau d'éclairage en une pluralité de sous-faisceaux comprennent un support comportant une pluralité de micro-lentilles, et dans lequel le premier système de filtrage spatial comporte une pluralité de trous microscopiques traversés par la pluralité de sous-faisceaux d'éclairage. Dans ce cas, et selon une caractéristique de l'invention, le support comportant une pluralité de micro-lentilles, et le premier système de filtrage spatial, sont solidaires l'un de l'autre et constituent un ensemble de division et de filtrage, monté de manière amovible pour être remplacé par un autre ensemble de division et de filtrage. L'avantage de cette solution est que même dans le cas ou une séparatrice est utilisée, il n'est pas nécessaire d'intégrer cette séparatrice à l'ensemble amovible de division et de filtrage.

Lorsqu'une seule face de réflexion d'un miroir est utilisée, il est nécessaire, afin d'éviter les pertes d'intensité lumineuses par des dispositifs polarisants permettant de séparer les différents faisceaux, d'augmenter la taille du miroir monté mobile de manière à séparer spatialement certains des faisceaux. L'augmentation de taille du miroir se traduit par une diminution de sa fréquence de résonance, qui peut être gênante pour effectuer un balayage propre. De plus, lorsque le premier système de filtrage spatial fonctionne en réflexion, le système optique nécessaire pour utiliser une seule face d'un miroir est complexe. Afin d'optimiser la fréquence de résonance du miroir monté mobile, et afin de simplifier le système optique, le miroir monté mobile peut être un miroir plan comprenant une première face de réflexion et une deuxième face de réflexion, la première face de réflexion étant destinée à défléchir le faisceau d'éclairage issu de la source lumineuse et le faisceau lumineux émis par le point éclairé de l'objet, et la deuxième face de réflexion étant destinée à défléchir le faisceau à détecter renvoyé par le premier système de filtrage spatial et le système optique. Selon une autre caractéristique de l'invention, les moyens pour diviser le faisceau d'éclairage en une pluralité de sous-faisceaux d'éclairage, sont adaptés pour que la pluralité de points d'éclairage forme un réseau périodique à deux dimensions. De préférence ce réseau peut être à maille hexagonale. Grâce à ces dispositions, le dispositif selon l'invention permet de minimiser les pertes d'intensité lumineuse et d'obtenir des caractéristiques d'imagerie constantes, indépendantes du point considéré.

Dans ce cas, et afin d'obtenir des caractéristiques d'imagerie constante, il est possible de commander ledit au moins un miroir mobile de manière à ce que chaque point éclairé effectue un balayage bidimensionnel de l'objet. Cependant, cette solution nécessite des miroirs mobiles performants à haute fréquence de résonance, et une solution plus économique est que chaque point balaye une seule ligne. Si cette ligne est courbe, par exemple si chaque point balaye un cercle, l'image obtenue tend à présenter des inhomogénéités d'éclairage dans certaines directions. Selon une version de l'invention, une image de bonne qualité bénéficiant d'un éclairage homogène est obtenue en commandant ledit au moins un miroir monté mobile en rotation de manière à déplacer chacun desdits points éclairés suivant une ligne droite non parallèle à la direction des vecteurs directeurs du réseau périodique. Cette solution permet en particulier d'utiliser un seul miroir monté mobile en rotation.

Lorsque ledit au moins un miroir mobile tourne autour de son ou ses axes, chaque point éclairé se déplace dans l'objet, et l'ensemble de la zone éclairée se déplace donc de la même manière, l'ensemble des points éclairés pendant le déplacement de cette zone définissant une zone éclairée étendue. Les points de l'objet situés au centre de la zone éclairée étendue sont éclairés plus souvent que çeux situés à la périphérie de cette zone, et l'éclairage n'est donc pas homogène dans la zone éclairée étendue, ce qui rend difficile l'obtention d'une image de bonne qualité d'une zone observée fixe. Selon une caractéristique de l'invention, la zone éclairée peut être rendue fixe au moyen d'un diaphragme placé dans un plan image traversé par le faisceau d'éclairage provenant dudit miroir mobile et dirigé vers l'objet observé. Ce diaphragme permet de limiter la zone éclairée à la partie centrale de la zone éclairée étendue qui serait obtenue en l'abscence de diaphragme. Toutefois, une partie du faisceau d'éclairage étant arrêtée par le diaphragme, cette solution diminue l'intensité utile du faisceau d'éclairage.

Selon une autre caractéristique de l'invention, permettant de résoudre ce problème, le dispositif comprend des moyens pour déplacer une zone illuminée par le faisceau d'éclairage sur les moyens pour diviser le faisceau d'éclairage en sous-faisceaux. Les moyens pour diviser le faisceau d'éclairage en sous-faisceaux sont par exemple une pluralité de microlentilles placées dans le plan de division, une plaque transparente et/ou réfléchissante pourvue d'une pluralité de trous microscopiques et placée dans le plan de division, ou une plaque transparente pourvue d'une pluralité de miroirs microscopiques et placée dans le plan de division. Le déplacement de la zone éclairée dans le plan de division permet modifier la zone éclairée dans l'objet en modifiant les sous-faisceaux constituant la pluralité de sous-faisceaux, mais sans modifier les caractéristiques du déplacement individuel de chaque point éclairé dans l'objet. Selon une caractéristique de l'invention, les moyens pour déplacer la zone illuminée par le faisceau d'éclairage sur les moyens pour diviser le faisceau d'éclairage en sous-faisceaux sont également adaptés pour que la zone éclairée dans l'objet observé reste fixe lorsque ledit au moins un miroir monté mobile en rotation tourne. Ceci permet de conserver une zone éclairée fixe, sans la perte d'intensité liée à l'utilisation d'un diaphragme. Le moyen pour déplacer la zone éclairée dans le plan de division peut par exemple comporter un dispositif accousto-optique de déflexion d'un faisceau, ou un miroir mobile indépendant de celui utilisé pour déplacer les points éclairés dans l'objet. Dans ce cas, le miroir mobile indépendant ou le dispositif accousto-optique doit être synchronisé avec ledit au moins un miroir monté mobile. Selon une caractéristique de l'invention, les moyens pour déplacer la zone illuminée par le faisceau d'éclairage dans le plan de division comprennent ledit au moins un miroir monté mobile en rotation, et le système optique est adapté pour que le faisceau d'éclairage soit réfléchi, avant de parvenir au plan de division, par ledit au moins un miroir monté mobile en rotation. La réflexion étant effectuée sur ledit miroir mobile, il n'est pas nécessaire d'effectuer une quelconque synchronisation. De plus cette solution est généralement plus économique. Toutefois, dans le cas ou le premier dispositif de filtrage spatial est une pluralité de trous microscopiques traversés dans un seul sens par le faisceau lumineux, cette solution implique l'utilisation de plusieurs séparatrices supplémentaires, et il est techniquement préférable d'utiliser un miroir mobile indépendant pour déplacer la zone éclairée dans le plan de division. D'éventuels défauts de synchronisation de ce miroir n'affectent que les bords de la zone éclairée et peuvent être supprimés à l'aide d'un diaphragme placé dans un plan image traversé par le faisceau d'éclairage provenant dudit miroir mobile et dirigé vers l'objet observé.

Lorsque les miroirs mobiles tournent, la vitesse de déplacement des points d'éclairage dans le plan observé varie. Ces variations de vitesse génèrent des suréclairages ponctuels. Par exemple, lorsque le point d'éclairage se déplace sur un segment de droite qu'il parcourt alternativement dans un sens et dans l'autre, sa vitesse s'annule aux deux extrémités du segment, et le point de l'objet observé qui est éclairé lorsque le point d'éclairage atteint une extrémité du segment se trouve donc suréclairé, en moyenne temporelle, par rapport à des points voisins. Si le point d'éclairage parcourt successivement plusieurs segments de droite distincts, le même problème existe. D'une manière générale, toute variation de vitesse du point d'éclairage génère des inhomogénéités d'éclairage. Lorsque ledit miroir mobile tourne, la position d'un point d'éclairage dans l'objet est l'image géométrique mobile d'un point fixe correspondant sur le premier dispositif de filtrage spatial. Lorsqu'un point d'éclairage est éteint (obturé) par différents moyens, il n'existe plus physiquement, mais le mouvement qu'il aurait s'il n'était pas éteint peut être caractérisé par le mouvement de l'image géométrique d'un point géométrique fixe du dispositif de filtrage spatial. Pour résoudre le problème des suréclairages ponctuels, on sera amené à éteindre, par divers moyens, le faisceau d'éclairage, lorsque la vitesse de déplacement de l'image géométrique d'un point géométrique fixe du dispositif de filtrage spatial atteindra sa valeur minimale (c'est-à-dire quand la vitesse de déplacement des points d'éclairage, s'ils n'ont pas encore été éteints, atteint sa valeur minimale). Selon une caractéristique de l'invention, le dispositif de balayage comporte donc des moyens pour supprimer le faisceau d'éclairage, ou la pluralité de sous-faisceaux d'éclairage, avant qu'il ne parvienne à l'objet observé, lorsque la vitesse de déplacement de l'image géométrique, dans l'objet observé, d'un point géométrique fixe du premier plan image, atteint sa valeur minimale.

Selon une caractéristique de l'invention, les moyens pour supprimer le faisceau d'éclairage ou la pluralité de sous-faisceaux d'éclairage peuvent être formés d'un obturateur permettant d'éteindre le faisceau d'éclairage lorsque la vitesse de déplacement des points d'éclairage est minimale. Toutefois, l'extinction du faisceau doit intervenir à un instant très précis afin que la trajectoire de chaque point d'éclairage se termine en un point parfaitement défini, à défaut de quoi des inhomogénéités d'éclairage sont également générées. Cette synchronisation est difficile.

Selon une autre caractéristique de l'invention visant à résoudre le problème des inhomogénéités d'éclairage en limitant les problèmes de synchronisation, les moyens pour supprimer le faisceau d'éclairage ou la pluralité de sous-faisceaux d'éclairage sont formés par un dispositif de limitation disposé pour être atteint par le faisceau d'éclairage ou la pluralité de sous-faisceaux d'éclairage, ledit dispositif de limitation comprenant des moyens pour supprimer la partie du faisceau d'éclairage ou de la pluralité de sous-faisceaux d'éclairage qui n'atteint pas une surface de sélection, et le dispositif de limitation, le système optique, et le mouvement du miroir monté mobile en rotation sont adaptés pour que la zone éclairée par le faisceau d'éclairage sur le dispositif de limitation se trouve en-dehors de la surface de sélection lorsque la vitesse de déplacement de l'image géométrique, dans l'objet observé, d'un point géométrique fixe du premier plan image, atteint sa valeur minimale. Dans ces conditions, le faisceau d'éclairage est arrêté lorsque la vitesse de déplacement des points d'éclairage serait normalement minimale, et le suréclairage des points correspondants de l'objet observé est évité. Lorsque cette solution est appliquée à un système dans lequel chaque point d'éclairage se déplace sur une droite, elle permet également à chaque point d'éclairage de traverser entièrement la zone observée, de sorte que le début et la fin de sa trajectoire sont définis par les limites de la zone observée sans qu'une synchronisation précise soit nécessaire.

Les caractéristiques du dispositif de limitation diffèrent selon que le dispositif de balayage comporte ou non des moyens pour déplacer la zone illuminée sur les mouyns pour diviser le faisceau d'éclairage en une pluralité de sous-faisceaux. D'une manière générale, le dispositif de limitation doit être placé dans une partie du système dans laquelle la zone éclairée par le faisceau d'éclairage se déplace. Selon une caractéristique de l'invention, adaptée en particulier au cas ou le dispositif de balayage comporte des moyens pour déplacer la zone illuminée sur les moyens pour diviser le faisceau d'éclairage en une pluralité de sous-faisceaux, le dispositif de limitation est disposé pour être atteint par le faisceau d'éclairage ou la pluralité de sous-faisceaux d'éclairage avant que le faisceau d'éclairage ou la pluralité de sous-faisceaux d'éclairage ne soit réfléchi, en direction de l'objet observé et en provenance des moyens pour diviser le faisceau d'éclairage en une pluralité de sous-faisceaux, par ledit miroir monté mobile. Dans ce cas, le dispositif de limitation peut être placé dans un plan conjugué au plan observé, de manière à ce que la partie observée du plan observé soit délimitée par des contours nets. Il peut être placé dans le plan ou se trouvent les moyens pour diviser le faisceau d'éclairage en une pluralité de sous-faisceaux, qui dans le cas ou des microlentilles sont utilisées n'est pas conjugué au plan observé, ce qui dans ce cas particulier ne dégrade pas la netteté des bords de l'image. Le dispositif de limitation peut par exemple être un diaphragme, auquel cas la surface de limitation est l'ouverture de ce diaphragme. Si les moyens pour diviser le faisceau d'éclairage en une pluralité de sous-faisceaux d'éclairage sont constitués par une plaque absorbante et/ou réfléchissante pourvue d'une pluralité de trous microscopiques, le dispositif de limitation peut être formée par une partie de cette plaque qui ne comporte pas de trous microscopiques, ce qui évite d'introduire un plan image ou un diaphragme supplémentaire. Si les moyens pour diviser le faisceau d'éclairage en une pluralité de sous-faisceaux d'éclairage sont constitués par une plaque transparente pourvue d'une pluralité de miroirs microscopiques, le dispositif de limitation peut être formée par une partie de cette plaque qui ne comporte pas de miroirs microscopiques, ce qui évite également l'introduction d'un diaphragme. Si les moyens pour diviser le faisceau d'éclairage sont constitués d'une pluralité de micro-lentilles plaçées dans un plan de division, le dispositif de limitation peut être un diaphragme plaçé dans le même plan ou dans un plan de focalisation des sous-faisceaux issus des microlentilles.

Selon une caractéristique de l'invention, adaptée en particulier au cas ou le dispositif de balayage ne comporte pas de moyens pour déplacer la zone illuminée sur les moyens pour diviser le faisceau d'éclairage en une pluralité de sous-faisceaux, le dispositif de limitation est plaçé à proximité d'un plan conjugué au plan observé et traversé par le faisceau d'éclairage après qu'il ait été réfléchi, en provenance des moyens pour diviser le faisceau en sous-faisceaux et en direction de l'objet observé, par le miroir monté mobile en rotation. Le dispositif de limitation peut alors être un diaphragme et la surface de sélection est alors l'ouverture de ce diaphragme. Comme précédemment, dans le cas ou chaque point d'éclairage se déplace sur une droite, chaque point d'éclairage traverse entièrement la zone observée. Par contre, cette solution peut se traduire par une perte d'intensité lumineuse notable.

Le dispositif de balayage peut être considérablement simplifié lorsque le premier système de filtrage spatial comporte une plaque non absorbante pourvue d'au moins un miroir microscopique réfléchissant , et le miroir monté mobile comporte une face de réflexion qui réfléchit le faisceau d'éclairage dirigé vers l'objet à observer , le faisceau lumineux provenant de l'objet à observer et dirigé vers le premier système de filtrage spatial, et le faisceau à détecter provenant du système de filtrage spatial. Cette solution limite considérablement le nombre de composants du système. Toutefois, elle ne permet pas de supprimer totalement les interférences avec la lumière réfléchie ("stray light").

Lorsqu'une seule face de réflexion d'un miroir est utilisée, il est nécessaire, afin d'éviter les pertes d'intensité lumineuses par des dispositifs polarisants permettant de séparer les différents faisceaux, d'augmenter la taille du miroir monté mobile de manière à séparer spatialement certains des faisceaux. L'augmentation de taille du miroir se traduit par une diminution de sa fréquence de résonance, qui peut être gênante pour effectuer un balayage propre. De plus, lorsque le premier système de filtrage spatial fonctionne en réflexion, le système optique nécessaire pour utiliser une seule face d'un miroir est complexe. Afin d'optimiser la fréquence de résonance du miroir monté mobile, et afin de simplifier le système optique, le miroir monté mobile peut être un miroir plan comprenant une première face de réflexion et une deuxième face de réflexion, la première face de réflexion étant destinée à défléchir le faisceau d'éclairage issu de la source lumineuse et le faisceau lumineux émis par le point éclairé de l'objet, et la deuxième face de réflexion étant destinée à défléchir le faisceau à détecter renvoyé par le premier système de filtrage spatial et le système optique. Cette configuration est particulièrement adaptée à l'utilisation d'un premier système de filtrage spatial comporte une plaque absorbante et/ou réfléchissante pourvue d'au moins un trou microscopique traversé dans un seul sens par le faisceau lumineux. En effet cette solution permet d'éviter les problèmes de "stray light", et l'utilisation de deux faces opposées d'un miroir évite de resuperposer le faisceau filtré dépourvu de "stray light" au faisceau d'éclairage.

D'autres caractéristiques et avantages de l'invention apparaîtront au cours de la description qui va suivre de plusieurs de ses formes de réalisation, données à titre d'exemples non limitatifs, en regard des dessins joints.

Sur les dessins :

- les figures 1 et 3 représentent des dispositifs de balayage optique confocal connus de l'art antérieur ,
- la figure 2 représente un exemple de tracé d'un rayon provenant d'un point fixe,
- la figure 4 représente un mode de réalisation non revendiqué, utilisant un balayage point par point et un miroir microscopique. Ce mode de réalisation, représenté par la figure 4, est le mieux adapté à une compréhension immédiate du principe de fonctionnement,
- la figure 5 représente un mode de réalisation non revendiqué utilisant un balayage point par point et un trou microscopique ;
- la figure 6 représente un mode de réalisation non revendiqué utilisant un éclairage laser multipoints et un réseaux de trous microscopiques,
- la figure 7 représente un réseau de trous microscopiques utilisé dans divers modes de réalisation,
- La figure 8 représente en vue de coté un ensemble de miroirs également représentés sur la figure 6,
- la figure 9 représente un réseau de lentilles utilisées pour l'éclairage de l'échantillon,
- la figure 10 représente l'ensemble des points éclairés dans l'objet observé, et la trajectoire de ces points,
- les figures 11 à 13 illustrent la commande appliquée à un atténuateur de faisceau en fonction de la position et de la vitesse de déplacement de l'image d'un trou microscopique sur une caméra,
- la figure 14 représente un mode de réalisation du dispositif à balayage optique confocal, non revendiqué, et dans lequel on utilise un éclairage laser multipoints et un réseaux de trous microscopiques,

- la figure 15 représente un réseau de lentilles et un réseau de trous microscopiques pouvant être utilisés pour filtrer le faisceau lumineux provenant de l'objet.
- la figure 16 représente un mode de réalisation non revendiqué utilisant un éclairage incohérent multipoints et deux réseaux de trous microscopiques,
- la figure 17 représente un cube intégrant deux réseaux de trous microscopiques et un miroir dichroïque,
- la figure 18 représente un mode de réalisation non revendiqué utilisant un éclairage incohérent multipoints et un seul réseau de trous microscopiques,
- la figure 19 représente les points éclairés dans l'objet, et la trajectoire d'un de ces points, un seul miroir galvanométrique étant utilisé,
- la figure 20 représente un mode de réalisation utilisant un éclairage incohérent et un réseau de miroirs microscopiques, et dans lequel le faisceau d'éclairage subit une première déflexion avant de parvenir au réseau de miroirs microscopiques formant le premier système de filtrage spatial,
- la figure 21 représente un réseau de miroirs microscopiques utilisés dans le mode de réalisation de la figure 20,
- la figure 22 représente une version améliorée du mode de réalisation de la figure 20, dans laquelle un faisceau non polarisé peut être utilisé sans perte d'énergie lumineuse,
- la figure 23 représente le déplacement d'une zone éclairée sur une plaque transparente pourvue d'un réseau de miroirs microscopiques et utilisée comme moyen pour séparer le faisceau d'éclairage en sous-faisceaux, par exemple dans le mode de réalisation de la figure 22,
- la figure 24 montre la trajectoire d'un point d'éclairage dans la zone observée de l'objet,
- la figure 25 représente une partie d'un réseau de points réfléchissants à maille hexagonale, et indique la position de ce réseau par rapport au sens de déplacement de la zone illuminée sur le réseau,
- la figure 26 représente une version à deux miroirs galvanométriques du mode de réalisation de la figure 22,
- la figure 27 représente un mode de réalisation en éclairage laser multipoint, dans lequel le faisceau d'éclairage subit une première déflexion avant de parvenir au réseau de microlentilles,
- la figure 28 montre un mode de réalisation simplifié en éclairage laser; et:
- la figure 29 montre un mode de réalisation similaire à celui de la figure 28, mais en éclairage lumière blanche.
- la figure 30 représente le déplacement d'une zone éclairée sur un diaphragme, utilisé par exemple dans le mode de réalisation de la figure 29,
- les figures 31 et 32 représente deux plaques pourvues de trous microscopiques, l'ensemble de ces deux plaques placées l'une contre l'autre formant un dispositif de filtrage spatial modifiable.
- la figure 33 montre une plaque munie d'une pluralité de réseaux de trous microscopiques et mobile suivant une direction, permettant de modifier les caractéristiques de filtrage spatial.
- la figure 34 montre une plaque munie d'une pluralité de réseaux de trous microscopiques et mobile suivant deux direction, permettant de modifier les caractéristiques de filtrage spatial.
- la figure 35 montre un ensemble de cubes incluant chacun une séparatrice et deux dispositifs de filtrage spatial, l'ensemble étant mobile suivant une direction pour pouvoir changer le cube utilisé dans le dispositif.

**Mode de réalisation monopoint simple (non revendiqué):**

Ce mode de réalisation simple utilise un éclairage laser monopoint, dans lequel le système de filtrage spatial est un miroir microscopique, et dans lequel une seule face des miroirs mobiles est utilisée. Du fait de sa simplicité, ce mode de réalisation se prête bien à une compréhension intuitive du fonctionnement.

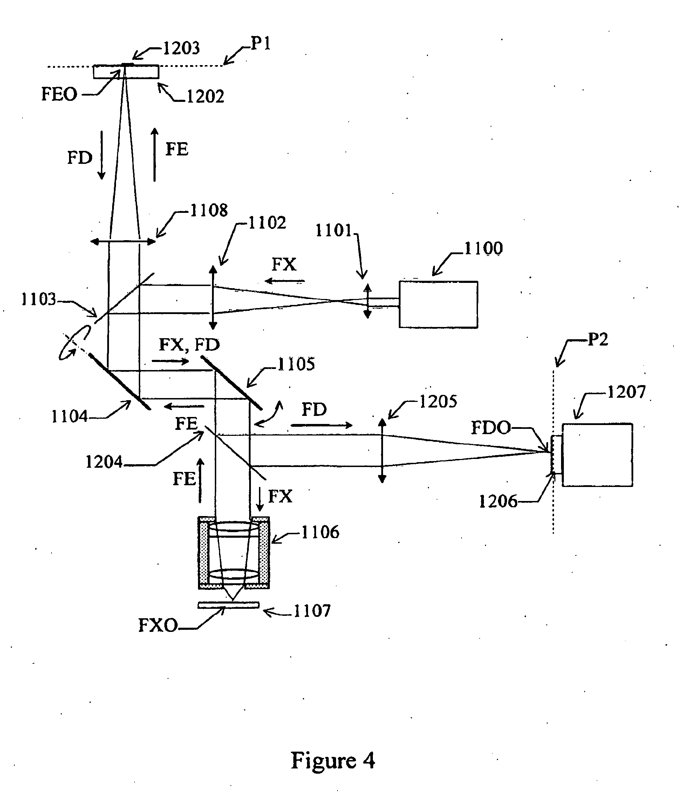

La figure 4 montre un microscope confocal en fluorescence à balayage laser selon ce mode de réalisation de l'invention. Sur cette figure on a indiqué en traits fins un faisceau passant par un point de l'objet et on a indiqué par des flèches les directions des différents faisceaux, à savoir le faisceau d'éclairage FX, le faisceau lumineux FE et le faisceau à détecter FD.

Un faisceau d'éclairage ou d'excitation FX issu d'un laser 1100 traverse un élargisseur de faisceau ou collimateur formé des lentilles 1101, 1102 puis est réfléchi par le miroir dichroïque 1103 qui réfléchit la longueur d'onde du faisceau d'éclairage FX du laser 1100 et laisse passer la longueur d'onde du faisceau lumineux FE réémis par fluorescence. Le faisceau d'éclairage FX est alors réfléchi sur le miroir galvanométrique 1104 mobile en rotation autour d'un axe situé dans le plan de la figure et dans le plan du miroir 1104, puis sur le miroir galvanométrique 1105 mobile en rotation autour d'un axe orthogonal au plan de la figure. Il traverse ensuite le séparateur de faisceau polarisant 1204 puis l'objectif de microscope 1106. Il est focalisé par l'objectif en un point d'éclairage FXO qui éclaire un point de l'objet formé par un échantillon fluorescent 1107. Le faisceau lumineux FE réémis par fluorescence à partir du point éclairé est collecté par l'objectif 1106, traverse le séparateur de faisceau polarisant 1204, est réfléchi successivement par les deux miroirs galvanométriques 1105 et 1104, traverse le miroir dichroïque 1103, et est focalisé par la lentille 1108 en un point lumineux FEO. Ce point lumineux FEO se situe dans un premier plan image P1 sur lequel est également disposé un miroir microscopique 1203 situé sur la face arrière d'une lame quart d'onde 1202. Le miroir microscopique 1203 constitue, dans ce mode de réalisation, un premier système de filtrage spatial pour filtrer le point lumineux. La partie du point lumineux FEO qui passe à côté du miroir microscopique parvient ensuite à une cavité absorbante. Le miroir microscopique 1203 peut par exemple être réalisé par lithographie optique.

La partie du point lumineux FEO ou du faisceau FE qui est réfléchie par le point 1203 sera appelée par la suite faisceau à détecter FD. Ce faisceau à détecter FD retraverse la lame quart d'onde 1202, la lentille 1108, le miroir dichroïque 1103, est réfléchi par les miroirs galvanométriques 1104, 1105, est réfléchi par le séparateur de faisceau polarisant 1204, puis est focalisé par la lentille 1205 en un point à détecter FDO dans un second plan image P2 sur lequel est disposé un capteur CCD 1206 fixé sur une caméra 1207.

La polarisation du laser 1100 est choisie pour que le faisceau FX issu de ce laser traverse le séparateur de faisceau 1204. La lame quart d'onde 1202 a son axe neutre orienté à 45 degrés de l'axe passant du polariseur 1201 et est quart d'onde pour le faisceau lumineux FE réémis par fluorescence. Elle a pour rôle de faire tourner de 90 degrés la direction de polarisation, afin que seul le faisceau à détecter FD réfléchi par le miroir microscopique soit ensuite réfléchi par le séparateur de faisceau polarisant 1204, à l'exclusion de l'onde issue de réflexions parasites sur la lentille 1108.

Dans ces conditions, l'image confocale de l'objet se forme directement sur le capteur CCD 1206 lorsque l'objet est balayé au moyen des miroirs galvanométriques. Un contrôle imparfait des miroirs galvanométriques se traduit au pire par des zones sombres sur l'image, mais en aucun cas par un déplacement des points éclairés de l'objet ou une quelconque imprécision géométrique. Le balayage de l'objet doit être effectué pendant le temps d'intégration du capteur. Les images peuvent ensuite être transférées du capteur CCD à un échantillonneur et un ordinateur.

Le capteur peut aussi être remplacé par un oculaire, éventuellement un ensemble binoculaire, permettant l'observation directe de l'image formée dans le second plan image P2 où se trouve sur le schéma le CCD 1206. Dans ce cas, le balayage doit se faire suffisamment rapidement pour ne pas être perceptible par l'oeil.

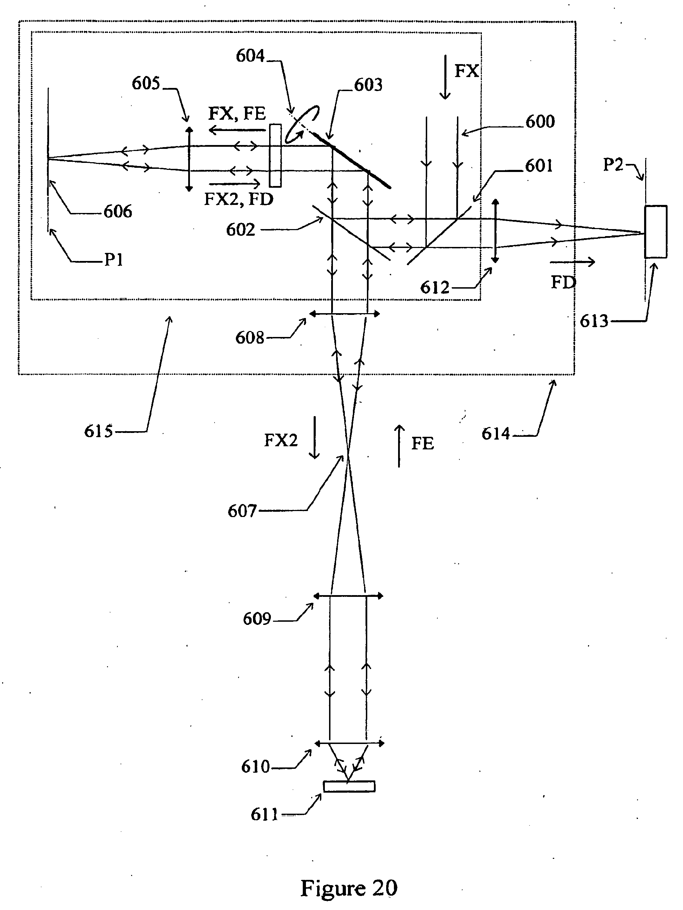

Ce mode de réalisation peut être adapté à un système multifaisceaux, par exemple du type représenté sur la figure 20. Son avantage principal est qu'il ne nécessite aucun réglage précis hormis la mise en correspondance du point de focalisation du laser avec le miroir microscopique. Son inconvénient majeur est la perte d'intensité lumineuse qui résulte de l'utilisation de miroirs semi transparents ou polarisants pour permettre l'utilisation d'une seule face des miroirs pour l'ensemble des trajets optiques.

Le présent mode de réalisation permet une compréhension particulièrement aisée du fonctionnement du dispositif. Comme dans le microscope confocal à balayage laser représenté sur la figure 1, le mouvement des miroirs galvanométriques se traduit par un balayage de l'objet 1107 par le point d'éclairage FXO résultant de la focalisation du faisceau d'éclairage FX dans le plan observé de l'objet observé. Le faisceau lumineux FE émis par fluorescence parvient ensuite, après réflexion sur les miroirs galvanométriques, en son point de focalisation FEO dans le plan P1. Le point de focalisation FEO est fixe et se trouve sur le miroir microscopique 1203. Dans le microscope confocal à balayage représenté sur la figure 1, ce miroir microscopique est remplacé par un trou microscopique derrière lequel le signal est détecté à l'aide d'un photomultiplicateur. Dans le cas présent, le faisceau lumineux FE est réfléchi par le miroir microscopique 1203, donnant le faisceau à détecter FD. Le faisceau à détecter FD suit exactement le trajet inverse du faisceau lumineux FE et en l'absence du séparateur de faisceau 1204 il reviendrait exactement au point de focalisation FXO du faisceau d'éclairage FX dans l'échantillon 1107. En introduisant le séparateur de faisceau 1204, on dérive ce faisceau de sorte qu'il parvienne en un point FDO du CCD 1206 se trouvant dans le plan P2. Ce point FDO du CCD 1206 n'est atteint que lorsque le point correspondant FXO de l'échantillon I 107 est éclairé par le faisceau FX. Chaque point du CCD 1206 correspond donc à un point unique de l'échantillon 1107 et lorsque l'échantillon 1107 est balayé au moyen des miroirs galvanométriques une image de cet échantillon se forme sur le CCD 1206. De manière plus précise, dans le cas présent, l'image géométrique dans le plan P2, d'un point fixe du plan observé d l'objet observé, est fixe.

**Mode de réalisation monopoint utilisant des faces opposées de miroirs galvanométriques (non revendiqué):**

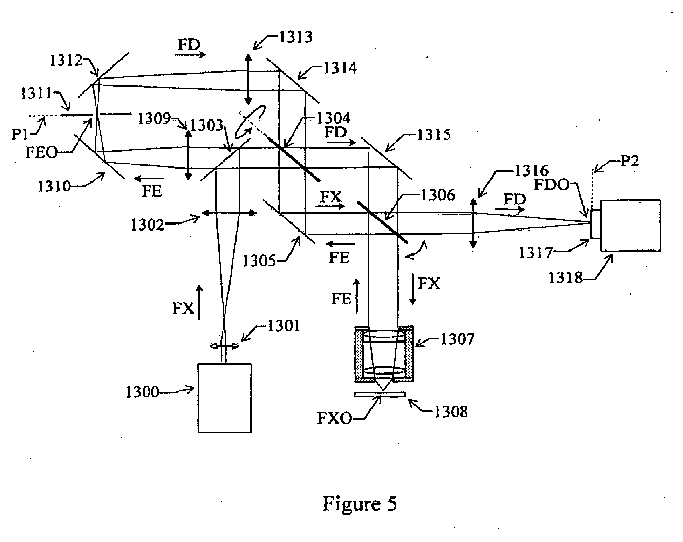

Ce mode de réalisation est représenté par la figure 5. Il s'agit d'un système utilisant un éclairage laser monopoint, mais deux faces des miroirs galvanométriques et un trou microscopique sont utilisés. Ces caractéristiques évitent la plupart des réflexions parasites.

Le faisceau d'éclairage FX issu du laser 1300 traverse l'élargisseur de faisceau ou collimateur formé des lentilles 1301,1302 puis est réfléchi par le miroir dichroïque 1303. Il est alors réfléchi par le miroir galvanométrique 1304 mobile en rotation autour d'un axe situé dans l'intersection du plan de la figure et du plan du miroir 1304, puis par le miroir fixe 1305 et par le miroir galvanométrique 1306 mobile en rotation autour d'un axe orthogonal au plan de la figure. Il traverse alors l'objectif 1307 formant à l'infini une image de l'échantillon, et est focalisé en un point d'éclairage FXO qui éclaire un point de l'échantillon observé 1308. Le faisceau lumineux FE réémis par fluorescence depuis ce point retraverse l'objectif 1307 en sens inverse, est réfléchi par le miroir galvanométrique 1306, le miroir fixe 1305, et le miroir galvanométrique 1304. Le faisceau lumineux traverse ensuite le miroir dichroïque 1303, et est focalisé par la lentille 1309 et le miroir fixe 1310 en un point lumineux FEO situé sur le trou microscopique 1311 placé dans un plan image P1. Le faisceau lumineux traverse le trou microscopique 1311 pour obtenir un faisceau à détecter FD qui est réfléchi par le miroir 1312, collimaté par la lentille 1313, réfléchi par le miroir 1314, puis par la seconde face du miroir galvanométrique 1304. Le faisceau à détecter est alors réfléchi par le miroir 1315 puis par la seconde face du miroir galvanométrique 1306. Le faisceau à détecter FD est alors focalisé par la lentille 1316 en un point à détecter FDO situé sur un point du plan image P2 dans lequel se trouve le capteur CCD 1317 fixé à la caméra 1318. Comme précédemment le capteur CCD peut être remplacé par un oculaire permettant l'observation directe du plan P2. Dans ce mode de réalisation représenté sur la figure 5, le trou microscopique 1311 forme le premier système de filtrage spatial du point lumineux issu de la focalisation du faisceau lumineux.

Le fonctionnement de l'ensemble est le même que précédemment, à savoir que les miroirs galvanométriques sont utilisés pour balayer l'objet suivant deux dimensions et que l'image se formant sur le plan P2 est enregistrée par le CCD 1317.

Chaque point du CCD 1317 correspond comme dans le mode de réalisation de la figure 4, à un point unique de l'échantillon 1308, et lorsque l'échantillon 1308 est balayé au moyen des miroirs galvanométriques une image de cet échantillon se forme sur le CCD 1317. Par contre, dans le cas présent, l'image géométrique dans le plan P2, d'un point fixe du plan observé de l'objet observé, n'est pas fixe. Ceci n'a pas de conséquences gênantes dans la mesure ou un seul point d'éclairage balaye l'objet.

**Mode de réalisation multipoint laser (non revendiqué).**

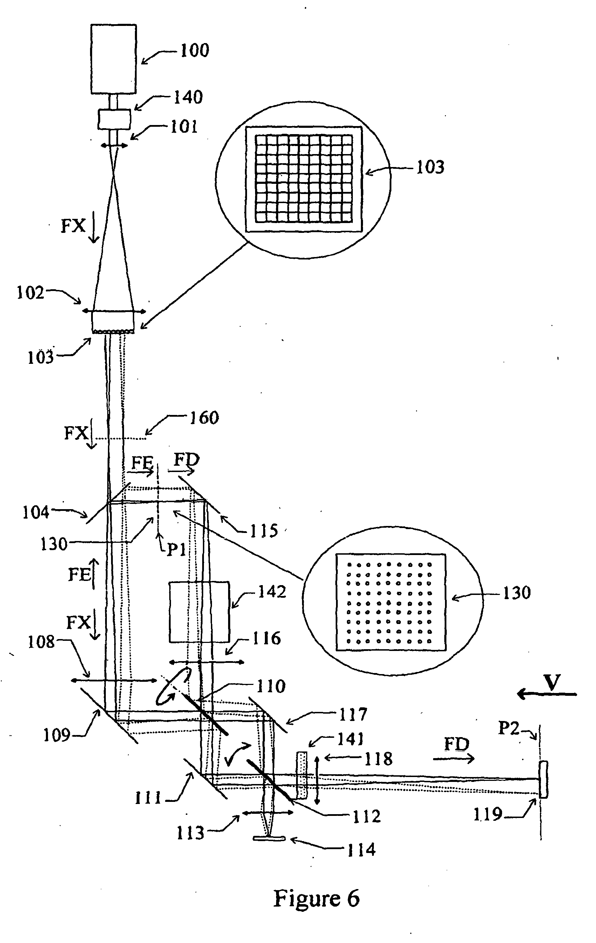

Ce mode de réalisation est représenté par la figure 6. Il constitue un mode de réalisation performant en termes de qualité d'image et de rapidité. En effet :

- on utilise un éclairage laser multipoints, ce qui permet, en particulier sur des zones de petites dimensions, d'utiliser un éclairage intense sans saturer l'échantillon.
- on utilise un réseau de trous microscopiques, qui filtre le faisceau et limite les difficultés liées à d'éventuelles réflexions parasites.

Le faisceau d'éclairage FX issu d'un laser 100 traverse un atténuateur de faisceau 140 qui peut par exemple être électro-optique ou acousto-optique. Il traverse ensuite un élargisseur de faisceau comportant par exemple les lentilles 101 et 102. Le faisceau d'éclairage FX traverse ensuite des moyens pour diviser ledit faisceau d'éclairage FX en une pluralité de sous-faisceaux d'éclairage. Ces moyens diviseurs sont formés par un réseau de microlentilles 103.

On a représenté en traits pleins le sous-faisceau issu d'une de ces microlentilles et en pointillés le sous-faisceau issu d'une autre microlentille. On a indiqué par des flèches les directions du faisceau d'éclairage ou d'excitation FX et du faisceau lumineux réémis par l'objet fluorescent FE.

La pluralité de sous-faisceaux d'éclairage issue du réseau de microlentilles 103 traverse ensuite le miroir dichroïque 104 et la lentille de tube 108 puis est réfléchie par un miroir 109. Ces sous-faisceaux d'éclairage sont ensuite réfléchis par un miroir galvanométrique 110 mobile en rotation autour d'un axe situé dans l'intersection du plan de la figure et du plan du miroir 110, par un miroir 111, et par un miroir galvanométrique 112 mobile en rotation autour d'un axe orthogonal au plan de la figure. Ils traversent l'objectif de microscope 113 et parviennent à l'objet observé 114. L'objectif 113 est un objectif formant à l'infini une image de l'échantillon observé. Le point de focalisation de chaque sous-faisceau d'éclairage issu du réseau de microlentilles 103 est situé dans un plan observé de l'objet observé 114.

De préférence, le plan focal image de l'objectif 113 est dans le plan focal objet (dans le sens objectif vers lentille 108) de la lentille 108 et le réseau de trous 160 est dans un plan focal de la lentille 108. Ceci permet de maximiser l'ouverture utile de chaque sous-faisceau.

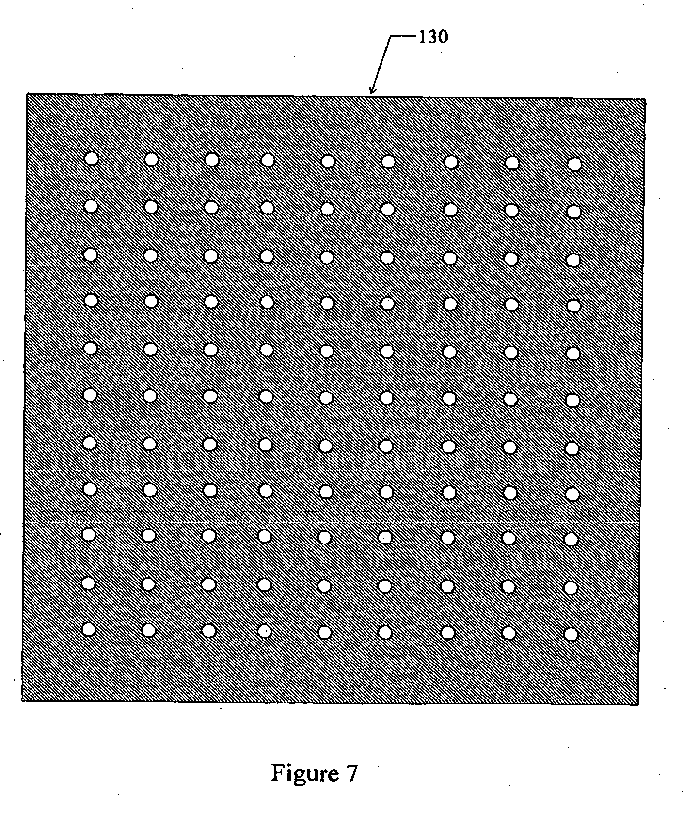

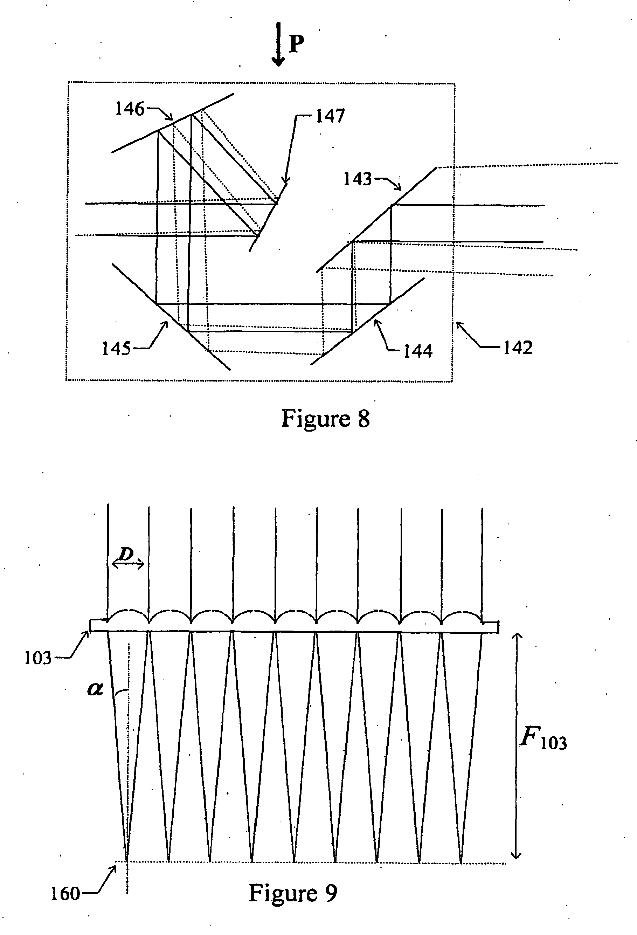

L'objet éclairé ou plus exactement la pluralité de points éclairés de l'objet émettent en retour une pluralité de sous-faisceaux lumineux non cohérents. Ces sous-faisceaux lumineux traversent l'objectif 113, sont réfléchis par le miroir galvanométrique 112, le miroir 111, le miroir galvanométrique 110, le miroir 109. Ils traversent la lentille de tube 108, sont réfléchis par le miroir dichroïque 104, puis traversent le réseau de trous microscopiques 130 situé dans le premier plan image P1 et formant le premier système de filtrage spatial. Le réseau de trous microscopiques 130 est par exemple du type représenté schématiquement sur la figure 7. Ce réseau 130 peut être constitué par dépôt d'une couche réfléchissante sur une vitre transparente par une méthode de type "lithographique", les trous étant alors des interruptions de la couche réfléchissante. Dans ce cas un filtre neutre placé en sortie du laser peut être utilisé pour atténuer les effets de retour de la lumière laser. Le réseau de trous microscopiques peut également être constitué d'une plaque métallique dépolie dans laquelle les trous sont percés au moyen d'un laser. Cette solution évite les problèmes de retour du faisceau laser. Le pas (distance entre les centres de deux trous adjacents) du réseau de trous microscopiques 130 est identique au pas du réseau de microlentilles 103 (distance entre les centres de deux microlentilles adjacentes). Les réseaux 103 et 130 sont positionnés de sorte que chaque trou du réseau 130 soit l'image d'un point de l'objet sur lequel est focalisé l'un des sous-faisceaux d'éclairage issu d'une microlentille du réseau 103. Ceci implique que le réseau 130 est dans un plan focal de la lentille de tube 108, et que le plan de focalisation 160 des sous-faisceaux d'éclairage issus du réseau de microlentilles 103 est également dans un plan focal de la lentille de tube 108. Les sous-faisceaux lumineux FE traversent le réseau 130 pour obtenir les sous-faisceaux à détecter FD qui sont ensuite réfléchis par le miroir 115. Les sous-faisceaux à détecter FD sont ensuite réfléchis successivement par les miroirs 143, 144, 145, 146, 147 constituant l'ensemble 142 représenté par un bloc sur la figure 6, qui sont montrés sur la figure 8 en vue suivant la direction V indiquée sur la figure 6. L'ensemble 142 sert à inverser l'angle des sous-faisceaux à détecter par rapport à un plan contenant l'axe optique et situé dans le plan de la figure 6. La direction P indiquée sur la figure 8 montre la direction d'observation suivant laquelle est réalisée la figure 6. Les sous-faisceaux à détecter traversent ensuite la lentille 116 identique à la lentille de tube 108, et dont le plan focal objet est sur le réseau de trous microscopiques 130. Ils sont réfléchis par la seconde face du miroir galvanométrique 110, par le miroir 117, par la seconde face du miroir galvanométrique 112. Ils traversent le filtre monochromateur 141. Ils traversent ensuite la lentille 118 qui forme dans son plan focal image l'image du réseau 130, et donc de l'échantillon observé. Ils parviennent au plan focal image de la lentille 118, qui constitue le second plan image P2, en une pluralité de points à détecter. Un capteur CCD 119 peut être placé dans ce plan, qui correspond au second plan image P2, toutefois il est également possible d'observer directement l'image formée dans ce plan, à l'aide d'un oculaire. La distance focale de la lentille 116 doit être exactement égale à la distance focale de la lentille 108, et pour permettre un ajustement précis les lentilles 116 et 108 peuvent être remplaçées par des doublets de lentilles, le réglage de la distance interlentilles d'un doublet permettant un ajustement de la distance focale du doublet.

L'inversion de l'angle des sous-faisceaux à détecter qui est réalisée par l'ensemble de miroirs 142 permet à l'image géométrique, dans le plan P2, d'un point géométrique fixe de l'objet observé, d'être un point géométrique fixe. Du fait qu'un réseau de points d'éclairage est utilisé, cette condition est indispensable à la formation d'une image de bonne qualité.

La figure 9 montre le principe de la focalisation du faisceau laser par le réseau de microlentilles 103. La valeur de l'angle $\alpha$ indiqué sur cette figure est de préférence $\alpha = ouv \dfrac{F_{113}}{F_{108}}$. La largeur de la tache d'Airy produite dans le plan 160 est alors $L_{160} = 1{,}22 \dfrac{\lambda_{las}}{ouv} \dfrac{F_{108}}{F_{113}}$ ou $F_{108}$ est la distance focale de la lentille 108, $F_{113}$ est la distance focale de l'objectif 113, $ouv$ est l'ouverture numérique de l'objectif 113, $\lambda_{las}$ est la longueur d'onde du laser. La distance $D$ entre deux microlentilles adjacentes est de préférence au moins 10 fois la largeur de chaque trou. Les microlentilles du réseau 103 sont des microlentilles sphériques limitées par des carrés et adjacentes les unes aux autres. La largeur de chaque microlentille (coté du carré la limitant ou distance entre les centres de deux microlentilles adjacentes) est égale à la distance $D$ entre deux trous microscopiques adjacents du réseau 130, et le diamètre $L_{130}$ d'un trou microscopique est égal par exemple à la largeur de la tache d'Airy produite dans le plan 160, ou à la moitié de cette largeur. La distance focale $F_{103}$ de chaque microlentille du réseau de microlentilles 103 et sa largeur $D$ sont en outre liés par la relation

$$\frac{D}{2F_{103}} = \alpha = ouv \frac{F_{113}}{F_{108}}, \text{ soit } F_{103} = \frac{D}{2} \frac{F_{108}}{F_{113}} \frac{1}{ouv}. \text{ Par exemple on peut avoir:}$$

$$F_{113} = 2 \text{ mm}$$

$$ouv = 1{,}25$$

$$F_{108} = 200 \text{ mm}$$

$$D = 2 \text{ mm}$$

$$\lambda_{las} = 488 \text{ nm (laser argon)}$$

$$F_{103} = 80 \text{ mm}$$

$$L_{130} = 23 \ \mu\text{m}$$

Pour une résolution maximale, avec des trous microscopiques dont le diamètre est suffisamment inférieur à la tache d'Airy, et pour permettre dans des conditions optimales une déconvolution ultérieure de l'image confocale, le pas $P_{119}$ d'échantillonnage sur la capteur CCD (distance entre les centres de deux pixels adjacents) doit vérifier:

$$P_{119} = \frac{1}{4ouv} \frac{F_{118}}{F_{113}} \frac{\lambda_{las} \lambda_{fluo}}{\lambda_{las} + \lambda_{fluo}}$$

$$\text{soit } F_{118} = 4ouv P_{119} F_{113} \frac{\lambda_{las} + \lambda_{fluo}}{\lambda_{las} \lambda_{fluo}}$$

Par exemple avec $P_{119} = 12 \ \mu\text{m}$ et toujours dans le même exemple de dimensionnement on obtient:

$$F_{118} = 477 \text{ mm}$$

Pour une résolution maximale mais sans déconvolution ultérieure de l'image confocale on peut se contenter

$$\text{de: } F_{118} = \frac{4}{2\sqrt{2}} ouv P_{119} F_{113} \frac{\lambda_{las} + \lambda_{fluo}}{\lambda_{las} \lambda_{fluo}} \text{ soit } F_{118} = 168 \text{ mm}$$

Avec des trous microscopiques dont le diamètre est d'une tache d'airy on peut se contenter de:

$$F_{118} = \frac{4}{2\sqrt{2}} ouv P_{119} F_{113} \frac{\lambda_{las} + \lambda_{fluo}}{\lambda_{las} \lambda_{fluo}}$$

Il est donc être utile de pouvoir modifier la distance focale de la lentille 118, ou de la remplacer par un système avec zoom ou par un système de grossissement variable avec des éléments optiques interchangeables.

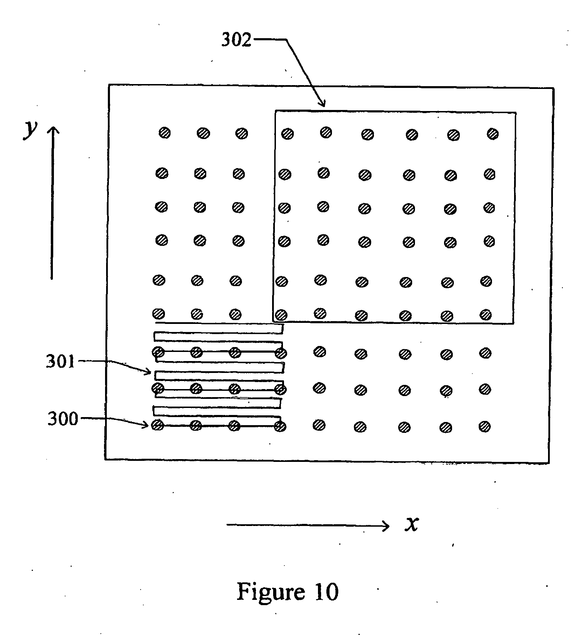

Les miroirs galvanométriques 110 et 112 sont commandés de manière à déplacer les points éclairés dans l'objet observé 114, de la manière indiquée sur la figure 10. La figure 10 montre en grisé l'ensemble des points éclairés par les sous-faisceaux d'excitation FX dans le plan observé de l'objet, pour une position de référence des miroirs galvanométriques. Le diamètre des points représente le diamètre approximatif des taches de diffraction correspondantes. Le trait 301 superposé au dessin montre la trajectoire suivie par un point éclairé 300 lorsque les miroirs galvanométriques sont commandés. Cette trajectoire est parcourue alternativement dans les deux sens. Lorsque cette trajectoire est suivie, chaque point éclairé balaye une petite partie du plan image, et l'ensemble des points éclairés balaye l'ensemble du plan image. Une image confocale de l'ensemble du plan observé de l'objet 114 est donc générée sur le capteur 119. Le contour 302 montre la limite de la zone utile, de laquelle une image confocale de bonne qualité est générée sur le capteur. De nombreuses variantes de la trajectoire parcourue peuvent être utilisées, la contrainte essentielle étant que l'ensemble de la zone utile soit balayée, deux parties distinctes de la zone utile étant en général balayées par des points éclairés distincts.

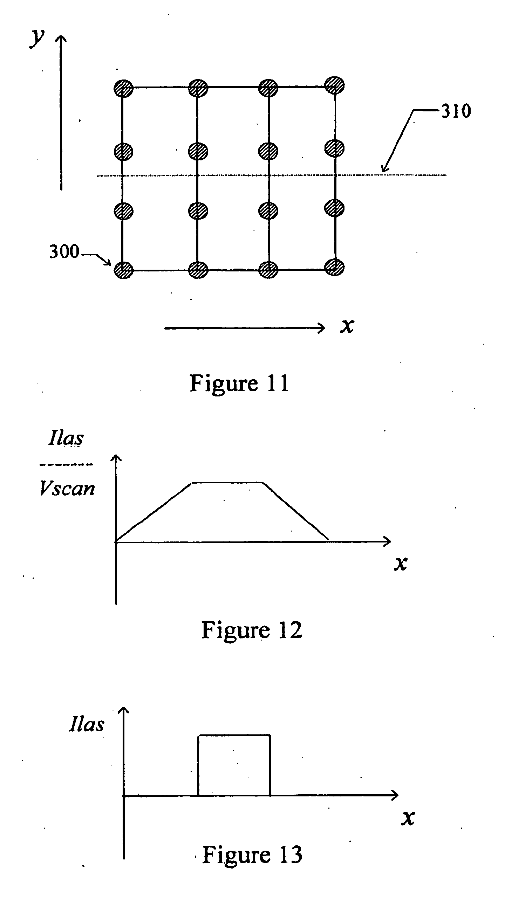

L'atténuateur de faisceau 140 doit être commandé en fonction de la position des miroirs galvanométriques et de leur vitesse. Ces paramètres peuvent être obtenus de manière connue par un feedback à partir des galvanomètres, ou peuvent être obtenus sans feedback à partir du système de commande des galvanomètres, avec une précision moindre. On note *Ilas* l'intensité du faisceau laser après traversée de l'atténuateur 140, et *Vscan* la vitesse de balayage, c'est-à-dire la vitesse de déplacement dans le plan observé et suivant l'axe *x* d'un point éclairé dans l'objet observé. Cette vitesse de balayage est due uniquement au miroir galvanométrique le plus rapide. La position des miroirs galvanométriques peut être caractérisée par la position du point éclairé dans l'objet 114. Les figures 11 et 12 illustrent la valeur du rapport $\dfrac{Ilas}{Vscan}$ en fonction de la position du point éclairé dans l'échantillon 114. La figure 11 représente un ensemble de points éclairés, dont le point 300 également représenté sur la figure 10, pour la position de référence des miroirs galvanométriques. Sur cette figure on a représenté en traits continus les arêtes de la surface représentant la fonction $\dfrac{Ilas}{Vscan}$ en fonction des coordonnées *x, y* du point 300 dans le plan observé. Sur la figure 12, on a représenté l'allure de cette fonction le long de la ligne 310 de la figure 11. Une valeur constante de $\dfrac{Ilas}{Vscan}$ sur l'ensemble de la trajectoire, c'est-à-dire une commande de l'atténuateur en fonction de la seule vitesse de balayage, permettrait en principe de supprimer les variations d'éclairage dues aux variations de la vitesse de balayage. Toutefois, la courbe de la figure 12 permet également d'atténuer les effets d'une variation incontrôlée de l'amplitude d'oscillation des miroirs, au prix toutefois d'une perte d'intensité lumineuse. Il est également possible de faire fonctionner l'atténuateur de faisceau en mode binaire. La commande de l'intensité se fait alors par exemple conformément à la figure 13. Seule la partie centrale de la trajectoire, sur laquelle la vitesse est à peu près constante, est utilisée. Enfin, il est également possible de ne pas utiliser d'atténuateur de faisceau. L'image reste de qualité acceptable mais peut être affectée par des variations locales de l'intensité, qui peuvent être compensées par un traitement numérique ultérieur. D'une manière générale, plus le nombre de trous microscopiques est élevé et plus la surface d'un point éclairé est élevée, moins les variations d'intensité d'éclairage sont notables. L'utilisation d'un réseau suffisamment dense de trous microscopiques peut donc se substituer partiellement à l'usage d'un atténuateur de faisceau.

A chaque objectif 113 utilisable, caractérisé par son ouverture, son grossissement, et la position de son plan focal image, correspond un dimensionnement optimal des trous microscopiques utilisés, des microlentilles et de la lentille 108. On peut concevoir ces éléments de manière à ce qu'ils conviennent à l'ensemble des objectifs, toutefois les propriétés du système seront sous-optimales avec certains objectifs. Il est également possible de concevoir une série d'objectifs étudiés pour donner les meilleurs résultats avec un dimensionnement donné du reste du système. Toutefois, il est préférable de pouvoir échanger les trous microscopiques utilisés et les microlentilles, de manière à pouvoir les optimiser en fonction des objectifs utilisés, des longueurs d'ondes d'excitation et de fluorescence, du niveau de fluorescence, de la vitesse d'acquisition souhaitée, de la résolution souhaitée. A cette fin, le réseau de microlentilles 103, le réseau de trous microscopiques 130, et le miroir dichroïque 104, peuvent être rendus solidaires entre eux et constituer un bloc échangeable d'une seule pièce. Ceci évite à l'utilisateur d'avoir à régler l'alignement des différents éléments: les problèmes d'alignement sont réglés à la fabrication du bloc. Le positionnement du bloc dans le reste du système doit simplement se faire avec une précision angulaire suffisante (de l'ordre de 1 miliradian).

Le présent mode de réalisation peut être combiné avec tous les modes d'imagerie connus en microscopie confocale. En particulier, le porte-objet peut être muni d'un système de déplacement vertical piézoélectrique ou par moteur pas à pas, de manière à pouvoir générer des images tridimensionnelles en modifiant le plan de focalisation. Des systèmes à base d'atténuateurs acousto-optiques peuvent être utilisés pour commuter plusieurs lasers et exciter des fluorophores différents, de manière à générer par superposition des images plus riches en information. Le système est également compatible avec l'utilisation de la méthode à deux photons, le nombre de trous microscopiques devant alors être ajusté pour qu'une intensité suffisante reste disponible sur chaque point de focalisation du faisceau. Des roues de filtres (filtre 141) peuvent être utilisées pour modifier longueurs d'ondes détectées. Le miroir dichroïque 104 peut être remplacé par un miroir semi-transparent de manière à pouvoir changer de longueurs d'onde d'excitation et de fluorescence en commutant un laser et en changeant de filtre 141, sans avoir à échanger le miroir dichroïque 104. Le remplacement du miroir dichroïque 104 par un miroir semi-transparent permet également d'utiliser l'appareil pour observer en réflexion des échantillons diffractifs non fluorescents.

Il est possible, au moyen de lentilles relais, de modifier le dispositif de manière à ce que l'ensemble du système de balayage soit placé en arrière d'un plan image intermédiaire. Une telle solution peut être utile pour réaliser un dispositif de balayage adaptable à tout type de microscope.

Il est bien entendu possible de n'utiliser qu'un seul trou microscopique, auquel cas les caractéristiques de vitesse sont celles d'un microscope confocal à balayage par miroirs galvanométriques du type courant. Toutefois, l'avantage du système reste de pouvoir visualiser directement l'image et de pouvoir l'enregistrer sur une caméra.

Il peut être utile d'équiper l'appareil d'un dispositif de positionnement de l'échantillon 114 dans le sens de l'axe optique. En effet, ceci permet d'obtenir des images tridimensionnelles constituées de séries d'images bidimensionnelles obtenues chacune à une profondeur différente. L'image tridimensionnelle obtenue peut ensuite faire l'objet d'une déconvolution tridimensionnelle qui en améliore la résolution. Préalablement à la déconvolution, la PSF ("point spread function" en anglais, ou réponse impulsionnelle tridimensionnelle) doit être mesurée, par exemple sur une microbille fluorescente.

### Mode de réalisation multipoints laser avec compensation de certains défauts (non revendiqué).

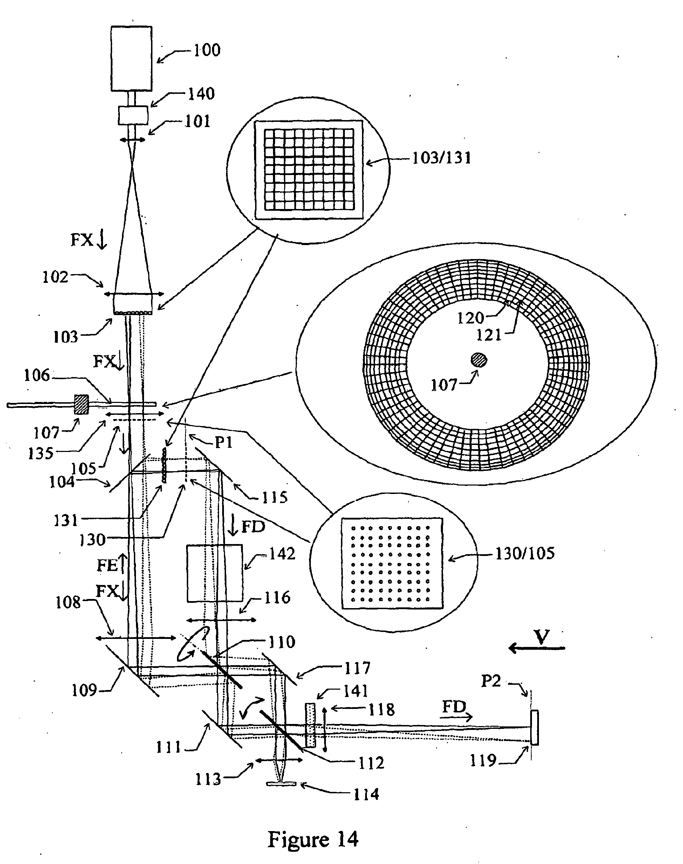

La figure 14 illustre un mode de réalisation dérivé du précédent mais amélioré par plusieurs dispositifs additionnels.

La pluralité de sous-faisceaux d'éclairage issue du réseau de microlentilles 103 traverse une vitre 106 mobile en rotation autour d'un axe 107, puis une lentille optionnelle 135 , puis un second système de filtrage spatial formé par un réseau de trous microscopiques 105, et ne parvient qu'ensuite au miroir dichroïque 104.

La surface de la vitre 106 est divisée en un ensemble de sous-surfaces, par exemple les sous-surfaces 120 et 121. La moitié de ces sous-surfaces portent une surépaisseur générant un décalage de phase de 180 degrés des sous-faisceaux d'éclairage les traversant. Les sous-surfaces portant des surépaisseurs sont réparties de manière pseudo-aléatoire dans l'ensemble des sous-surfaces. Chaque sous-surface est approximativement carrée. La largeur du coté du carré est égale à la distance entre deux trous microscopiques adjacents du réseau 105. La vitre 106 est positionnée de manière à ce que chaque trou microscopique du réseau 105 soit placé au-dessous d'une sous-surface distincte. La rotation rapide de la vitre 106 permet de générer des décalages de phase pseudo-aléatoires de l'ensemble des sous-faisceaux d'éclairage, de sorte que la cohérence spatiale des sous-faisceaux soit rompue après traversée de la vitre 106. En effet la cohérence entre faisceaux est susceptible de perturber légèrement l'image.

Une difficulté pratique est liée au fait que des objectifs de différents grossissements ont des plans focaux image distincts. Par conséquent, le plan focal objet de la lentille 108 (dans le sens de l'objectif vers la lentille 108) ne peut être confondu avec le plan focal image de l'objectif que pour un des objectifs utilisés. Il est possible de pallier à cette difficulté en augmentant l'ouverture des sous-faisceaux d'éclairage issus de chaque microlentille, ce qui diminue l'intensité lumineuse disponible. La lentille 135 permet de pallier cette difficulté sans qu'il y ait perte d'intensité lumineuse. Elle doit être dimensionnée de manière à ce qu'une onde plane dans l'objet ait pour image une onde plane entre la lentille 135 et le réseau de microlentilles 103. Un changement d'objectif doit alors s'accompagner d'un changement de la lentille 135.

Le réseau de trous microscopiques 105 formant le second système de filtrage spatial a pour vocation de filtrer les sous-faisceaux lasers issus des microlentilles du réseau 103. Ceci permet de pallier d'éventuelles imperfections de ces microlentilles. Chaque trou microscopique du réseau 105 est placé au point de focalisation d'une microlentille correspondante et son diamètre peut par exemple être d'une tache d'Airy ou d'une demi-tache d'Airy, selon que l'on souhaite optimiser la résolution ou la luminosité.

Le réseau de microlentilles 131 placé devant le premier système de filtrage spatial formé par le réseau de trous microscopiques 130 est surtout utile lorsque la longueur d'onde d'excitation est très inférieure à la longueur d'onde de l'émission fluorescente et lorsque le diamètre des trous microscopiques est de l'ordre d'une tache d'Airy. Il permet alors d'améliorer légèrement la résolution sans sacrifier la luminosité.

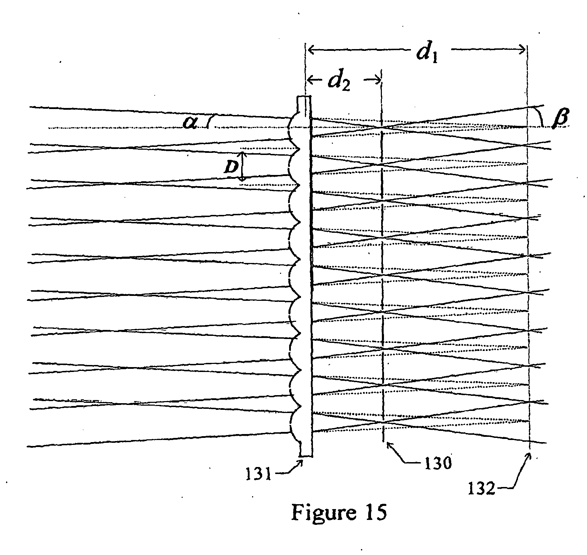

La figure 15 montre le principe de fonctionnement des microlentilles du réseau 131 et des trous microscopiques du réseau 130. L'angle $\alpha$ indiqué sur cette figure vaut, comme sur la figure 9, $\alpha = ouv\,\dfrac{F_{113}}{F_{108}}$. On a représenté le plan focal 132 de la lentille 108. En l'absence du réseau de microlentilles 131, le réseau de trous microscopiques 130 devrait être placé dans ce plan, et l'angle de divergence du faisceau après passage des trous microscopiques, dans la mesure ou ces trous sont suffisamment larges, serait $\alpha$. Le réseau de lentilles 131 a pour utilité d'augmenter cet angle de divergence, ce qui équivaut à diminuer le diamètre des tache d'Airy formées sur chaque trou du réseau de trous microscopiques 130. Ceci permet de diminuer le diamètre des trous microscopiques du réseau 130 sans perte d'intensité lumineuse, ce qui permet ensuite une réception sur un capteur CCD sans que la résolution soit diminuée par la superposition des taches d'Airy obtenues pour des points proches. L'angle de divergence du faisceau après passage des trous microscopiques devient, compte tenu des microlentilles du réseau 131, $\beta = m\alpha$ avec typiquement $m = 1,5$ à $m = 4$. Les distances $d_2$ entre le réseau de microlentilles 131 et le réseau de trous microscopiques 130, $d_1$ entre le réseau de microlentilles 131 et le plan focal 132 de la lentille 108, et la distance focale $F_{131}$ des microlentilles du réseau 131, sont liées par l'équation des lentilles minces (qui peut éventuellement être modifiée pour prendre en compte l'épaisseur des lentilles):

$$\frac{1}{d_2} - \frac{1}{d_1} = \frac{1}{F_{131}}$$

et on a par ailleurs, compte tenu du coefficient *m* recherché:

$$\frac{d_1}{d_2} = m$$

De plus pour des raisons d'encombrement on a:

$$D = 2d_1 c\alpha$$

avec $c \geq 1$. Typiquement on peut prendre $c = 2$.

Compte tenu également de l'expression de l'angle $\alpha = ouv \dfrac{F_{113}}{F_{108}}$, on obtient finalement:

$$d_1 = \frac{D}{2c} \frac{F_{108}}{F_{113}} \frac{1}{ouv}$$

$$F_{131} = \frac{1}{m-1} d_1$$

$$d_2 = \frac{1}{m} d_1$$

La largeur des trous microscopiques sur le réseau 130 peut être égale au diamètre de la tache d'Airy sur ces trous soit:

$$L_{130} = 1,22 \frac{1}{m} \frac{\lambda_{fluo}}{ouv} \frac{F_{108}}{F_{113}}$$

ou $\lambda_{fluo}$ est la longueur d'onde correspondant au maximum de l'émission fluorescente.
En reprenant l'exemple de dimensionnement utilisé dans le mode de réalisation précédent pour les réseaux 103 et 105 on obtient, pour $c = 2$ et $m = 4$, et pour $\lambda_{fluo} = 518$ nm (fluorescéine):

$$F_{113} = 2 \text{ mm}$$

$$ouv = 1,25$$

$$F_{108} = 200 \text{ mm}$$

17

$$D = 2 \text{ mm}$$

$$F_{103} = 80 \text{ mm}$$

$$d_1 = 40 \text{ mm}$$

$$F_{131} = 13,33 \text{ mm}$$

$$d_2 = 10 \text{ mm}$$

$$L_{130} = 12 \ \mu\text{m}$$

**Mode de réalisation multipoint en éclairage incohérent** (non revendiqué)

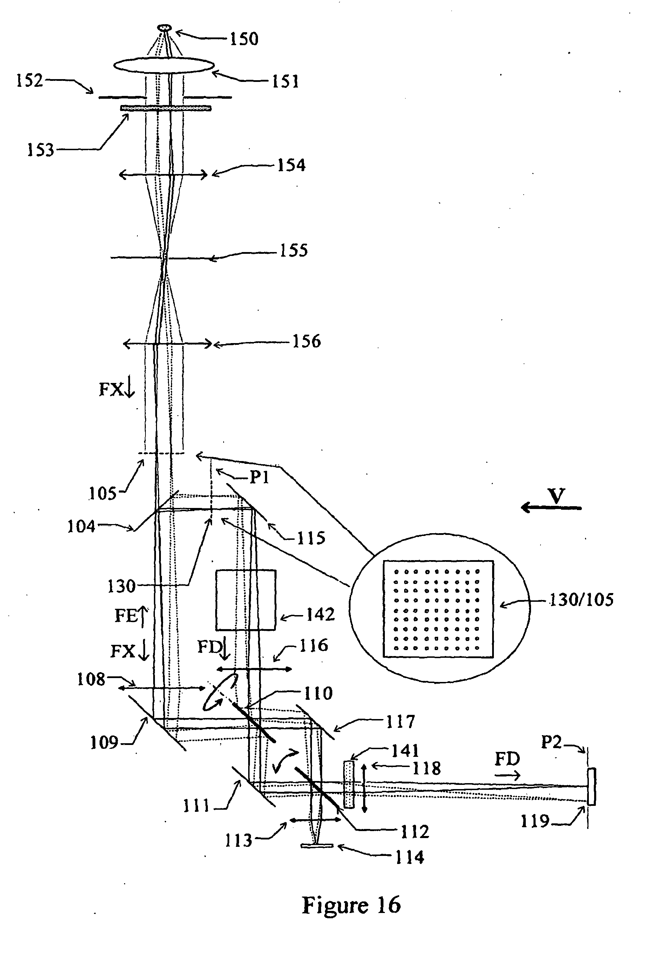

Ce mode de réalisation qui est représenté sur la figure 16 diffère de celui représenté sur la figure 6 par le fait qu'un éclairage non cohérent est utilisé. Ceci limite la vitesse d'imagerie mais permet l'utilisation d'un éclairage moins coûteux et dont la longueur d'onde peut être aisément ajustée, ou l'utilisation d'un éclairage en lumière blanche pour l'observation en lumière réfléchie.

Le faisceau d'éclairage FX est fourni par exemple par l'arc incandescent 150 d'une lampe à vapeur de mercure ou de Xénon. Ce faisceau d'éclairage traverse un collecteur 151, un diaphragme de champ 152, un filtre monochromateur 153 sélectionnant la longueur d'onde d'excitation de la fluorescence de l'objet à observer. Ensuite, ce faisceau d'éclairage FX traverse la lentille 154, le diaphragme d'ouverture 155, la lentille 156, et parvient directement au réseau de trous microscopiques 105 formant le second système de filtrage spatial. L'ensemble constitué des éléments 150 à 156 constitue un éclairage de Köhler et peut être remplacé par tout autre système d'éclairage de Köhler. Le reste du système est identique au mode de réalisation de la figure 6.

Une grande partie de l'intensité lumineuse disponible est réfléchie par le réseau de trous microscopiques 105, ce qui limite la clarté de l'image formée dans le plan 119 confondu avec le second plan image P2. Afin que le temps d'acquisition et la clarté de l'image restent dans des limites raisonnables, il est préférable d'utiliser un réseau 105 constitué de trous microscopiques très rapprochés les uns des autres. Alors que dans le mode de réalisation précédent, la distance entre deux trous microscopiques peut typiquement être d'environ 20 fois la largeur de chaque trou, dans le présent mode de réalisation il est préférable de limiter cette distance, qui peut par exemple être de 2 à 4 fois la largeur du trou microscopique. Ceci génère des perturbations de l'image, mais l'effet confocal est maintenu et les perturbations peuvent être supprimées par exemple par une déconvolution tridimensionnelle dans le cas ou une image tridimensionnelle est acquise, composée d'une série d'images bidimensionnelles acquises à des profondeurs différentes dans l'objet.

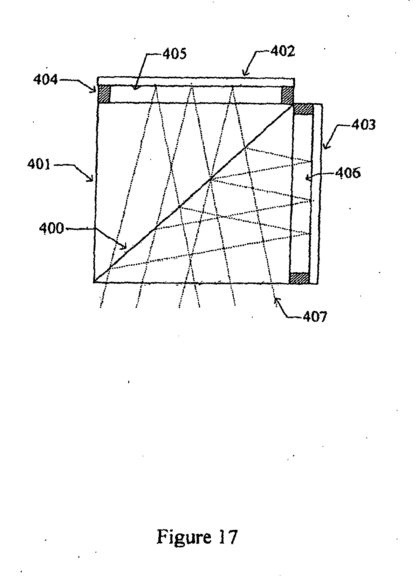

Pour permettre l'échange des deux réseaux de trous microscopiques sans que cet échange nécessite de réglage complexe, et pour diminuer le coût de fabrication, les réseaux de trous microscopiques 105,130 et le miroir dichroïque 104 peuvent être intégrés en un seul élément aisément réalisable, représenté sur la figure 17. Le miroir dichroïque 400 est intégré à un cube transparent 401. Des vitres 402, 403 sont montées sur les cotés du cube, dont elles sont solidarisées par des pièces adaptées, par exemple 404. Des espaces vides 405,406 sont laissés entre les vitres et le cube 401. Le coté des vitres 402,404 qui regarde vers le cube est recouvert d'une couche mince métallique et d'une couche mince de résine photosensible. Les trous microscopiques sont réalisés par insolation de la résine photosensible à l'aide d'un projecteur en lumière blanche. On a représenté symboliquement en pointillés l'allure du faisceau issu de ce projecteur. Le projecteur est focalisé par exemple sur le plan constitué par la face de la vitre 402 qui porte les couches minces. Chaque point éclairé de la vitre 402 deviendra un trou microscopique. Du fait de la configuration du système, les points de la vitre 403 qui sont éclairés sont correctement placés sans qu'un réglage supplémentaire soit nécessaire, et deviendront les trous microscopiques correspondant aux trous de la vitre 402. Après insolation, un liquide approprié est introduit dans les espaces vides 405,406 de manière à enlever la résine aux endroits insolés, puis un acide est utilisé pour enlever le métal en ces mêmes points. On a alors obtenu les trous microscopiques. Un solvant peut être utilisé pour enlever la couche résiduelle de résine, et l'ensemble peut finalement être nettoyé. Enfin, il peut être utile d'introduire un liquide optique ou un plastique transparent dans l'espace vide, de préférence de même indice que les lames 402,403. Ceci évite les réflexions inutiles sur les surfaces de contact. Si un matériau de même indice que les lames 402, 403 est introduit dans les espaces vides, alors on peut utiliser pour réaliser l'ensemble des vitres 402,403 dépolies sur leur face qui regarde vers le cube. Ceci permet une meilleure dispersion de la lumière incidente par les parties réfléchissantes. Les monochromateurs 153 et 141 peuvent également être intégrés à ce cube, ce qui permet de modifier le mode d'imagerie par échange d'un seul composant. Si une observation en lumière réfléchie est recherchée, le miroir dichroïque peut être remplacé par un cube séparateur neutre.

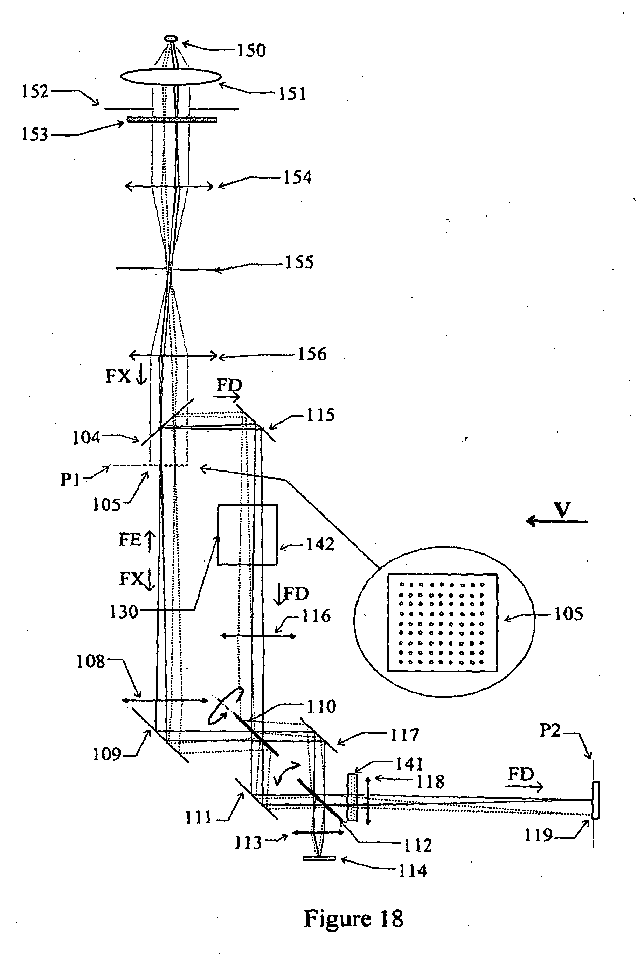

Une autre solution simplifiant l'échange des réseaux de trous microscopiques consiste à n'utiliser qu'un seul réseau de trous, qui est traversé dans un sens par le faisceau d'éclairage FX et dans l'autre sens par le faisceau lumineux FE émis par fluorescence depuis l'échantillon observé. Dans ce cas le système est modifié comme indiqué sur la figure 18: un seul réseau de trous microscopiques 105 est utilisé, mais le miroir dichroïque 104 est placé entre la lentille 156 et le réseau de trous microscopiques 105. Le réseau de microlentilles 131 est également supprimé et le dimensionnement mécanique est modifié pour tenir compte du remplacement du réseau 130 par le réseau 105. Cette configuration est particulièrement simplifiée, toutefois cette simplification a pour conséquence la présence d'une forte intensité de lumière résultant de la réflexion partielle du faisceau d'éclairage FX par le réseau de trous 105 ("stray light"), qui doit être éliminée par le miroir dichroïque 104 et le filtre 141. Un avantage de cette configuration est que l'échange du réseau 105, qui constitue à la fois les moyens pour diviser le faisceau d'éclairage en sous-faisceaux, et le premier dispositif de filtrage spatial, peut se faire sans problèmes d'alignement.

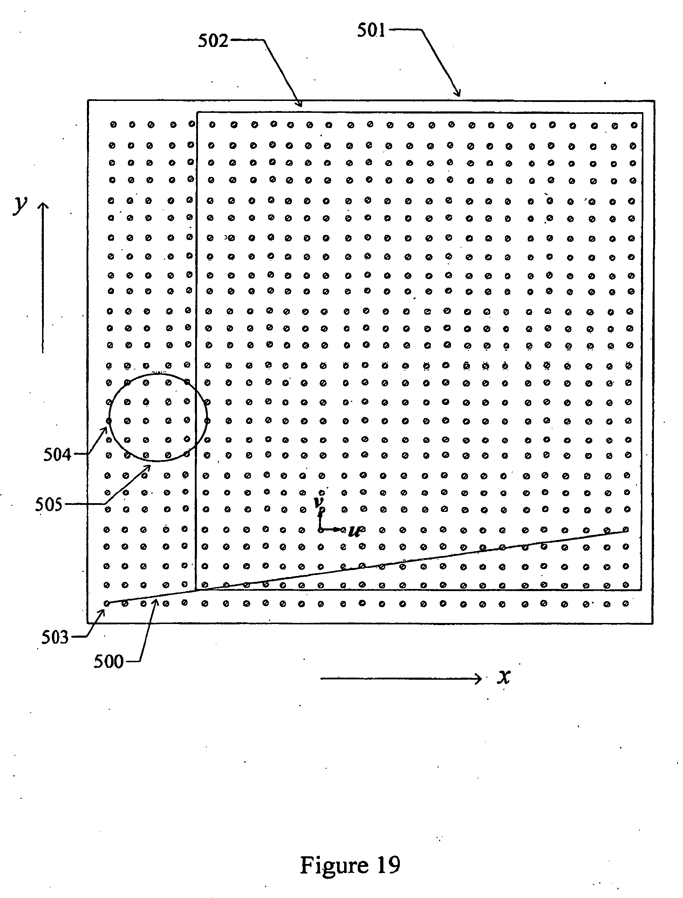

Il est également possible de supprimer un des miroirs galvanométriques 110 ou 112 et de le remplacer par un miroir fixe, à condition de modifier légèrement l'axe de rotation du miroir restant et de le commander de manière à avoir pour chaque point éclairé une trajectoire suffisamment longue. La figure 19, réalisée suivant les mêmes conventions que la figure 10, montre la trajectoire 500 d'un point éclairé 503 dans le plan observé de l'objet 114, ainsi que la zone 502 dans laquelle une image de bonne qualité est obtenue, la position des points éclairés pour la position de référence du miroir galvanométrique restant étant telle qu'indiquée sur la figure, limitée par le contour 501. Une trajectoire rectiligne 500 légèrement oblique par rapport aux vecteurs de base $x$, $y$ du réseau périodique bidimensionnel de trous microscopiques permet de balayer l'ensemble du plan sans avoir recours à un deuxième miroir galvanométrique. Il est d'autant plus facile d'obtenir une zone 502 étendue que les points éclairés sont rapprochés les uns des autres. Comme dans le présent mode de réalisation il est préférable, afin de maximiser l'intensité d'éclairage, d'avoir des points éclairés nombreux, le présent mode de réalisation est particulièrement bien adapté à l'utilisation de cette technique. Toutefois, il est également possible d'utiliser une trajectoire rectiligne dans un mode de réalisation utilisant un réseau de microlentilles, à condition que les points éclairés soient suffisamment nombreux.

De même, il est possible d'utiliser les deux miroirs galvanométriques commandés en quadrature de sorte que la trajectoire de l'image d'un point 504 se déplace sur un cercle 505, et de modifier progressivement le diamètre de ce cercle de manière à ce que la trajectoire parcourue pendant une acquisition d'image soit une spirale. Si les trous microscopiques sont suffisamment nombreux et proches les uns des autres l'ensemble du plan est balayé. L'avantage de cette solution est que le mouvement du point éclairé est à vitesse à peu près constante, toutefois ce type de balayage tend à générer des suréclairages suivant des lignes parallèles aux vecteurs directeurs du réseau de trous microscopiques.

Ce mode de réalisation a l'avantage de ne pas nécessiter un faisceau laser. Il a également l'avantage de permettre une modification aisée des longueurs d'onde d'excitation et d'émission de la fluorescence dans l'ensemble du domaine visible et UV. Par contre, la faiblesse de l'éclairage limite la vitesse d'imagerie.

Ce second mode de réalisation peut être combiné avec le premier dans un même appareil, des obturateurs pouvant être utilisés pour passer d'un mode d'éclairage à un autre.

## Mode de réalisation avec une réflexion supplémentaire du faisceau d'éclairage sur le miroir mobile

La figure 20 illustre un autre mode de réalisation, qui présente l'avantage d'être peu coûteux. En effet il utilise un éclairage non cohérent, et il nécessite moins de réglages ou d'éléments spécifiques que le mode de réalisation précédent. Il utilise un seul miroir galvanométrique et une seule face de ce miroir, et il utilise un réseau de miroirs microscopiques.

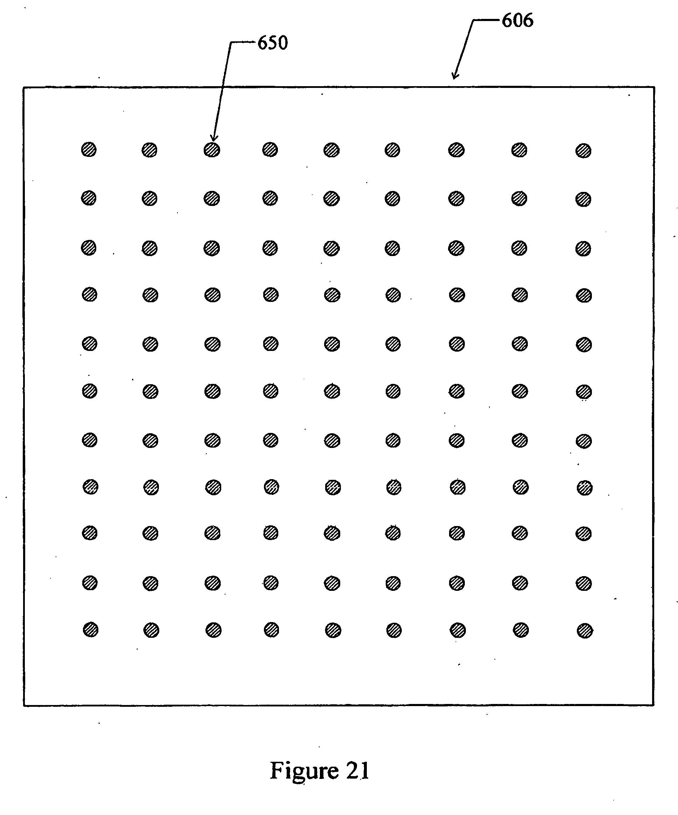

Le faisceau d'excitation FX est un faisceau non cohérent produit par exemple par une lampe à arc au Xénon équipée d'un collecteur ou d'un ensemble optique permettant la génération d'un éclairage de Köhler. Il est filtré par un filtre passe-bande étroit qui sélectionne la longueur d'onde d'excitation de la fluorescence. Il parvient au dispositif de balayage en 600. Le faisceau d'éclairage ou d'excitation FX est réfléchi par le miroir dichroïque 601 puis par le séparateur de faisceau polarisant 602. Le faisceau d'éclairage FX est ensuite réfléchi par le miroir galvanométrique 603, traverse la lame quart d'onde 604 dont l'axe neutre est à 45 degrés du plan de la figure, traverse la lentille 605 et parvient au réseau de miroirs microscopiques 606 placés dans le plan focal image de la lentille 605. Le réseau de miroirs microscopiques 606 est du type représenté sur la figure 21 et il est constitué par exemple d'un ensemble de miroirs microscopiques (par exemple 650) formant une matrice carrée, sur une vitre de verre transparente traitée antiréflexion. Le réseau de miroirs microscopiques peut également être à maille hexagonale, ce qui permet d'améliorer l'efficacité du système. Les miroirs microscopiques peuvent être obtenus par exemple par litographie, chaque miroir étant constitué d'une couche réfléchissante déposée sur la vitre 606, la vitre étant de préférence traitée antiréflexion. La couche réfléchissante peut par exemple être une couche d'aluminium. On peut aussi utiliser des miroirs constitués d'une alternance de couches d'indices différents, et qui peuvent ainsi être sélectifs en longueur d'onde. La partie du faisceau d'éclairage FX qui est réfléchie par les miroirs microscopiques se présente sous la forme d'une pluralité de sous-faisceaux d'éclairage FX2. Ces sous-faisceaux d'éclairage FX2 retraversent la lentille 605, la lame quart d'onde 604, et sont réfléchis par le miroir galvanométrique 603. Les sous-faisceaux d'éclairage FX2 traversent le séparateur de faisceau polarisant 602 puis la lentille 608 et la lentille de tube 609. Ils traversent l'objectif 610 et sont focalisés en une pluralité de points d'éclairage FXO sur l'objet fluorescent observé 611. Les sous-faisceaux lumineux FE réémis, par fluorescence des points éclairés de l'objet fluorescent traversent l'objectif 610, la lentille de tube 609, la lentille 608, le séparateur de faisceau polarisant 602. Les sous-faisceaux lumineux FE sont réfléchis par le miroir galvanométrique 603, traversent la lame quart d'onde 604 et la lentille 605, et parviennent au réseau de miroirs microscopiques 606 qui constitue alors le premier système de filtrage spatial. La partie des sous-faisceaux lumineux FE qui sont réfléchis par ce réseau de miroirs microscopiques constitue la pluralité de sous-faisceaux à détecter FD. Ces sous-faisceaux à détecter FD traversent la lentille 605, la lame quart d'onde 604, sont réfléchis par le miroir galvanométrique 603, sont réfléchis par le séparateur de faisceau polarisant 602, traversent le miroir dichroïque 601 et la lentille 612, puis parviennent au capteur CCD 613 situé dans le plan focal image de la lentille 612 qui est confondu avec le second plan image P2. L'image formée dans le plan ou se trouve le capteur 613 peut également être observée à l'aide d'un oculaire.

Le plan focal 607 de la lentille de tube 609 est également un plan focal de la lentille 608. L'autre plan focal de la lentille de tube 609 est de préférence confondu avec le plan focal image de l'objectif 610. De préférence le miroir galvanométrique 603 est dans un plan focal commun des lentilles 605, 608 et 612. Le réseau de miroirs microscopiques 606 est dans un plan focal de la lentille 605 confondu avec le premier plan image P1. Le capteur CCD 613 est dans un plan focal de la lentille 612. Par exemple, les lentilles 609, 608, 605, 612 peuvent avoir une distance focale de 200 mm, l'objectif 610 peut être un objectif Nikon à immersion x100 d'ouverture 1,4 . Dans ce cas le réseau 606 peut par exemple être formé de miroirs microscopiques dont le diamètre est de 30 microns, la distance entre deux points adjacents étant par exemple de 150 microns. Le miroir dichroïque 601 réfléchit la longueur d'onde du faisceau d'excitation et laisse passer la longueur d'onde d'émission fluorescente. La lame d'onde 604 sert à modifier la polarisation des faisceaux de sorte par exemple que la pluralité de sous-faisceaux à détecter FD soit réfléchie par le séparateur polarisant 602 alors que la pluralité de sous-faisceaux lumineux FE le traverse.

Le miroir galvanométrique 603 peut par exemple être mobile en rotation autour d'un axe situé dans le plan de la figure. Dans ce cas, le réseau de miroirs microscopiques 606 doit être orienté de manière à ce que la trajectoire d'un point éclairé dans l'objet soit légèrement oblique par rapport à un vecteur directeur du réseau périodique de points éclairés, comme décrit par la trajectoire 500 de la figure 19, ce qui permet de scanner l'ensemble de l'objet à l'aide d'un seul miroir galvanométrique.

Le réseau de miroirs microscopiques 606 est placé dans un plan P1 qui constitue le premier plan image, dans lequel est placé le premier système de filtrage spatial. Le réseau de miroirs 606 forme à la fois le premier système de filtrage spatial, qui filtre le faisceau lumineux FX provenant de l'échantillon pour donner le faisceau à détecter FD, et le second système de filtrage spatial, qui divise le faisceau d'éclairage FX en une pluralité de sous-faisceaux FX2.

Comme dans le premier mode de réalisation, il aurait été possible de mettre le miroir galvanométrique 603 dans le plan focal image de l'objectif ou à proximité de ce plan. On a introduit les lentilles relais 609 et 610 pour illustrer la possibilité d'une telle construction, qui se prête particulièrement bien à la réalisation d'un dispositif de balayage adaptable à tout type de microscope.

La position du réseau 606 doit être ajustée en rotation autour de l'axe optique de manière à ce qu'un vecteur directeur du réseau de points éclairés dans l'objet observé soit légèrement oblique par rapport à la trajectoire 500 d'un point éclairé lorsque le miroir 603 tourne, comme indiqué par la figure 19. La position du réseau 606 doit être ajustée en translation dans le sens de l'axe optique de manière que le réseau 606 soit conjugué au CCD 613. Ces réglages sont aisément réalisables.

Le présent mode de réalisation présente l'avantage d'être peu coûteux et de nécessiter peu de réglages. Il est bien adapté à une version bas coût de l'invention, destinée à l'observation en fluorescence. L'appareil peut être muni d'un système de déplacement vertical de l'échantillon, auquel cas la qualité de l'image obtenue peut être améliorée par une déconvolution tridimensionnelle. Une telle déconvolution permet d'améliorer la résolution et de supprimer la plupart des défauts dus aux réflexions parasites dans le système, et éventuellement de compenser les défauts liés à la faiblesse de la distance séparant les points du réseau 606. Elle nécessite la mesure préalable de la PSF ("Point Spread Function" en anglais) qui peut être effectuée par imagerie d'une microbille fluorescente, selon une technique connue.

Le dispositif à balayage confocal peut comprendre l'ensemble des éléments contenus dans la zone limitée par le pointillé 614. Dans ce cas l'utilisateur doit simplement connecter au système un microscope et un oculaire ou une caméra. Toutefois, le dispositif à balayage confocal peut aussi ne comprendre que les éléments compris dans la zone limitée par le pointillé 615. Dans ce cas l'utilisateur est libre de choisir les lentilles 608 et 612, ce qui lui permet par exemple de modifier le grossissement du système par un choix approprié de la lentille 612. Il est également possible de rajouter une lentille dans le plan 607 afin de ramener à l'infini le plan focal image du microscope, dans le cas ou celui-ci n'est pas exactement placé dans un plan focal de la lentille de tube 609.

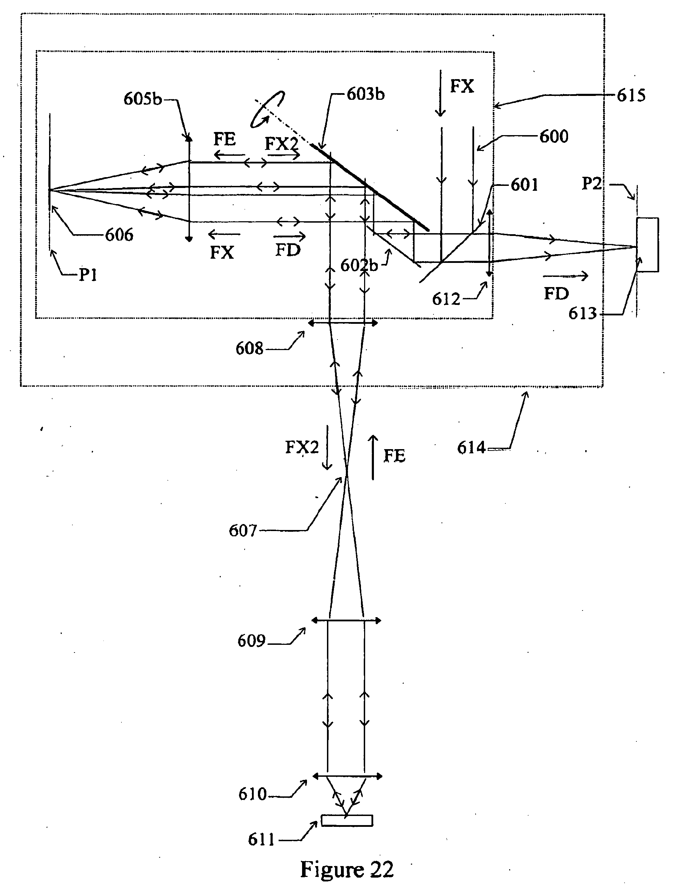

Pour éviter l'usage d'un séparateur de faisceau polarisant et la perte d'intensité lumineuse qui en résulte, le dispositif peut être modifié comme indiqué sur la figure 22. Sur la figure 22 les divers éléments du dispositif sont les mêmes que sur la figure 20, les éléments 602,603 et 605 étant toutefois remplacés respectivement par les éléments 602b, 603b et 605b. Le miroir polarisant 602 est remplacé par le miroir simple 602b sur lequel se réfléchissent le faisceau d'éclairage FX et la pluralité de sous-faisceaux à détecter FD. Le miroir galvanométrique 603b est à peu près deux fois plus long que le miroir 603, et la lentille 605b est également plus grande que la lentille 605. L'axe optique de la lentille 605b est décalé par rapport à l'axe optique du faisceau d'éclairage FX provenant du miroir galvanométrique, de sorte que le faisceau d'éclairage FX arrive en biais sur le réseau de miroirs microscopiques 606. Les sous-faisceaux d'éclairage FX2 réfléchis par le réseau 606 parviennent alors sur une zone du miroir 603b distincte de celle qui était éclairée par le faisceau d'éclairage FX. Après réflexion sur 603b, les sous-faisceaux d'éclairage FX2 passent à coté du miroir 602b. La pluralité de sous-faisceaux lumineux FE provenant de l'échantillon suit le trajet inverse de sorte qu'après réflexion sur le réseau de trous microscopiques les sous-faisceaux à détecter FD parviennent au capteur. Le dispositif de la figure 22, pour sa simplicité de réalisation et son efficacité, constitue le mode de réalisation préféré pour l'observation en fluorescence avec un éclairage incohérent.

Un avantage du présent mode de réalisation est que le faisceau d'éclairage FX est réfléchi une première fois sur un miroir galvanométrique avant de parvenir au réseau de miroirs microscopiques. Il est ensuite réfléchi une seconde fois (faisceaux FX2) avant de parvenir à l'objet observé. De ce fait, la zone éclairée par le faisceau d'éclairage sur le réseau de miroirs microscopiques se déplace, alors que la zone éclairée dans l'objet observé reste fixe. Ceci diffère des précédents modes de réalisation multipoints, dans lesquels la zone éclairée dans le plan image se déplace, et donc la zone éclairée dans l'objet observé ne peut être rendue fixe que si elle limitée par un diaphragme situé dans le plan image, ce qui cause une déperdition d'énergie, ou en déplaçant les points d'éclairage sur des trajectoires très courtes, ce qui ne résout que partiellement le problème et pose des problèmes de synchronisation.

La synchronisation du système peut être simplifié en utilisant le déplacement de la zone éclairée sur le réseau de miroirs microscopiques. En effet, lorsque le faisceau d'éclairage, se déplaçant sur le réseau de miroirs microscopiques, sort de la zone couverte de miroirs microscopiques, alors l'objet observé cesse d'être éclairé. Il suffit de faire coïncider cette extinction avec les positions extrêmes du miroir galvanométrique pour supprimer l'inhomogénéité d'éclairage causée par le ralentissement du déplacement des miroirs aux alentours des points extrêmes (stationnaires) de leur trajectoire.

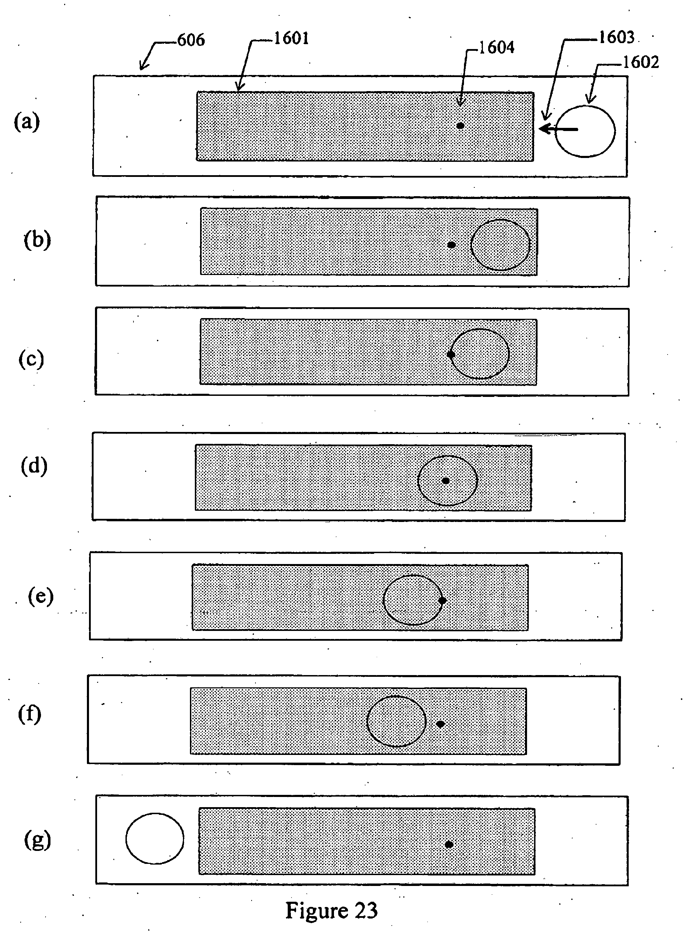

La figure 23 illustre ce principe de fonctionnement. La figure 23 (a) montre la plaque 606 sur laquelle se trouve un réseau de miroirs microscopiques 1601. On a également représenté la zone 1602 éclairée par le faisceau d'éclairage lorsque le miroir galvanométrique 603 atteint une position extrême de son mouvement d'oscillation. Dans la position indiquée sur la figure 23(a) la zone éclairée est en-dehors de la zone couverte de miroirs microscopiques, le faisceau d'éclairage traverse donc la plaque sans être réfléchi, et l'objet observé n'est pas éclairé. Dans cette position la plaque 606 permet donc de supprimer le faisceau d'éclairage avant qu'il ne parvienne à l'objet observé. La zone 1602 se déplace sur la plaque 1600 mais dans la position extrême représentée sur la figure 23(a) sa vitesse de déplacement s'annule avant que le déplacement de la zone éclairée reprenne dans la direction indiquée par la flèche 1603. La zone éclairée 1602 traverse alors la zone 1601 couverte de miroirs microscopiques, à une vitesse à peu près constante, comme indiqué par les figures 23 (b) à 23(f). Pendant cette phase l'objet observé est éclairé. Lorsque la position du miroir mobile atteint l'extrême inverse de son mouvement d'oscillation, la zone éclairée sort de la zone couverte de miroirs microscopiques et sa vitesse s'annule, comme indiqué par la figure 23 (g). L'objet observé cesse à nouveau d'être éclairé. La zone éclairée 1602 repart alors dans la direction opposée pour une autre traversée de la zone 1601 couverte de miroirs microscopiques. Si une caméra est utilisée pour la détection du signal, le mouvement du miroir galvanométrique peut être synchronisé avec l'acquisition par la caméra. Pendant le temps d'exposition de la caméra, la zone éclairée 1602 peut par exemple effectuer une ou plusieurs traversées complètes de la zone 1601.

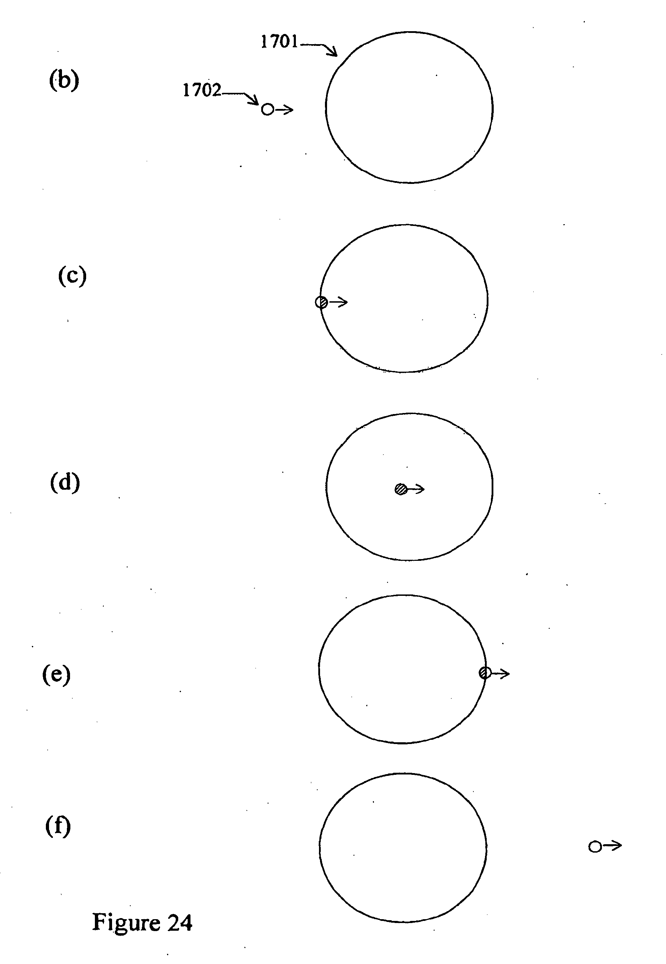

On a indiqué sur la figure 23 un miroir microscopique particulier 1604. La figure 24 illustre le mouvement dans l'objet de l'image géométrique 1702 du miroir 1604 , et donc du point éclairé correspondant dans l'objet. Le miroir 1604 peut être assimilé à un point du premier plan image P1, dans lequel se trouve la vitre 606. La figure 24(b) représente la position de l'image géométrique 1702 du miroir microscopique 1604, ainsi que ia zone observée 1701 qui est l'image géométrique de la zone éclairée 1602 sur la plaque 606, ce pour une position de la zone éclairée 1602 sur la plaque 606 qui est celle représentée par la figure 23(b). Le point 1702 se déplace suivant la direction indiquée par une flèche mais n'a pas encore atteint la zone 1701, n'est donc pas encore éclairé. Ceci traduit le fait que sur la figure 23(b) la zone éclairée 1602 n'a pas encore atteint le point 1604. Le point 1702 parvient ensuite à la zone observée 1701 comme indiqué sur la figure 24(c) et commence donc à être éclairé, ce qui traduit le fait que la zone éclairée 1602 parvient au point 1604 comme indiqué sur la figure 23(c). Le point 1702 est alors éclairé et traverse la zone 1701 à vitesse constante, comme indiqué sur la figure 24(d), ce qui traduit le fait que le point 1604 est dans la zone éclairée comme indiqué par la figure 23(d). Le point 1702 parvient à la limite de de la zone observée, comme indiqué sur la figure 24(e) qui traduit le fait que le point 1604 est à la limite de la zone éclairée 1602, comme indiqué sur la figure 23(e). Le point 1702 sort alors de la zone observée et cesse alors d'être éclairé, comme indiqué sur la figure 24(f), ce qui traduit le fait que la zone éclairée 1602 a dépassé le point 1604, comme indiqué sur la figure 23(f). Le point 1702 continue alors à se déplaçer à vitesse constante puis sa vitesse s'annule et il change de direction pour revenir vers la zone observée. Lorsque la vitesse de déplacement du point 1702 s'annule, la vitesse de déplacement de la zone éclairée 1602 sur la plaque 606 s'annule également, et cette zone est donc dans une des positions illustrées par les figures 23(a) et 23(g). Lorsque la vitesse de déplacement du point 1702 s'annule, la totalité du faisceau d'éclairage est donc supprimée. La plaque 606 agit comme un dispositif de limitation supprimant la partie du faisceau d'éclairage qui passe en-dehors d'une surface de sélection coïncidant avec la zone 1601 couverte par le réseau de miroirs microscopiques. Lorsque la vitesse de déplacement du point 1702 (ou de tout autre point équivalent) s'annule, la totalité de la zone 1602 éclairée par le faisceau d'éclairage est en-dehors de la surface de sélection 1601, et le faisceau d'éclairage 1601 est entièrement supprimé. La zone observée est donc traversée successivement par un ensemble de points éclairés qui la traversent chacun à vitesse constante. Les variations de vitesse des points éclairés sont effectivement supprimées par cette méthode.

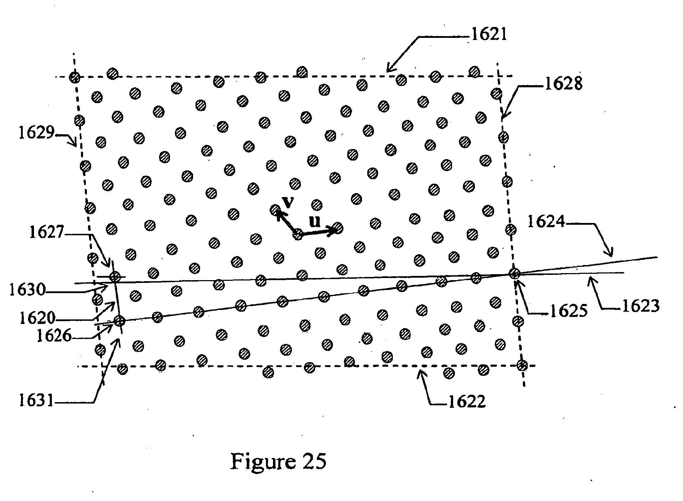

La figure 25 représente l'allure d'une partie du réseau de miroirs microscopiques réfléchissants 1601, dans le cas d'un réseau à maille hexagonale. Les vecteurs de base du réseau sont u et v, comme représentés sur la figure. Ce réseau comprend un ensemble de miroirs microscopiques réfléchissants, représentés en grisé. La droite 1623 passe par le centre du miroir microscopique 1625 et est orientée dans le sens du déplacement de la zone illuminée 1602 sur le réseau, qui est également le sens du déplacement de l'image géométrique sur le réseau d'un point fixe de l'objet observé. La droite 1624 est dirigée selon un vecteur de base du réseau et passe par le centre du miroir microscopique 1625. Le miroir microscopique 1627 est le premier miroir se trouvant sur une droite 1631 orthogonale à la droite 1624, et passant par le centre du miroir microscopique 1626. Le point 1630 est l'intersection des droites 1624 et 1623. On note :

D1 la distance entre le centre du miroir 1627 le point 1630.
D2 la distance entre le centre du miroir 1626 et le centre du miroir 1627.
N le nombre de miroirs microscopiques se trouvant sur la droite 1624 entre les points 1625 et 1626, y compris ces points.
Pour que les conditions de balayage soient optimales il faut que N soit suffisamment grand et vérifie en outre l'inégalité D1=D2/N. Par ailleurs, le réseau étant étendu au-delà des points indiqués sur la figure, le nombre total de points sur la droite 1624 doit être un multiple de N, et les limites du réseau doivent être orthogonales à la droite 1624.

Plus la zone 1601 est étendue dans le sens du déplacement de la zone éclairée 1602, plus la déperdition d'énergie lumineuse, liée à la non-réflexion du faisceau sur la plaque 606 aux points extrêmes du déplacement de la zone éclairée sur la plaque 606, peut être minimisée. Toutefois cette technique cause toujours une certaine déperdition d'énergie. Cette déperdition peut être évitée par exemple en modifiant le mouvement du miroir galvanométrique, et donc la trajectoire d'un point géométrique 1702 image du point 1604, de telle manière que la zone éclairée 1602 reste dans la zone 1601 couverte par le réseau de miroirs microscopiques. Toutefois, si le changement de direction du point 1702 aux points extrêmes de sa trajectoire n'est pas suffisamment rapide, cette technique crée des inhomogénéités d'éclairage dans l'objet observé et donc une variation de la "Point Spread Function" (PSF) tridimensionnelle en fonction du point considéré. Du fait que le réseau de miroirs microscopiques est périodique, la dépendance de cette PSF en fonction du point considéré est elle-même périodique. Les inhomogénéités d'éclairage peuvent être corrigées par des algorithmes de traitement d'image appropriés.

Les algorithmes de déconvolutions usuels consistent à calculer en chaque point de l'objet une valeur:

$$V(r_0) = \iiint D(r - r_0) I(r) d^3r$$

ou $r_0$ est le vecteur position du point considéré, $r$ est un vecteur position variable, ou la fonction de déconvolution $D(r - r_0)$ permet d'inverser la PSF, et ou $I(r)$ est l'image non déconvoluée obtenue à partir d'une série d'images confocales bidimensionnelles obtenues chacune pour un plan observé différent, un positionneur piézoélecrtique suivant l'axe $z$ (vertical) étant utilisé pour l'acquisition d'une telle série d'images. Ce calcul peut se faire dans le domaine fréquentiel à l'aide de techniques de transformée de Fourier tridimensionnelles connues, ou dans le domaine spatial à l'aide de techniques de filtrage.

Lorsque les inhomogénéités d'éclairage ne sont pas trop fortes, ou lorsque le diamètre des miroirs microscopiques est faible (inférieur à une demi tache d'Airy), les inhomogénéités d'éclairage peuvent être compensées par une multiplication de l'image tridimensionnelle $I(r)$ par une fonction appropriée $C(r)$, périodique suivant les mêmes vecteurs de base que le réseau de points d'éclairage dans l'objet observé, et compensant directement les variations d'illumination. Cette fonction $C(r)$ peut être obtenue par exemple en observant un objet plat uniformément fluorescent, dont on obtient alors une image non déconvoluée $I_0(r)$. On a alors $C(r) = \dfrac{1}{I_0(r)}$. La multiplication de $I(r)$ par $C(r)$ peut être suivie ou non par une déconvolution du type habituel.

Dans le cas le plus général, la dépendance spatiale de la fonction de déconvolution transforme l'équation décrivant la déconvolution en:

$$V(r_0) = \iiint D(r_0^h ; r - r_0) I(r) d^3 r$$

ou $D(r_0^h ; r - r_0)$ est dépendante de la composante horizontale $r_0^h$ du vecteur $r_0$ mais est périodique en cette variable, à savoir:

$$D(r_0^h ; r - r_0) = D(r_0^h + ku + lv ; r - r_0)$$

ou $u$ et $v$ sont les vecteurs de base du réseau de points d'éclairage dans l'objet observé et ou $k$ et $l$ sont des nombres entiers arbitraires. La fonction $D(r_0^h ; r - r_0)$ peut être obtenue sur une maille du réseau périodique de points d'éclairage, ce qui permet ensuite de l'obtenir sur l'ensemble de l'objet. En chaque point d'une maille du réseau, elle peut être obtenue en inversant, dans le domaine fréquentiel (c'est-à-dire en représentation de Fourier), une PSF mesurée en ce point en déplaçant une microbille fluorescente autour du point, la valeur $P(r)$ de la PSF étant la valeur d'intensité mesurée au point de mesure lorsque la position de la microbille par rapport au point de mesure est définie par le vecteur $r$.

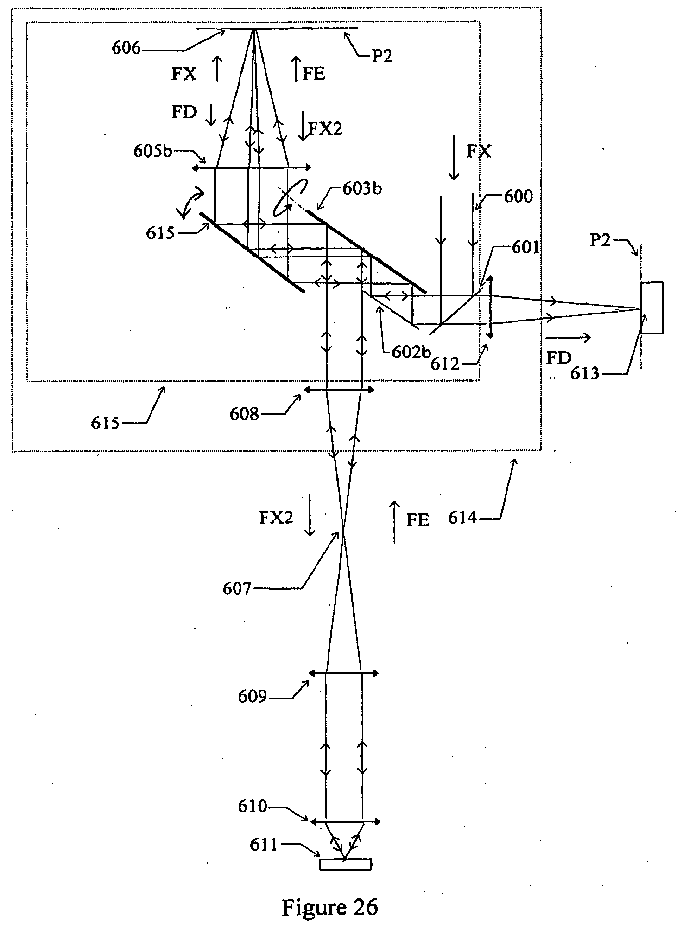

Le dispositif de la figure 22 peut être complété par un deuxième miroir galvanométrique, de manière à pouvoir effectuer un balayage bidimensionnel comme dans le deuxième mode de réalisation. Le schéma résultant est montré sur la figure 26 ou on a ajouté un miroir galvanométrique 615 et déplacé en conséquence les autres éléments. L'axe de rotation du miroir 615 est orthogonal à celui du miroir 603b. En commandant en quadrature les deux miroirs, il devient possible de faire suivre une trajectoire circulaire ou bidimensionnelle à chaque point éclairé. Cette trajectoire est par exemple similaire à la trajectoire 505 de la figure 19. L'avantage d'une telle trajectoire est qu'elle ne cause aucune déperdition d'énergie. Toutefois, cette trajectoire génère des inhomogénéités d'éclairage périodiques, qui peuvent être compensées comme précédemment en utilisant une fonction de déconvolution dépendant du point considéré ou en multipliant l'image non déconvoluée par une fonction de compensation des inhomogénéités d'éclairage.

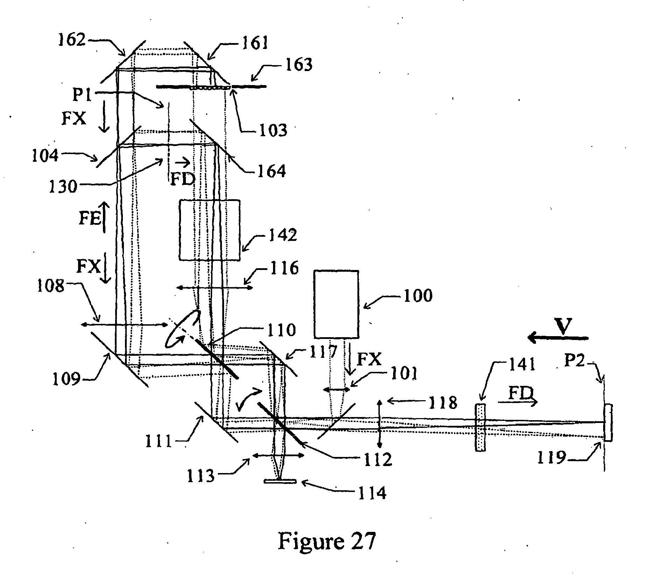

Une technique similaire peut être utilisée en éclairage laser, le faisceau d'éclairage devant alors être réfléchi une première fois sur les miroirs galvanométriques avant de parvenir au réseau de microlentilles. Un tel dispositif , dérivé de celui de la figure 6, est représenté sur la figure 27. Des miroirs 162 et 161 ont été ajoutés pour modifier la trajectoire du faisceau d'éclairage, et le laser 100 et la lentille 101 ont été placés en amont des miroirs galvanométriques. Le miroir 115 a été remplacé par un séparateur de faisceau dichroïque 164. De préférence, le faisceau laser issu de 100, représenté en pointillés épais, est focalisé par la lentille 101 sur le miroir galvanométrique 112, qui est seul mobile et qui est également dans un plan focal de la lentille 116. Le mouvement angulaire du miroir galvanométrique se traduit alors par un déplacement du faisceau d'éclairage sur le réseau de microlentilles 103. Si le réseau de microlentilles 103 est prolongé par un diaphragme absorbant 163, alors il suffit d'amener le faisceau laser d'éclairage entièrement sur le diaphragme 163, pour générer une extinction. Ceci permet donc comme précédemment d'éteindre le faisceau aux extrémités de la trajectoire.

**Mode de réalisation simplifié avec un dispositif de filtrage spatial constitué d'un réseau de trous micoscopiques.**

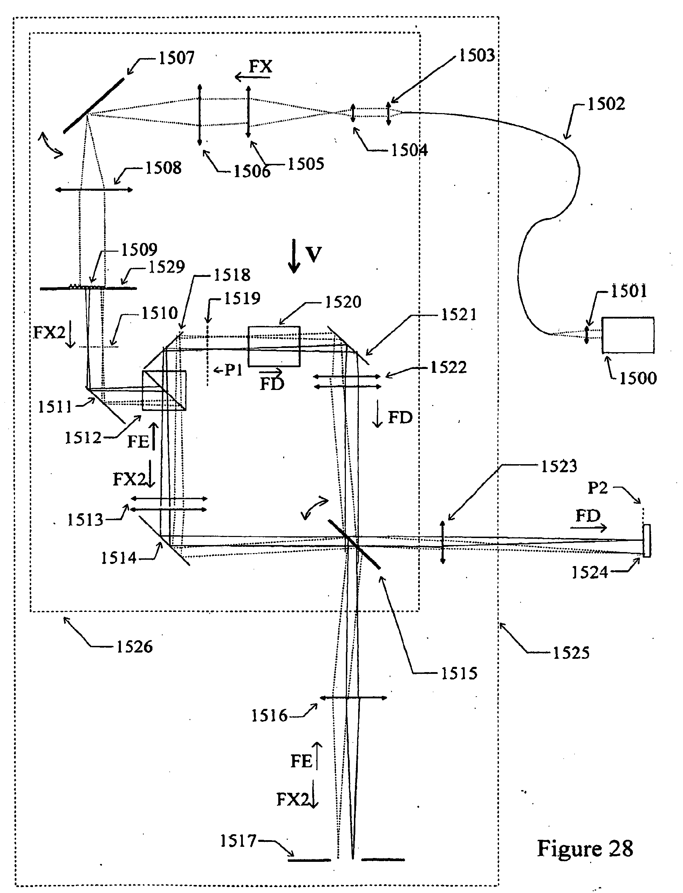

Le mode de réalisation de la figure 28 est un mode de réalisation simplifié en lumière laser, ne comprenant qu'un seul miroir galvanométrique, et utilisant comme système de filtrage spatial un réseau de trous microscopiques. Du fait de sa simplicité, en particulier en termes de synchronisation et en ce qui concerne le nombre de miroirs galvanométriques utilisés, il constitue un mode de réalisation préféré en éclairage laser.

Le faisceau d'éclairage FX issu du laser 1500 est couplé par l'intermédiaire d'une lentille 1501 à une fibre optique 1502 qui le transporte jusqu'au dispositif de balayage. Il est alors transformé en un faisceau parallèle par les lentilles 1503, 1504,1505. Il est refocalisé par la lentille 1506 sur le miroir galvanométrique 1507 qui le réfléchit. Il traverse la lentille 1508 dont le plan focal objet est sur le miroir 1507. Il parvient au réseau de microlentilles 1509 placé dans le

plan focal image de la lentille 1508.

Il est divisé par ce réseau de micro-lentilles en une pluralité de sous-faisceaux d'éclairage FX2, qui est ensuite réfléchie par le miroir 1511 puis par le miroir dichroïque 1512. Il traverse la lentille 1513 formée de deux lentilles séparées dont on peut ajuster la séparation afin d'ajuster précisément la distance focale. Il est réfléchi par le miroir 1514 puis par le miroir galvanométrique 1515, traverse une lentille 1516 puis un diaphragme 1517. La lentille 1516 a un plan focal sur le miroir 1515 et un autre plan focal sur le diaphragme 1517. La lentille 1513 a un plan focal dans le plan de focalisation 1510 des sous-faisceaux issus du réseau de microlentilles 1509, et un autre plan focal sur le miroir galvanométrique 1515. Le diaphragme 1517 est monté dans un plan image du microscope, et le faisceau traversant ce diaphragme parvient ensuite, par la lentille de tube et l'objectif, à l'échantillons, ces éléments n'étant pas représentés sur le dessin.

Le faisceau lumineux FE émis par fluorescence par l'échantillon parvient à son tour au plan image ou se trouve le diaphragme 1517, via l'objectif et la lentille de tube. Il est réfléchi par le miroir galvanométrique 1515, par le miroir 1514, traverse la lentille 1513 et le cube dichroïque 1512, est réfléchi par le miroir 1518, traverse le réseau de trous microscopiques 1519.

Le faisceau à détecter FD issu de ce réseau de trous microscopiques traverse ensuite l'ensemble de miroirs 1520 représenté sur la figure 8 en vue suivant la direction V. Il est réfléchi par le miroir 1521, traverse la lentille 1522 identique à la lentille 1513, est réfléchi par la seconde face du miroir galvanométrique 1515, traverse la lentille 1523, et est focalisé sur un capteur 1524 situé dans un plan focal image de la lentille 1523.

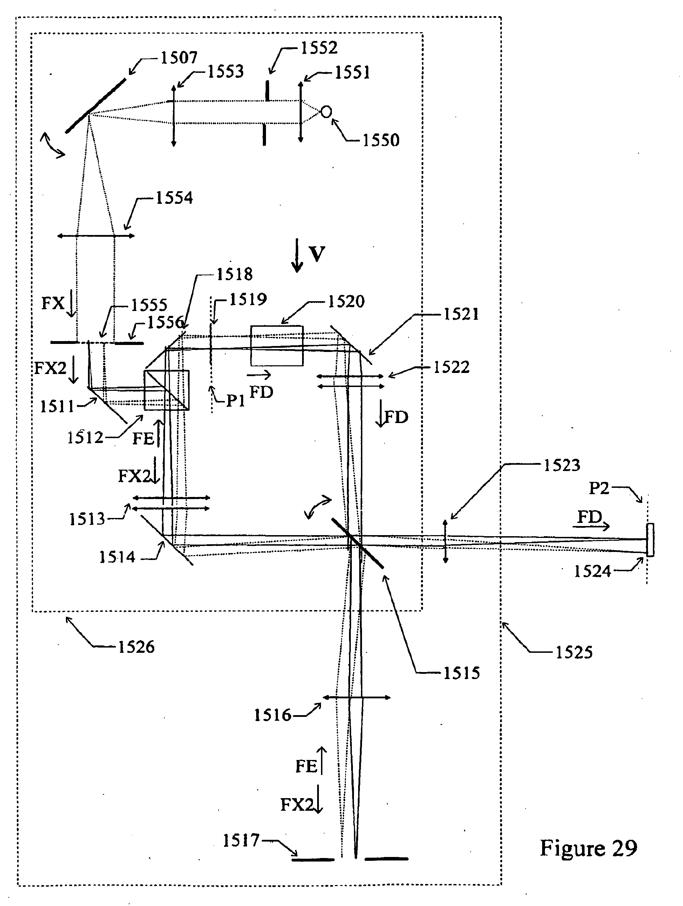

Le dispositif peut être modifié comme indiqué sur la figure 29 de manière à permettre l'observation en lumière blanche réfléchie. Sur le dispositif de la figure 29 le faisceau d'éclairage FX provenant d'une source de lumière incohérente 1550, par exemple une lampe à arc au Xénon, traverse ensuite une lentille 1551 et un diaphragme 1552, puis une lentille 1553. Le faisceau d'éclairage traverse ensuite la lentille 1554 et parvient au réseau de trous microscopiques 1555 qui le sépare en une pluralité de sous-faisceaux et qui est placé dans un plan focal image commun des lentilles 1554 et 1513. Le cube dichroïque 1512 est remplacé par un cube séparateur neutre en longueur d'onde, par exemple semi-réfléchissant. Le dispositif ainsi modifié permet l'observation en lumière réfléchie. Il constitue un mode de réalisation préféré pour l'observation en lumière réfléchie, pour laquelle il est préférable au dispositif de la figure 22 qui ne peut pas éliminer totalement la "stray light".

Que l'on utilise la lumière blanche réfléchie ou la fluorescence excitée par laser, les points d'éclairage dans l'objet doivent être suffisamment rapprochés les uns des autres et le réseau de points d'éclairage dans l'objet doit être correctement orienté par rapport à la direction du déplacement de ces points qui est généré par le mouvement du miroir galvanométrique 1515. Ceci permet l'utilisation de la technique de balayage à un seul miroir, sur le principe déjà décrit sur la figure 19. Le miroir galvanométrique 1507 a pour vocation de permettre le déplacement de la zone éclairée sur le dispositif de séparation du faisceau en sous-faisceaux, qui peut être indifféremment le réseau de lentilles 1509 ou le réseau de points microscopiques 1555, de manière à pouvoir utiliser la technique décrite sur la figure 23, ou la partie transparente de la plaque transparente 1600 est maintenant remplacée par un diaphragme 1556 ou 1529, et ou la zone 1601 de cette plaque est remplacée par le réseau de trous microscopiques 1555 ou le réseau de microlentilles 1509. Le miroir galvanométrique 1507 doit être synchronisé avec le miroir galvanométrique 1515 et l'amplitude de son déplacement doit être appropriée, de manière à ce que la zone éclairée dans l'objet, correspondant à l'image géométrique de la zone éclairée dans le plan 1510 ou sur le réseau de trous microscopiques 1555, soit fixe.

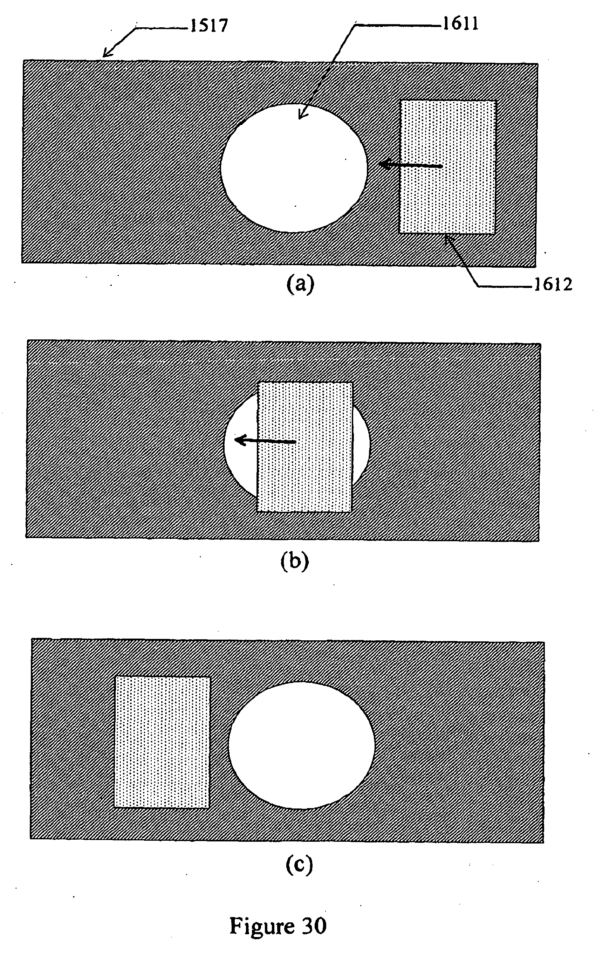

Il est également possible de ne pas utiliser le miroir 1507 ou de le remplacer par un miroir fixe. La technique de balayage de l'échantillon est alors modifiée et le diaphragme 1517 est utilisé pour délimiter la zone observée. La figure 30 illustre la technique de balayage qui peut alors être utilisée. Du fait du mouvement du seul miroir 1515, la zone éclairée sur l'échantillon se déplace. La figure 30 (a) représente le diaphragme 1517 comportant une ouverture 1611, ainsi que la zone éclairée 1612 qui est constituée d'un réseau de points microscopiques éclairés se déplaçant sur le diaphragme. Lorsque le miroir est dans une position extrême de son mouvement oscillant, la zone éclairée 1612 est dans la position indiquée par la figure 30 et la pluralité de sous-faiscaux d'éclairage est entièrement arrêtée par le diaphragme. Lorsque le miroir tourne, la zone éclairée 1612 se déplace et traverse l'ouverture du diaphragme comme indiqué sur la figure 30(b). La zone éclairée parvient alors de l'autre coté du diaphragme, comme indiqué sur la figure 30(c), et sa vitesse de déplacement s'annule alors. La vitesse de déplacement ne s'anulant que pour les positions extrêmes de la zone éclairée sur le diaphragme, dans lesquelles le faisceau d'éclairage est entièrement arrêté par le diaphragme, l'ouverture du diaphragme se trouve balayée par des points se déplaçant à vitesse à peu près constante. Le diaphragme 1517 constitue içi un dispositif de limitation arrêtant la partie du faisceau d'éclairage qui passe en dehors d'une surface de sélection constituée par son ouverture.

Plus la zone éclairée 1612 est étroite, plus la déperdition de lumière peut être minimisée. Néanmoins, plus cette zone est étroite plus la densité du réseau de points d'éclairage doit être élevée, ce qui limite l'étroitesse de la zone. En général, la solution consistant à utiliser le miroir 1507, bien que plus coûteuse, est techniquement préférable.

Le dispositif de balayage confocal peut par exemple comprendre l'ensemble des éléments contenus dans la zone délimitée sur la figure par le pointillé 1525. Dans ce cas l'utilisateur doit simplement relier au scanner une caméra, un microscope, et une source d'éclairage. Toutefois, le dispositif de balayage confocal peut également se limiter à l'ensemble délimité sur la figure par les pointillés 1526. Dans ce cas, l'utilisateur doit également relier au dispositif des lentilles 1516 et 1523 fournies séparément. L'avantage de cette solution est que la liaison se fait dans une zone afocale, ce qui la rend moins sensible aux erreurs de positionnement, et que les utilisateurs peuvent choisir les lentilles utilisées, ce qui leur permet par exemple de modifier le grossissement du système.

**Moyens pour modifier les caractéristiques de filtrage spatial et/ou les caractéristiques de division du faisceau d'éclairage en sous-faisceaux.**

Dans l'ensemble des modes de réalisation il est possible de modifier les caractéristiques de filtrage spatial et éventuellement les caractéristiques du système de division du faisceau en sous-faisceaux. Par exemple, le premier système de filtrage spatial peut être monté de manière amovible, pour être échangeable manuellement. Toutefois, il est souvent souhaitable que la modification du système de filtrage spatial puisse être commandée, par exemple à l'aide d'un moteur électrique.

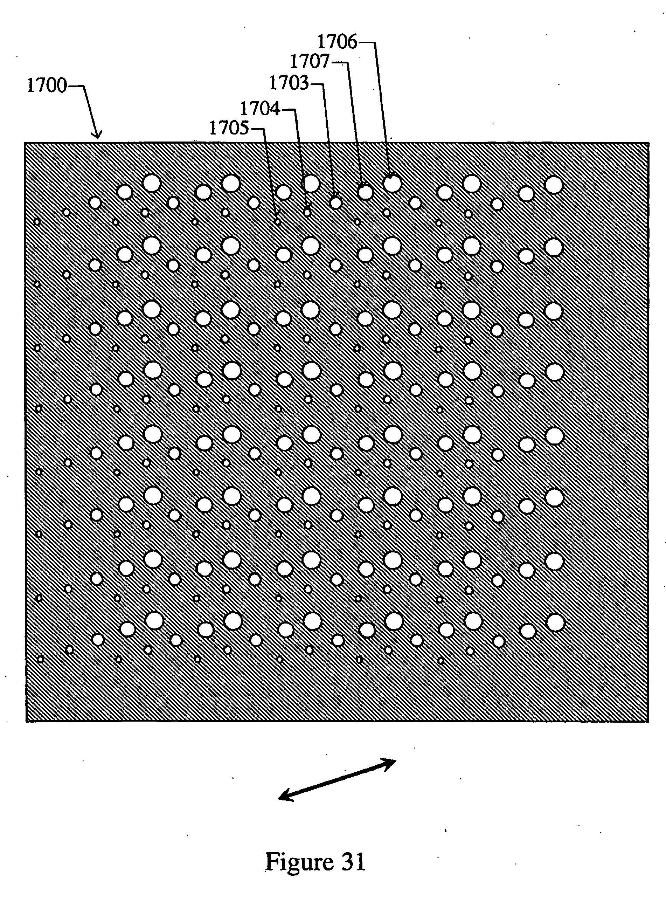

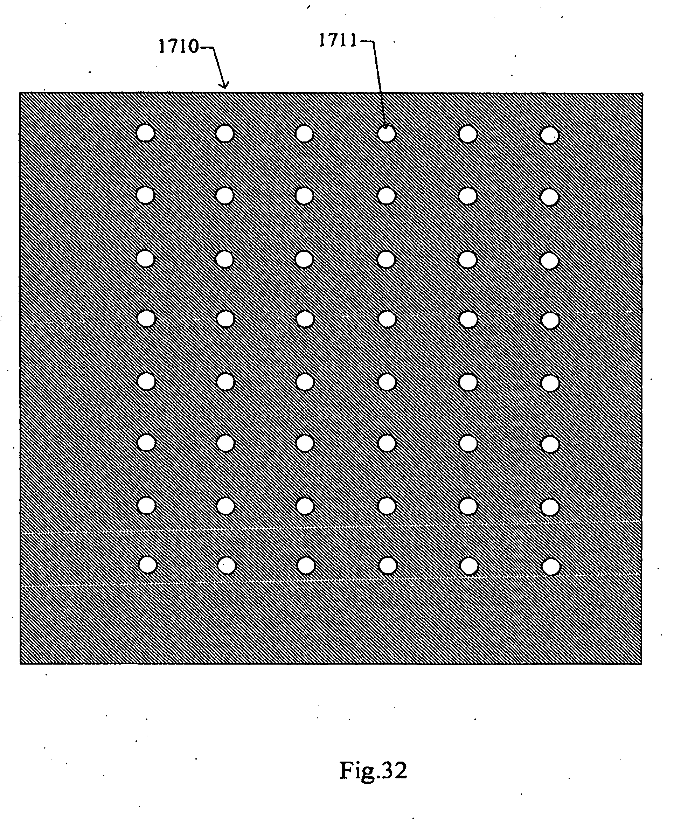

Par exemple, lorsque le système de filtrage spatial est un réseau de trous microscopiques, par exemple le réseau 130 de la figure 6 ou le réseau 1519 de la figure 29, il peut être constitué de deux plaques 1700 et 1710 glissant l'une contre l'autre, la position relative de ces plaques permettant de contrôler la taille des trous microscopiques. La première plaque 1700 est représentée sur la figure 31. Elle comporte par exemple les trous microscopiques 1703 à 1707. La deuxième plaque 1710 est représentée par la figure 32 et comporte par exemple le trou microscopique 1711. Lorsque les deux plaques 1700 et 1710 sont placées l'une contre l'autre, et lorsque le trou 1706 est amené en regard du trou 1711, le filtre spatial formé par l'ensemble des deux plaques est identique à celui qui serait formé par la plaque 1710 seule, chacun des trous microscopiques de la plaque 1710 étant en regard d'un trou de même diamètre de la plaque 1700. Lorsque la plaque 1700 est déplacée suivant la direction dé la flèche indiquée sur la figure 32, le trou 1707 peut être mis en regard du trou 1711. Le trou 1707 ayant un diamètre inférieur au trou 1711, le diamètre du trou centré sur 1711, dans l'ensemble formé des deux plaques 1700 et 1710, est limité par le trou 1707. L'ensemble constitué par les deux plaques 1700 et 1710 est alors un réseau de trous microscopiques, mais le diamètre de chaque trou de ce réseau est celui du trou 1707. En amenant successivement en regard du trou 1711 les trous 1703, 1704, 1705, il est possible de donner différentes valeurs au diamètre de chaque trou microscopique du réseau formé par l'assemblage des deux plaques 1700 et 1710 placées l'une contre l'autre. Chacune de ces deux plaques peut par exemple être obtenue par dépôt d'une couche métallique sur une vitre de verre, suivi d'une opétation de litographie optique permettant d'obtenir les trous microscopiques. Lorsque les deux plaques sont placées l'une contre l'autre, les couches métalliques des deux vitres doivent de préférence être en contact direct, une couche d'huile optique pouvant éventuellement faciliter leur mouvement relatif. Le mouvement relatif des deux plaques peut par exemple être commandé à l'aide d'un positionneur utilisant un moteur électrique pas à pas.

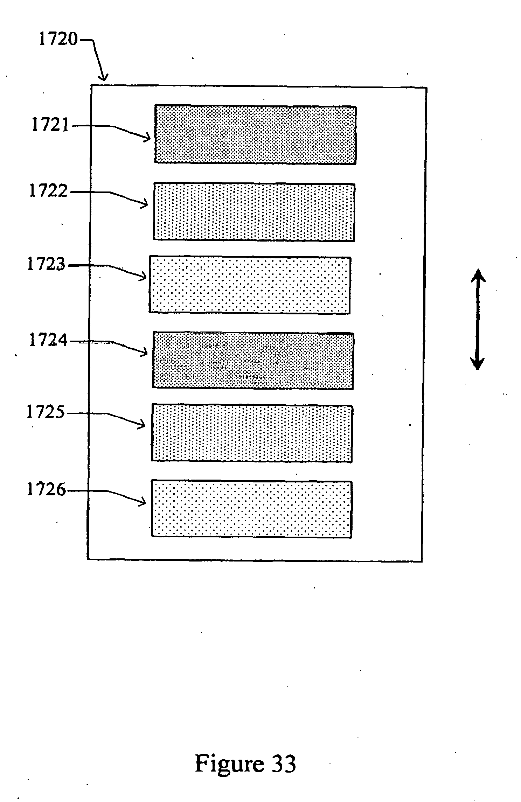

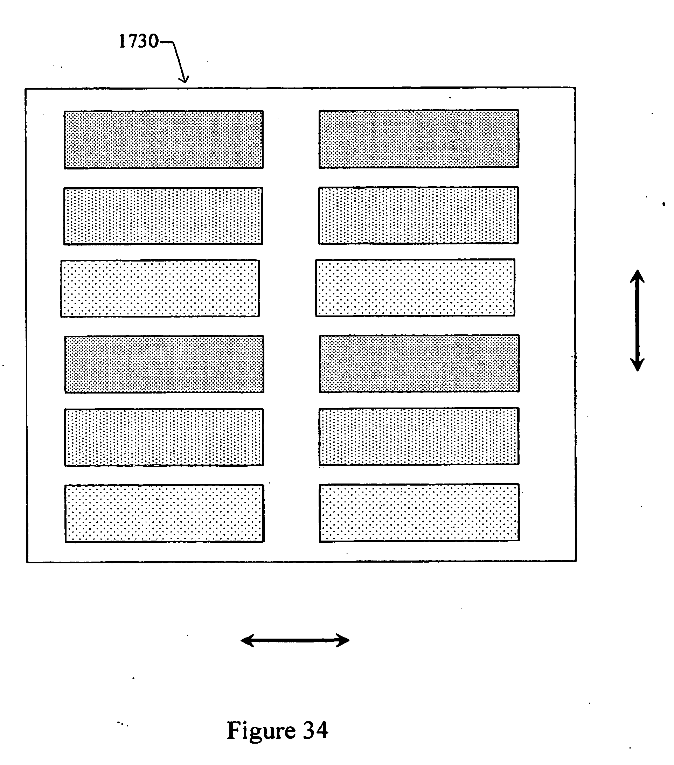

Lorsque le système de filtrage spatial est un réseau de miroirs microscopiques 606 comme sur la figure 22, il n'est pas possible d'utiliser la méthode précédente. Le système de filtrage spatial peut alors être constitué d'une plaque 1720 représentée sur la figure 33, et comportant plusieurs réseaux de miroirs microscopiques 1721 à 1726. La plaque 1720 peut être montée sur un dispositif de positionnement une dimension, comprenant de préférence un rail de guidage, motorisé à l'aide d'un moteur électrique, et permettant son déplacement dans le sens de la flèche indiquée sur la figure 33. En déplaçant la plaque suivant la flèche indiquée sur la figure 33, on peut amener successivement chacune des zones 1721 à 1726 sur le chemin du faisceau d'éclairage. Les réseaux de miroirs microscopiques 1721 à 1726 peuvent différer entre eux par le diamètre des miroirs microscopiques et/ou par les vecteurs de base des réseaux, et donc la densité des réseaux. De manière équivalente, on peut utiliser une plaque 1730, représentée sur la figure 34, pouvant être déplacée suivant deux directions, et pouvant donc comprendre d'avantage de réseaux de miroirs microscopiques. Les réseaux de miroirs microscopiques peuvent être réalisés chacun sur une vitre et être superposés sur une plaque porteuse 1720 ou 1730. Ils peuvent également être réalisés directement sur la plaque porteuse. Si le système de filtrage spatial est un réseau de trous microscopiques, un dispositif équivalent peut être réalisé, dans lequel les réseaux de miroirs microscopiques sont remplacés par des réseaux de trous microscopiques. Un positionnement constant et précis des trous microscopiques est plus difficile à obtenir avec ce système qu'avec le système formé de deux plaques parallèles représentées sur les figures 31 et 32. Il est donc préférable d'utiliser cette technique lorsque le système de filtrage spatial joue en même temps le rôle de filtre spatial et de dispositif de division du faisceau, comme sur le dispositif 606 de la figure 22 ou le dispositif 105 de la figure 18.

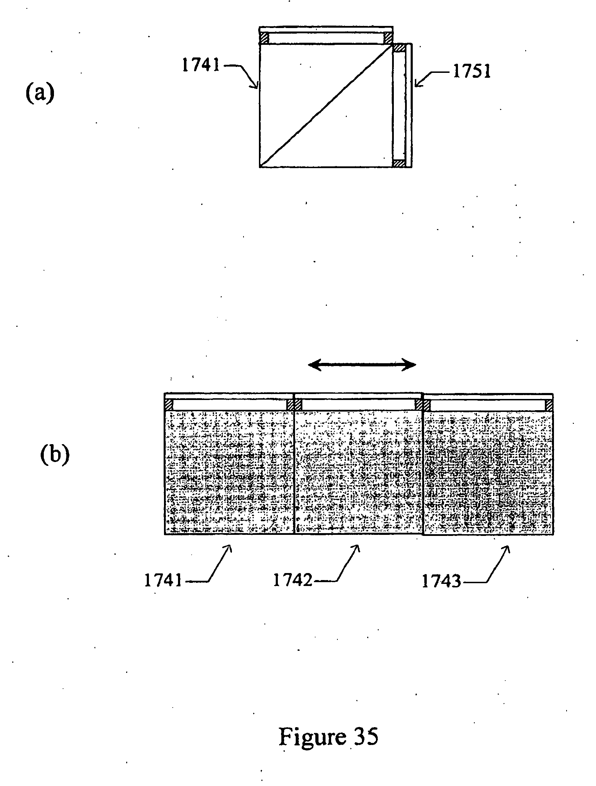

Dans les autres cas, un dispositif d'échange de filtre nécessitant une précision mécanique modérée peut également être conçu, mais le système de filtrage spatial et le dispositif de séparation des faisceaux d'éclairage en sous-faisceaux doivent de préférence être solidarisés dans un bloc mobile échangeable. Par exemple, dans le dispositif de la figure 16, les réseaux de trous microscopiques 105 et 130 ainsi que le miroir dichroïque 104 peuvent être solidarisés en un seul bloc représenté sur la figure 17. Plusieurs de ces blocs peuvent être associés comme indiqué sur la figure 35 qui montre un ensemble de trois blocs 1741, 1742, 1743 solidarisés, et déplaçables d'un seul tenant. La figure 35(a) est une vue de coté (même direction d'observation que sur la figure 16) et la figure 35(b) est une vue de coté suivant la direction V indiquée sur la figure 16. En déplaçant l'ensemble suivant la direction indiquée sur la figure 35(b), on peut amener l'un ou l'autre des trois blocs sur le chemin du faisceau lumineux. L'ensemble peut être inclu dans un dispositif mécanique assurant en particulier une diaphragmation adaptée, de manière à ce que les cubes non utilisés ne reçoivent pas de lumière, et permettant un déplacement motorisé. Les cubes 1741 à 1743 peuvent différer entre eux par le diamètre des trous microscopiques ou la densité des réseaux de trous microscopiques. Chaque cube comporte un réseau de trous microscopiques 1751 constituant le premier filtrage spatial, qui est monté mobile solidairement avec le dispositif de séparation du faisceau en sous-faisceaux et le miroir dichroïque. Dans le cas ou un réseau de microlentilles est utilisé comme sur la figure 6, un dispositif similaire peut être réalisé, le réseau de microlentilles, le filtre spatial et le miroir dichroïque étant intégré dans un bloc, et plusieurs blocs étant intégrés en un ensemble mobile.

## Applications industrielles

Le présent dispositif de balayage optique, intégré à un microscope confocal, peut être utilisé pour l'imagerie en fluorescence et en temps réel d'objets biologiques. Equipé d'un éclairage laser, il permet une imagerie à la vitesse la plus élevée. Equipé d'éclairage incohérent, il permet une imagerie en fluorescence avec une gamme complète de longueurs d'ondes d'excitation. L'image confocale obtenue à l'aide du présent dispositif se prête bien à l'utilisation d'algorithmes de déconvolution tridimensionnelle qui permettent d'en accroître la résolution. Le présent dispositif de balayage optique, dans une version adaptée, peut également être utilisé pour l'imagerie en réflexion, par exemple pour l'observation de circuits en microélectronique, ou pour l'observation en profondeur d'échantillons vivants (peau par exemple) auquel cas c'est le faisceau lumineux diffracté vers l'arrière par l'objet observé qui est mesuré.

## Revendications

1. Dispositif à balayage optique confocal destiné à permettre une visualisation d'un objet à observer éclairé par une source lumineuse (1500),

   a) comprenant des moyens (103 ; 1555 ; 1509; 606) pour diviser un faisceau d'éclairage (FX) provenant de la source lumineuse (1500) en une pluralité de sous-faisceaux d'éclairage (FX2),
   b) comprenant un système optique (1513, 1516, 1522, 1523, 1514, 1518, 1521, 1520 ; 605, 608, 609, 610, 612, 602) adapté,

      b1) d'une part, pour focaliser lesdits sous-faisceaux d'éclairage en une pluralité de points d'éclairage correspondants sur un plan observé de l'objet à observer, chaque point d'éclairage étant isolé et entouré d'une zone non éclairée, et chaque point d'éclairage étant destiné à éclairer un point éclairé correspondant de l'objet à observer,
      b2) d'autre part pour focaliser une pluralité de sous-faisceaux lumineux (FE) provenant de la pluralité de points éclairés de l'objet en une pluralité de points lumineux sur un premier système de filtrage spatial (1519 ; 606 ; 130) disposé dans un premier plan image (P1),

   c) comprenant au moins un miroir monté mobile en rotation (1515 ; 603 ; 110,112) et sur lequel sont réfléchis :

      c1) la pluralité de sous-faisceaux d'éclairage (FX2), pour permettre à la pluralité de points d'éclairage de balayer l'objet à observer suivant le plan observé lorsque le miroir monté mobile tourne, et
      c2) la pluralité de sous-faisceaux lumineux (FE), pour amener chaque point lumineux en un point fixe correspondant sur le premier plan image,

   d) le système de filtrage spatial (1519 ; 606 ; 130) étant adapté pour filtrer individuellement chaque point lumineux issu de chaque point éclairé de l'objet afin d'obtenir une pluralité (FD) de sous-faisceaux à détecter correspondants issus chacun d'un point lumineux filtré,
   e) ledit dispositif à balayage optique comprenant des moyens (1507; 603 ; 110,112) pour déplacer une zone illuminée par le faisceau d'éclairage (FX) sur les moyens (606 ; 103 ; 1509 ;1555) pour diviser le faisceau d'éclairage en sous-faisceaux,
   f) le système optique (1513, 1516, 1522, 1523, 1514, 1518, 1521, 1520 ; 605, 608, 609, 610, 612, 602) et le système de filtrage spatial (1519 ; 130 ; 606) étant adaptés pour renvoyer la pluralité de sous-faisceaux à détecter (FD) sur ledit miroir monté mobile en rotation (1515; 603 ; 110,112),
   g) le système optique (1513, 1516, 1522, 1523, 1514, 1518, 1521, 1520 ; 605, 608, 609, 610, 612 ; 602) étant également adapté pour focaliser chaque sous-faisceau à détecter (FD), réfléchi sur le miroir monté mobile (1515 ; 603 ; 110,112), en un point à détecter correspondant dans un second plan image (P2), pour obtenir, dans ledit second plan image, un déplacement de chaque point à détecter proportionnel au déplacement du point éclairé correspondant dans le plan observé de l'objet,

ledit dispositif à balayage optique confocal étant **caractérisé par le fait que**

h) lesdits moyens (1507; 603 ; 110,112) pour déplacer la zone (1602) illuminée par le faisceau d'éclairage (FX) sur les moyens (1509 ;1555 ; 606 ; 103) pour diviser le faisceau d'éclairage en sous-faisceaux

h1) sont synchronisés avec ledit miroir monté mobile en rotation (1515),
ou
h2) comprennent ledit miroir (603 ; 110,112) monté mobile en rotation, le système optique étant adapté pour que le faisceau d'éclairage (FX) soit réfléchi, avant de parvenir sur les moyens pour diviser le faisceau d'éclairage en sous-faisceaux, par ledit miroir (603 ; 110, 112) monté mobile en rotation,

pour que la zone (1701) éclairée dans l'objet observé par la pluralité de sous-faisceaux d'éclairage reste fixe pendant une rotation dudit miroir monté mobile en rotation (1515 ; 603 ; 110,112).

2. Dispositif selon la revendication 1, lesdits moyens pour déplacer comprenant un miroir mobile secondaire (1507) synchronisé avec ledit miroir monté mobile en rotation.

3. Dispositif selon la revendication 1, lesdits moyens pour déplacer comprenant un dispositif acousto-optique de déflexion du faisceau synchronisé avec ledit miroir monté mobile en rotation.

4. Dispositif selon une des revendications 1 à 3, comprenant des moyens (140;606;1529 ;1556 ; 163) pour supprimer le faisceau d'éclairage ou la pluralité de sous-faisceaux d'éclairage (FX,FX2) avant que la pluralité de sous-faisceaux d'éclairage ne parvienne à l'objet à observer, et dans lequel ces moyens sont adaptés pour supprimer le faisceau d'éclairage ou la pluralité de sous-faisceaux d'éclairage lorsque la vitesse de déplacement de l'image géométrique, dans l'objet à observer, d'un point géométrique fixe du premier plan image (P1), atteint sa valeur minimale.

5. Dispositif selon la revendication 4, dans lequel les moyens pour supprimer le faisceau d'éclairage sont constitués par un obturateur (140).

6. Dispositif selon la revendication 5, dans lequel l'obturateur est un atténuateur de faisceau (140).

7. Dispositif selon la revendication 6, l'atténuateur (140) étant commandé pour supprimer le faisceau d'éclairage ou la pluralité de sous-faisceaux d'éclairage lorsque la vitesse de déplacement de l'image géométrique, dans l'objet à observer, d'un point géométrique fixe du premier plan image (P1), atteint sa valeur minimale et étant également commandé pour obtenir un rapport constant de l'intensité du faisceau d'éclairage sur la vitesse de balayage, sur au moins une partie de la trajectoire des points d'éclairage.

8. Dispositif selon la revendication 4, dans lequel lesdits moyens pour supprimer sont formés par un dispositif de limitation (606 ;1529 ;1556 ; 163) disposé pour être atteint par le faisceau d'éclairage ou la pluralité de sous-faisceaux d'éclairage, ledit dispositif de limitation comprenant des moyens pour supprimer la partie du faisceau d'éclairage ou de la pluralité de sous-faisceaux d'éclairage qui n'atteint pas une surface de sélection (1601), dans lequel le dispositif de limitation, le système optique, et le mouvement du miroir monté mobile en rotation sont adaptés pour que la zone (1602) éclairée par le faisceau d'éclairage ou par la pluralité de sous-faisceaux d'éclairage sur le dispositif de limitation se trouve en-dehors de la surface de sélection (1601) lorsque la vitesse de déplacement de l'image géométrique (1702), dans l'objet à observer, d'un point géométrique fixe du premier plan image, atteint sa valeur minimale.

9. Dispositif selon la revendication 8, dans lequel le dispositif de limitation (606;1529 ;1556 ; 163) est disposé pour être atteint par le faisceau d'éclairage ou la pluralité de sous-faisceaux d'éclairage avant que le faisceau d'éclairage ou la pluralité de sous-faisceaux d'éclairage ne soit réfléchi, en direction de l'objet à observer et en provenance des moyens (606;1509 ;1555 ; 103) pour diviser le faisceau d'éclairage en une pluralité de sous-faisceaux, par ledit miroir monté mobile (603;1515 ;110,112).

10. Dispositif selon une des revendications 8 ou 9, dans lequel le dispositif de limitation (606 ;1556) est placé dans un plan adapté pour être conjugué à un plan observé de l'objet à observer.

**11.** Dispositif selon une des revendications 8 à 10, dans lequel le dispositif de limitation (606;1529 ; 1556 ; 163) est placé dans un plan contenant les moyens (606;1509 ;155 ;103) pour diviser le faisceau d'éclairage en une pluralité de sous-faisceaux.

**12.** Dispositif selon une des revendications 8 à 11, dans lequel le dispositif de limitation est un diaphragme (1529;1556 ;163) et dans lequel la surface de limitation est l'ouverture de ce diaphragme.

**13.** Procédé d'utilisation d'un dispositif suivant le préambule de la revendication 1, **caractérisé par le fait qu'**il comprend une rotation dudit miroir monté mobile (1515 ; 603 ;110,112) et, pendant ladite rotation, un déplacement de la zone illuminée par le faisceau d'éclairage sur les moyens pour diviser le faisceau d'éclairage en sous-faisceaux, ledit déplacement étant synchronisé avec ladite rotation, pour que la zone (1701) éclairée dans l'objet observé par la pluralité de sous-faisceaux d'éclairage reste fixe pendant ladite rotation dudit miroir monté mobile (1515 ; 603 ;110,112).

**14.** Procédé suivant la revendication 13, comprenant une étape de suppression consistant à supprimer le faisceau d'éclairage ou la pluralité de sous-faisceaux d'éclairage (FX, FX2), avant que la pluralité de sous-faisceaux d'éclairage ne parvienne à l'objet à observer, lorsque la vitesse de déplacement de l'image géométrique, dans l'objet à observer, d'un point géométrique fixe du premier plan image (P1) atteint sa valeur minimale.

**15.** Dispositif ou procédé selon une des revendications précédentes, dans lequel le moyen pour diviser le faisceau d'éclairage en une pluralité de sous-faisceaux d'éclairage est un réseau de microlentilles (1509), un réseau de trous microscopiques (1555) ou un réseau de miroirs microscopiques (606).

**16.** Dispositif ou procédé suivant une des revendications précédentes, dans lequel le système de filtrage spatial est un réseau de trous microscopiques (1519 ;130) ou un réseau de miroirs microscopiques (606).

**Patentansprüche**

**1.** Konfokale optische Scanvorrichtung, die dazu bestimmt ist, eine Visualisierung eines von einer Lichtquelle (1500) beleuchteten zu beobachtenden Objekts zu ermöglichen,

a) die Mittel (103, 1555, 1509, 606) umfasst, um ein von der Lichtquelle (1500) kommendes Beleuchtungsstrahlenbündel (FX) in eine Vielzahl von Unter-Beleuchtungsstrahlenbündeln (FX2) zu unterteilen,
b) die ein optisches System (1513, 1516, 1522, 1523, 1514, 1518, 1521, 1520, 605, 608, 609, 610, 612, 602) umfasst, das geeignet ist,

b1) einerseits zur Fokussierung der genannten Unter-Beleuchtungsstrahlenbündel in einer Vielzahl entsprechender Beleuchtungspunkte auf einer beobachteten Ebene des zu beobachtenden Objekts, wobei jeder Beleuchtungspunkt isoliert und von einem nicht beleuchteten Bereich umgeben ist, und jeder Beleuchtungspunkt dazu dient, einen entsprechenden beleuchteten Punkt des zu beobachtenden Objekts zu beleuchten,
b2) andererseits zur Fokussierung einer Vielzahl von Unter-Lichtstrahlenbündeln (FE), die von der Vielzahl der beleuchteten Punkte des Objekts kommen, in einer Vielzahl von Lichtpunkten auf einem ersten räumlichen Filtersystem (1519, 606, 130), das in einer ersten Bildebene (P1) angeordnet ist,

c) die mindestens einen drehbar montierten Spiegel (1515, 603, 110, 112) umfasst, auf dem reflektiert werden:

c1) die Vielzahl der Unter-Beleuchtungsstrahlenbündel (FX2), damit die Vielzahl der Beleuchtungspunkte das zu beobachtende Objekt in Richtung der beobachteten Ebene scannen können, wenn der drehbar montierte Spiegel sich dreht, und
c2) die Vielzahl der Unter-Lichtstrahlenbündel (FE), um jeden Lichtpunkt in einen entsprechenden Fixpunkt in der ersten Bildebene zu bringen,

d) wobei das räumliche Filtersystem (1519, 606, 130) geeignet ist, jeden Lichtpunkt, der aus jedem beleuchteten Punkt des Objekts hervorgeht, einzeln zu filtern, um eine Vielzahl (FD) entsprechender abzutastender Unter-Strahlenbündel zu erhalten, die jeweils aus einem gefilterten Lichtpunkt hervorgehen,
e) wobei die genannte optische Scanvorrichtung Mittel (1507, 603, 110, 112) umfasst, um einen von dem Beleuchtungsstrahlenbündel (FX) ausgeleuchteten Bereich auf die Mittel (606, 103, 1509, 1555) zur Unterteilung des Beleuchtungsstrahlenbündels in Unter-Strahlenbündel zu verschieben,

f) wobei das optische System (1513, 1516, 1522, 1523, 1514, 1518, 1521, 1520, 605, 608, 609, 610, 612, 602) und das räumliche Filtersystem (1519, 130, 606) geeignet sind, die Vielzahl abzutastender Unter-Strahlenbündel (FD) auf den genannten drehbar montierten Spiegel (1515, 603, 110, 112) zurückzusenden,

g) wobei das optische System (1513, 1516, 1522, 1523, 1514, 1518, 1521, 1520, 605, 608, 609, 610, 612, 602) auch geeignet ist, jedes abzutastende Unter-Strahlenbündel (FD), das auf dem drehbar montierten Spiegel (1515, 603, 110, 112) reflektiert wird, in einem entsprechenden abzutastenden Punkt in einer zweiten Bildebene (P2) zu fokussieren, um in der genannten zweiten Bildebene eine Verschiebung jedes abzutastenden Punkts proportional zur Verschiebung des entsprechenden beleuchteten Punkts in der beobachteten Ebene des Objekts zu erhalten,

wobei die genannte konfokale optische Scanvorrichtung **dadurch gekennzeichnet ist, dass**:

h) die genannten Mittel (1507, 603, 110, 112) zur Verschiebung des von dem Beleuchtungsstrahlenbündel (FX) ausgeleuchteten Bereichs (1602) auf die Mittel (1509, 1555, 606, 103) zur Unterteilung des Beleuchtungsstrahlenbündels in Unter-Strahlenbündel

h1) mit dem genannten drehbar montierten Spiegel (1515) synchronisiert sind,
**oder**
h2) den genannten drehbar montierten Spiegel (603, 110, 112) umfassen, wobei das optische System so beschaffen ist, dass das Beleuchtungsstrahlenbündel (FX) durch den genannten drehbar montierten Spiegel (603, 110, 112) reflektiert wird, bevor es auf die Mittel zur Unterteilung des Beleuchtungsstrahlenbündels in Unter-Strahlenbündel trifft,

**sodass** der in dem beobachteten Objekt von der Vielzahl der Unter-Beleuchtungsstrahlenbündel beleuchtete Bereich (1701) während einer Rotation des genannten drehbar montierten Spiegels (1515, 603, 110, 112) ortsfest bleibt.

2. Vorrichtung gemäß dem Patentanspruch 1, wobei die genannten Mittel zur Verschiebung einen sekundären beweglichen Spiegel (1507) umfassen, der mit dem genannten drehbar montierten Spiegel synchronisiert ist.

3. Vorrichtung gemäß dem Patentanspruch 1, wobei die genannten Mittel zur Verschiebung eine optisch-akustische Vorrichtung zur Ablenkung des Strahlenbündels umfassen, die mit dem genannten drehbar montierten Spiegel synchronisiert ist.

4. Vorrichtung gemäß einem der Patentansprüche 1 bis 3, welche Mittel (140, 606, 1529, 1556, 163) umfasst, um das Beleuchtungsstrahlenbündel und/oder die Vielzahl der Unter-Beleuchtungsstrahlenbündel (FX,FX2) zu unterdrücken, bevor die Vielzahl der Beleuchtungsstrahlenbündel an dem zu beobachtenden Objekt ankommt, und in der diese Mittel geeignet sind, das Beleuchtungsstrahlenbündel oder die Vielzahl der Unter-Beleuchtungsstrahlenbündel zu unterdrücken, wenn die Verschiebungsgeschwindigkeit des geometrischen Bildes eines festen geometrischen Punkts der ersten Bildebene (P1) in dem zu beobachtenden Objekt seinen Minimalwert erreicht.

5. Vorrichtung gemäß dem Patentanspruch 4, in der die Mittel zur Unterdrückung des Beleuchtungsstrahlenbündels und/oder der Vielzahl der Unter-Beleuchtungsstrahlenbündel aus einem Verschluss (140) bestehen.

6. Vorrichtung gemäß dem Patentanspruch 5, in welcher der Verschluss ein Strahlenbündelabschwächer (140) ist.

7. Vorrichtung gemäß dem Patentanspruch 6, wobei der Abschwächer (140) so gesteuert wird, dass das Beleuchtungsstrahlenbündel oder die Vielzahl der Unter-Beleuchtungsstrahlenbündel unterdrückt wird oder werden, wenn die Verschiebungsgeschwindigkeit des geometrischen Bildes eines festen geometrischen Punkts der ersten Bildebene (P1) in dem zu beobachtenden Objekt seinen Minimalwert erreicht, und zudem so gesteuert wird, dass über mindestens einen Teil des Weges der Beleuchtungspunkte ein konstantes Verhältnis der Intensität des Beleuchtungsstrahlenbündels zur Scangeschwindigkeit entsteht.

8. Vorrichtung gemäß dem Patentanspruch 4, in der die genannten Mittel zum Unterdrücken durch eine Begrenzungsvorrichtung (606, 1529, 1556, 163) gebildet werden, die so angeordnet ist, dass sie von dem Beleuchtungsstrahlenbündel oder der Vielzahl der Unter-Beleuchtungsstrahlenbündel erreicht wird, wobei die genannte Begrenzungsvorrichtung Mittel umfasst, um den Teil des Beleuchtungsstrahlenbündels oder der Vielzahl der Unter-Beleuchtungsstrahlenbündel zu unterdrücken, der eine Selektionsfläche (1601) nicht erreicht, in der die Begrenzungsvorrichtung, das optische System und die Bewegung des drehbar montierten Spiegels so angeordnet sind, dass der durch das Beleuchtungsstrahlenbündel oder durch die Vielzahl der Unter-Beleuchtungsstrahlenbündel beleuchtete Bereich (1602) auf der Begrenzungsvorrichtung sich außerhalb der Selektionsfläche (1601) befindet, wenn die Verschiebungsgeschwindigkeit des geometrischen Bildes (1702) eines festen geometrischen Punkts der ersten Bildebene (P1) in dem zu beobachtenden Objekt seinen Minimalwert erreicht.

9. Vorrichtung gemäß dem Patentanspruch 8, in der die Begrenzungsvorrichtung (606, 1529, 1556, 163) so angeordnet ist, dass sie von dem Beleuchtungsstrahlenbündel oder der Vielzahl der Unter-Beleuchtungsstrahlenbündel erreicht wird, bevor das Beleuchtungsstrahlenbündel oder die Vielzahl der Unter-Beleuchtungsstrahlenbündel in Richtung des zu beobachtenden Objekts und aus Richtung der Mittel (606, 1509, 1555, 103)zur Unterteilung des Beleuchtungsstrahlenbündels in eine Vielzahl von Unter-Beleuchtungsstrahlenbündeln durch den genannten drehbar montierten Spiegel (603, 1515, 110, 112) reflektiert wird.

10. Vorrichtung gemäß einem der Patentansprüche 8 oder 9, in der die Begrenzungsvorrichtung (606, 1556) in einer Ebene platziert wird, die geeignet ist, einer beobachteten Ebene des zu beobachtenden Objekts konjugiert zu werden.

11. Vorrichtung gemäß einem der Patentansprüche 8 bis 10, in der die Begrenzungsvorrichtung (606, 1529, 1556, 163) in einer Ebene platziert wird, welche Mittel (606, 1509, 155, 103) zur Unterteilung des Beleuchtungsstrahlenbündels in eine Vielzahl von Unter-Strahlenbündeln enthält.

12. Vorrichtung gemäß einem der Patentansprüche 8 bis 11, in der die Begrenzungsvorrichtung eine Blende (1529, 1556, 163) ist, und in der die Begrenzungsfläche die Öffnung dieser Blende ist.

13. Verfahren zur Nutzung einer Vorrichtung gemäß dem Oberbegriff des Patentanspruchs 1, **dadurch gekennzeichnet, dass** es eine Rotation des genannten drehbar montierten Spiegels (1515, 603, 110, 112) umfasst, und während der genannten Rotation eine Verschiebung des von dem Beleuchtungsstrahlenbündel ausgeleuchteten Bereichs auf die Mittel zur Unterteilung des Beleuchtungsstrahlenbündels in Unter-Strahlenbündel, wobei die genannte Verschiebung mit der genannten Rotation synchronisiert wird, sodass der in dem beobachteten Objekt von der Vielzahl der Unter-Beleuchtungsstrahlenbündel beleuchtete Bereich (1701) während der genannten Rotation des genannten drehbar montierten Spiegels (1515, 603, 110, 112) ortsfest bleibt.

14. Verfahren gemäß dem Patentanspruch 13, welches einen Unterdrückungsschritt umfasst, der darin besteht, das Beleuchtungsstrahlenbündel oder die Vielzahl der Unter-Beleuchtungsstrahlenbündel (FX, FX2) zu unterdrücken, bevor es oder sie an dem zu beobachtenden Objekt ankommt oder ankommen, wenn die Verschiebungsgeschwindigkeit des geometrischen Bildes eines festen geometrischen Punkts der ersten Bildebene (P1) in dem zu beobachtenden Objekt seinen Minimalwert erreicht.

15. Vorrichtung oder Verfahren gemäß einem der vorstehenden Patentansprüche, in der oder dem das Mittel zur Unterteilung des Beleuchtungsstrahlenbündels in eine Vielzahl von Unter-Beleuchtungsstrahlenbündeln ein Raster aus Mikrolinsen (1509), ein Raster aus mikroskopischen Löchern (1555) oder ein Raster aus mikroskopischen Spiegeln (606) ist.

16. Vorrichtung oder Verfahren gemäß einem der vorstehenden Patentansprüche, in der oder dem das räumliche Filtersystem ein Raster aus mikroskopischen Löchern (1519, 130) oder ein Raster aus mikroskopischen Spiegeln (606) ist.

**Claims**

1. Confocal optical scanning device designed to allow the visualization of an observed object illuminated by a light source (1500),

   a) comprising means (103 ; 1555 ; 1509; 606) for splitting an illuminating beam (FX) coming from the light source (1500) into a plurality of illuminating sub-beams (FX2),
   b) comprising an optical system (1513, 1516, 1522, 1523, 1514, 1518, 1521, 1520 ; 605, 608, 609, 610, 612, 602) adapted,

b1) on the one hand, for focusing said illuminating sub-beams onto a plurality of corresponding light points in an observed plane of the observed object, each light point being isolated and surrounded by a zone which is not lit, and each light point being intended to illuminate a corresponding illuminated point of the observed object, and

b2) on the other hand, to focus a plurality of luminous sub-beams (FE) coming from the plurality of illuminated points in the object, onto a plurality of luminous points on a first spatial filtering device (1519 ; 606 ; 130) in a first image plane (P1),

c) also comprising at least one rotatably mounted mobile mirror (1515 ; 603 ; 110,112) reflecting:

c1) the plurality of illuminating sub-beams (FX2), to allow the plurality of light points to scan the observed object when the rotatably mounted mirror rotates,
c2) the plurality of luminous sub-beams (FE), to bring each luminous point onto a corresponding fixed point of the first image plane,

d) the spatial filtering device (1519 ; 606 ; 130) being adapted to individually filter each luminous point coming from each illuminated point of the object so as to obtain a plurality (FD) of corresponding sub-beams to be detected, wherein each sub-beam to be detected comes from a filtered luminous point,
e) wherein said confocal optical scanning device comprises means (1507; 603 ; 110,112) for moving an area illuminated by illuminating beam (FX) along the means (606 ; 103 ; 1509 ;1555) for dividing the illuminating beam into sub-beams,
f) wherein the optical system (1513, 1516, 1522, 1523, 1514, 1518, 1521, 1520 ; 605, 608, 609, 610, 612, 602) and the spatial filtering system (1519 ; 130 ; 606) are adapted to send back the plurality of sub-beams to be detected (FD) onto said rotatably mounted mirror (1515; 603 ; 110,112),
g) wherein the optical system (1513, 1516, 1522, 1523, 1514, 1518, 1521, 1520 ; 605, 608, 609, 610, 612 ; 602) is also adapted to focus each sub-beam to be detected (FD) reflected on the rotatably mounted mobile mirror (1515 ; 603 ; 110,112), onto a corresponding point to be detected in a second image plane (P2), to obtain a movement of each point to be detected in said second image plane which is proportional to the movement of the corresponding illuminated point in the observed plane of the object,

said confocal optical scanning device being **characterized by** the fact that:

h) said means (1507; 603 ; 110,112) for moving an area illuminated by illuminating beam (FX) along the means (606 ; 103 ; 1509 ; 1555) for dividing the illuminating beam into sub-beams

h1) are synchronized with said rotatably mounted mobile mirror (1515),
**or**
h2) comprise said rotatably mounted mobile mirror (603 ; 110,112), the optical system being adapted so that the illuminating beam (FX) is reflected by said rotatably mounted mirror (603 ; 110, 112) before reaching the means for dividing the illuminating beam into sub-beams,

**so that** the area (1701) of the observed object which is lit by the plurality of illuminating sub-beams remains fixed during a rotation of said rotatably mounted mobile miror (1515 ; 603 ; 110,112).

2. A device as claimed in claim 1, wherein said means for moving comprise a secondary mobile mirror (1507) synchronized with said rotatably mounted mobile mirror.

3. A device as claimed in claim 1, wherein said means for moving comprise an acousto-optical beam deflector synchronized with said rotatably mounted mobile mirror.

4. A device as claimed in any of claims 1 to 3, comprising means (140;606;1529 ;1556 ; 163) for shutting down the illuminating beam or the plurality of illuminating sub-beams (FX,FX2) before the plurality of illuminating sub-beams reaches the observed object, wherein these means are adapted to shut down the immuminating beam or the plurality of illuminating sub-beams when the speed of the movement of the geometrical image in the observed object of a fixed geometrical point of the first image plane (P1) reaches its minimal value.

5. A device as claimed in claim 4, wherein the means to shut down the illuminating beam is a shutter (140).

**6.** A device as claimed in claim 5, wherein the shutter is a beam attenuator (140).

**7.** A device as claimed in claim 6, the shutter (140) being controlled to shut down the illuminating beam or the plurality of illuminating beams when the speed of the movement of the geometrical image in the observed object of a fixed geometrical point of the first image plane (P1) reaches its minimal value , wherein the shutter is also controlled to obtain a constant proportion between the intensity of the illuminating beam and the scanning speed, on at least a part of the trajectory of the light points.

**8.** A device as claimed in claim 4, wherein said means to shut down are a limitation device (606 ;1529 ;1556 ; 163) arranged to be reached by the illuminating beam of the plurality of illuminating sub-beams, said limitation device comprising means for eliminating the part of the illuminating beam or of the plurality of illuminating beams which does not reach a selection surface (1601), wherein the limitation device, the optical system, and the movement of the rotatably mounted mirror are adapted so that the area (1602) lit by the illuminating beam or by the plurality of illuminating sub-beams on the limitation device is outside the selection surface (1601) when the speed of the movement of the geometrical image in the observed object of a fixed geometrical point of the first image plane (P1) reaches its minimal value.

**9.** A device as claimed in claim 8, wherein the limitation device (606; 1529; 1556; 163) is arranged to be reached by the illuminating beam or the plurality of illuminating sub-beams before said illuminating beam or plurality of illuminating sub-beams coming from the means (606;1509 ;1555 ; 103) for dividing the illuminating beam into a plurality of sub-beams is reflected towards the observed object by said rotatably mounted mirror (603;1515 ;110,112).

**10.** A device as claimed in any of claims 8 or 9, wherein the limitation device (606;1556) is arranged in a plane adapted to be conjugate to an observed plane of the observed object.

**11.** A device as claimed in any of claims 8 to 10, wherein the limitation device (606; 1529 ; 1556 ; 163) is arranged in a plane comprising the means (606;1509 ;155 ;103) for dividing the illuminating beam into a plurality of illuminating sub-beams.

**12.** A device as claimed in any of claims 8 to 11, in which the limitation device is a diaphragm (1529;1556 ;163) and in which the selection surface is the aperture of this diaphragm.

**13.** A method for using a device as described in the preamble of claim 1, the method being **characterized in that** it comprises a rotation of said rotatably mounted mobile mirror (1515 ; 603 ;110,112) and, during said rotation, a movement of the area illuminated by the illuminating beam onto the means for dividing the illuminating beam into sub-beams, said movement being synchronized with said rotation, so that the area (1701) lit in the observed object by the plurality of illuminating sub-beams remains fixed during said rotation of said rotatably mounted mirror (1515 ; 603 ;110,112).

**14.** A method as claimed in claim 13, comprising a shutting down step, consisting in shutting down the illumination beam or the plurality of illumination sub-beams (FX, FX2) before the plurality of illuminating sub-beams reaches the observed object, when the speed of the movement of the geometrical image in the observed object of a fixed geometrical point of the first image plane (P1) reaches its minimal value.

**15.** A method or a device as claimed in any of the preceding claims, wherein the means t divide the illuminating beam into a plurality of illuminating sub-beams is a microlens array (1509), an pinholes array (1555) or an array of microscopic mirrors (606).

**16.** A method or device according to any of the preceding claims, wherein the spatial filtering device is a pinholes array (1519 ;130) or an array of microscopic mirrors (606).

Figure 1 (technique antérieure)

Figure 2

Figure 3 (Technique antérieure)

Figure 4

Figure 5

Figure 6

Figure 7

P

146 147

143

145 144 142

Figure 8

D

103

α

$F_{103}$

160 Figure 9

Figure 10

Figure 11

Figure 12

Figure 13

Figure 14

Figure 15

Figure 16

Figure 17

Figure 18

Figure 19

**Figure 20**

Figure 21

Figure 22

Figure 23

Figure 24

Figure 25

Figure 26

Figure 27

Figure 28

Figure 29

Figure 30

Figure 31

Fig.32

Figure 33

1730

Figure 34

(a)

1741—

—1751

(b)

1741—

1742—

1743—

Figure 35

**EP 1 953 580 B1**

**Documents brevets cités dans la description**

- US 6028306 A